# EUROPEAN PATENT APPLICATION

(11) **EP 2 720 140 A1**
(43) Date of publication of application: **16.04.2014**
(21) Application number: 13188173.2
(22) Date of filing: 10.10.2013
(51) Int. Cl.: G06F 3/14, G06F 3/042, G06K 9/22

(54) **Display apparatus, input pen, display apparatus controlling method and display system**

(30) Priority: 10.10.2012 KR 20120112652
(71) Applicant: Samsung Electronics Co., Ltd, Gyeonggi-do 443-742 (KR)
(72) Inventor: Kim, Dae-myung, Gyeonggi-do (KR); Kwak, Ji-yeon, Seoul (KR)
(74) Representative: Walaski, Jan Filip

(57) **Abstract**

A display apparatus includes a first display, a second display, a hinge to connect the first display and the second display to each other, and a controller to control operations of the first and second displays according to sensing information of an input pen including a sensor.

## Description

The present invention relates to a display apparatus, and more particularly, to a multi display apparatus to display an image according to information sensed by an input pen, an input pen, a display apparatus controlling method, and a display system.

As performance of central processing units (CPUs) mounted in portable electronic apparatuses has been improved, a multi tasking environment in which various applications can be executed simultaneously has been established. Therefore, a single display apparatus that is equipped with only a single display encounters a problem that it is difficult to execute multiple applications simultaneously.

Also, a conventional portable electronic apparatus is no longer limited to a single display due to development of battery technology and heating process systems.

In addition, it is suggested that more user experiences should be introduced in the portable electronic apparatuses due to the widespread use of touch screens and the user experience-centered interface environment.

As a result, portable electronic apparatuses including two or more displays, that is, multi display apparatuses, have become common.

Since the multi display apparatus displays results of executing many applications on multiple displays based on powerful hardware performance, the multi display apparatus is convenient as applied to a multi-tasking environment, and also provides a variety of information to users through the plurality of displays and thus provides new user experiences. Therefore, the multi display apparatus has become a "next generation" display apparatus.

Also, since the multi display apparatus may perform not only output but also input through the plurality of displays, various inputting means should be considered. Accordingly, it is suggested that a study on various inputting means including a stylus pen and a method of utilizing the same should be conducted.

The present invention provides a multi display apparatus to perform a variety of different types of input using an input pen and to output results of the input through the multi display apparatus, an input pen, a multi display controlling method, and a multi display system.

Additional features and utilities of the present invention will be set forth in part in the description which follows and, in part, will be obvious from the description, or may be learned by practice of the invention.

The foregoing and/or other features and utilities of the present invention are achieved by providing a multi display apparatus including a first display, a second display, a hinge to connect the first display and the second display each other, and a controller to control operations of the first and second displays according to sensing information of an input pen that includes a sensor.

The multi display apparatus may further include a communicator to communicate with the input pen, and the controller may receive a sensing signal that is sensed by the sensor through the communicator, and may control the operations of the first and second displays according to the sensing signal.

The multi display apparatus may further include a storage, the sensor may be a camera, and the controller may receive an image that is photographed by the camera through the communicator, and may detects a color of the photographed image and may store the color in the storage.

The sensor may be a camera, and the controller may analyze an image that is photographed by the camera and detects at least one object that exists in the photographed image, and, when the input pen or a user object touches at least one of the first and second displays, the controller may display the detected at least one object and corresponding information on a touch region.

When the input pen or a user object touches at least one of the first and second displays, the controller may control to display the color stored in the storage at the touch point.

The sensor may be a camera, and the controller may receive an image that is photographed by the camera through the communicator, and may control to display the photographed image on at least one of the first display and the second display.

The multi display apparatus may further include a storage, the sensor may be a camera, and the controller may analyze an image that is photographed by the camera and detects a character that exists in the photographed image, and stores the detected character in the storage.

The controller may receive a control signal corresponding to a manipulation state of a button provided on the input pen from the input pen, and may perform an operation corresponding to the control signal.

The sensor may be a camera, and the controller may receive a real-time image, that is photographed by the camera according to a first manipulation of the button, from the input pen, and may display the real-time image. The controller may receive a moment image that is photographed by the camera according to a second manipulation of the button, from the input pen, and may display the moment image.

The controller may change a display time of a content according to a manipulation of the button and may control to display the content on at least one of the first display and the second display.

When a first manipulation of the button is performed, the controller may display a menu regarding an application that is executed in the multi display apparatus, and, when a second manipulation of the button is performed, the controller may control to change an item of the displayed menu and display the item.

The sensor may include a motion sensor that senses a motion of the input pen, and, when a sensing signal sensed by the motion sensor is received from the input pen, the controller may perform an operation corresponding to the motion of the input pen.

When the input pent touches at least one of the first and second displays, the controller may perform a different operation according to a tilt of the input pen with reference to a touch surface.

The controller may control to perform a corresponding operation, further considering a tilt direction of the input pen.

The sensor may include a plurality of different sensors, and the controller may control to combine results of sensing by the plurality of sensors and perform a corresponding operation.

When the input pen approaches the multi display apparatus, the controller may be operated in a pen input mode, and, when a user object other than the input pen approaches the multi display apparatus, the controller may be operated in a keyboard input mode in which a soft keyboard is displayed on one of the first and second displays.

The multi display apparatus may further include a connector to mount the input pen therein, and the communicator may include a wire communicator to communicate with the input pen in a wired manner when the input pen is mounted in the connector, and a wireless communicator to communicate with the input pen wirelessly when the input pen is disconnected from the connector.

The foregoing and/or other features and utilities of the present invention may also be achieved by providing an input pen to control an operation of a multi display apparatus including first and second displays connected to each other by means of a hinge, the input pen including: a sensor, a communicator to communicate with the multi display apparatus, and a controller to transmit a result of sensing by the sensor to the multi display apparatus.

The sensor may include at least one of a camera, a gyro sensor, an acceleration sensor, a geomagnetic sensor, an IR sensor, and a pressure sensor.

The input pen may further include a touch portion that is formed at one end of the input pen, and the sensor may include a photographer that is placed at the other end of the input pen, and a motion sensor to sense a motion of the input pen. When the input pen is placed in a predetermined direction, the controller may control the motion sensor (the photographer) to have a photographing mode corresponding to the placement direction of the input pen.

The foregoing and/or other features and utilities of the present invention may also be achieved by providing a method of controlling a multi display apparatus which includes first and second displays connected to each other by means of a hinge, the method including from an input pen including a senor, receiving a result of sensing by the sensor, and controlling operations of the first and second displays using the result of the sensing.

The sensor may be a camera, and the controlling the operations may include detecting a color of an image that is photographed by the camera and storing the color.

The method may further include, when the input pen or a user object touches at least one of the first and second displays, displaying the stored color at the touch point.

The sensor may be a camera, and the controlling the operations may include: analyzing an image that is photographed by the camera and detecting an object that exists in the photographed image; and storing the detected object.

The sensor may be a camera, and the controlling the operations may include analyzing an image that is photographed by the camera and detecting at least one character that exists in the photographed image. When the input pen or a user object touches at least one of the first and second displays, the controlling the operations may include displaying the detected at least one character and corresponding information on a touch region.

The sensor may be a camera, and the controlling the operations may include receiving a real-time image, which is photographed by the camera according to a first manipulation of the button, from the input pen, and displaying the real-time image, and receiving a moment image, which is photographed by the camera according to a second manipulation of the button, from the input pen, and displaying the moment image.

The controlling the operations may include changing a display time of a content according to a manipulation of the button and controlling to display the content on at least one of the first display and the second display.

The controlling the operations may include, when a first manipulation of the button is performed, displaying a menu regarding an application that is executed in the multi display apparatus, and, when a second manipulation of the button is performed, controlling to change an item of the displayed menu and displaying the item.

The method may further include receiving a control signal corresponding to a manipulation state of a button provided on the input pen from the input pen, and performing an operation corresponding to the control signal.

The sensor may include a motion sensor to sense a motion of the input pen, and, when a sensing signal sensed by the motion sensor is received from the input pen, the controlling the operations may include performing an operation corresponding to the motion of the input pen.

The controlling the operations may include controlling to perform a corresponding operation, further considering a tilt direction of the input pen

The sensor may include a plurality of different sensors, and the controlling the operations may include controlling to combine results of sensing by the plurality of sensors and perform a corresponding operation.

When the input pen touches at least one of the first and second displays, the controlling the operations may include performing a different operation according to a tilt of the input pen with reference to a touch screen.

The method may further include, when the input pen approaches the multi display apparatus, being operated in a pen input mode, and, when a user object other than the input pen approaches the multi display apparatus, being operated in a keyboard input mode in which a soft keyboard is displayed on one of the first and second displays.

The foregoing and/or other features and utilities of the present invention may also be achieved by providing a multi display system including a multi display apparatus including first and second displays connected to each other by means of a hinge, and an input pen mountable in and dismountable from the multi display apparatus, wherein the input pen includes a touch portion to touch a surface of the first and second displays, a sensor, and a communicator to transmit a result of sensing by the sensor to the multi display apparatus, wherein the multi display apparatus performs an operation corresponding to at least one of a touch of the input pen on the surface of the first and second displays, and the result of the sensing.

The foregoing and/or other features and utilities of the present invention may also be achieved by providing a multi display device, including a first body including a first display, a second body including a second display, a hinge to connect the first and second bodies, a communicator to communicate with an external device that provides an input to manipulate at least one of the first display and the second display, and a controller to differentiate between the input of the external device and another input of a user and to change between a plurality of operating modes of the multi display device based on the differentiation.

The multi display device may further include at least one sensor to sense at least one of a location of the input of the external device with respect to the at least one of the first display and the second display and another location of the another input of the user with respect to the at least one of the first display and the second display.

The input of the external device may include at least one of a touch of the external device on the at least one of the first display and the second display and the sensed location of the input of the external device with respect to the at least one of the first display and the second display.

The plurality of operating modes may include a pen input mode to allow the user to manipulate the at least one of the first display and the second display using a pen if the external device is sensed by the multi display device, and a keyboard operating mode to allow the user to manipulate the at least one of the first display and the second display using a keyboard if the another input of the user is sensed by the multi display apparatus.

The external device may include a pen, including a sensor to sense movement of the pen with respect to the first body and the second body, and a communicator to send results of the sensed movement to the communicator of the multi display device.

The pen may perform the manipulation based on the movement.

At least one of the plurality of operating modes and a function of the external device may change based on an angle of approach of the external device with respect to at least one of the first and second bodies.

These and/or other features and utilities of the present invention will become apparent and more readily appreciated from the following description of the embodiments, taken in conjunction with the accompanying drawings of which:
FIG. 1 is a view illustrating a multi display system according to an exemplary embodiment of the present invention;
FIG. 2 is a block diagram illustrating a schematic configuration of a multi display apparatus according to an exemplary embodiment of the present invention;
FIG. 3 is a block diagram illustrating a configuration of a multi display apparatus according to various exemplary embodiments of the present invention;
FIG. 4 is a block diagram illustrating a hardware configuration of a controller according to an exemplary embodiment of the present invention;
FIG. 5 is a view illustrating a system hierarchy of a multi display apparatus according to an exemplary embodiment of the present invention;
FIG. 6 is a view illustrating a circuit configuration of an image outputter of a first display or a second display according to an exemplary embodiment of the present invention;
FIG. 7 is a view illustrating a circuit configuration of R, G, and B pixels including a display panel of FIG. 6 according to an exemplary embodiment of the present invention;
FIG. 8 is a cross section view of a first display or a second display that includes a touch screen according to an exemplary embodiment of the present invention;
FIG. 9 is a block diagram illustrating a display driver of a multi display apparatus according to an exemplary embodiment of the present invention;
FIG. 10 is a block diagram illustrating a configuration of a display driver according to another exemplary embodiment of the present invention;
FIG. 11 is a view illustrating an example of a method of sensing hovering according to an exemplary embodiment of the present invention;
FIG. 12 is a view illustrating a method of distinguishing between hovering of an input pen and hovering of a user object other than the input pen according to an exemplary embodiment of the present invention;
FIG. 13 is a perspective view of a multi display apparatus according to an exemplary embodiment of the present invention;
FIG. 14 is a perspective view illustrating a multi display apparatus that is deformed with reference to a hinge according to an exemplary embodiment of the present invention;
FIG. 15 is a perspective view illustrating an expanding mode of a multi display apparatus according to an exemplary embodiment of the present invention;
FIG. 16 is a perspective view illustrating a standing mode of a multi display apparatus according to an exemplary embodiment of the present invention;
FIG. 17 is a perspective view illustrating a portrait view mode of a multi display apparatus according to an exemplary embodiment of the present invention;
FIGS. 18 and 19 are views illustrating placements of two cameras of a multi display apparatus according to an exemplary embodiment of the present invention;
FIG. 20 is a block diagram illustrating a configuration of an input pen according to an exemplary embodiment of the present invention;
FIG. 21 is a block diagram illustrating a configuration of an input pen according to an exemplary embodiment of the present invention;
FIG. 22 is a view illustrating an input pen and a multi display apparatus that are being connected with each other according to an exemplary embodiment of the present invention;
FIG. 23 is a view illustrating an input pen and a multi display apparatus that are completely connected with each other according to an exemplary embodiment of the present invention;
FIG. 24 is a view illustrating an example of an exterior of an input pen according to an exemplary embodiment of the present invention;
FIG. 25 is a block diagram illustrating a configuration of an input pen according to an exemplary embodiment of the present invention;

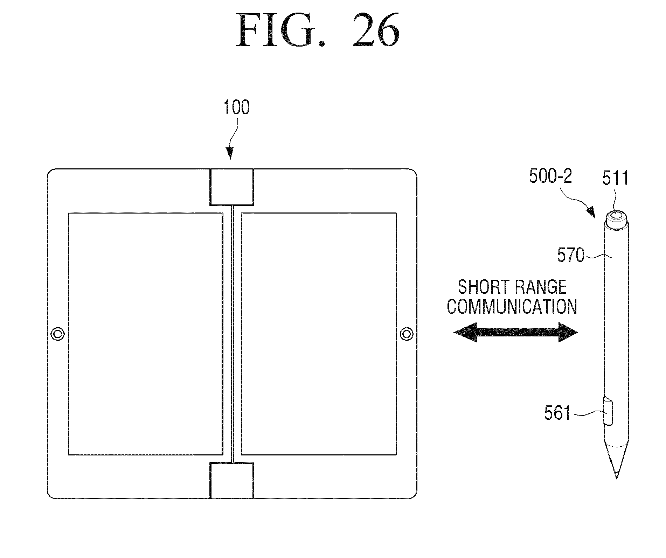

FIG. 26 is a view illustrating data exchange between the input pen of FIG. 25 and a multi display apparatus according to an exemplary embodiment of the present invention;
FIGS. 27 and 28 are views illustrating a method of photographing an image using an input pen and processing the image according to an exemplary embodiment of the present invention;
FIGS. 29 and 30 are views illustrating a method of using an image photographed by an input pen according to various exemplary embodiments of the present invention;
FIG. 31 is a view illustrating an example of an application that uses a photographing function of an input pen according to an exemplary embodiment of the present invention;
FIGS. 32 and 33 are block diagrams illustrating configurations of an input pen and a multi display apparatus that perform optical character recognition (OCR) according to various exemplary embodiments of the present invention;
FIG. 34 is a view illustrating a situation in which an optical character recognition (OCR) function is performed through an input pen and a multi display apparatus according to an exemplary embodiment of the present invention;
FIG. 35 is a view illustrating a situation in which an OCR function is performed through an input pen and a multi display apparatus according to another exemplary embodiment of the present invention;
FIG. 36 is a view illustrating a situation in which an OCR function is performed through the input pen and the multi display apparatus of FIG. 32 or 33 according to still another exemplary embodiment of the present invention;
FIG. 37 is a view illustrating a situation in which an OCR function is performed through the input pen and the multi display apparatus of FIG. 32 or 33 according to still another exemplary embodiment of the present invention;
FIGS. 38 and 39 are views illustrating a multi display apparatus that displays an image photographed through an input pen according to an exemplary embodiment of the present invention;
FIG. 40 is a view illustrating a photo album of a multi display apparatus according to an exemplary embodiment of the present invention;
FIGS. 41 and 42 are views illustrating examples of an exterior of an input pen according to various exemplary embodiments of the present invention;
FIG. 43 is a view illustrating an example of an execution control of a presentation using the input pen and the multi display apparatus of FIG. 42 according to an exemplary embodiment of the present invention;
FIG. 44 is a view illustrating an example of input tool execution using the input pen and the multi display apparatus of FIG. 42 according to an exemplary embodiment of the present invention;
FIGS. 45 and 46 are block diagrams illustrating a configuration of an input pen that includes a motion sensing function according to various exemplary embodiments of the present invention;
FIG. 47 is a view illustrating inputting to a multi display apparatus by changing settings of an input pen according to a tilt of the input pen according to an exemplary embodiment of the present invention;
FIG. 48 is a view illustrating inputting to a multi display apparatus by changing settings of an input pen according to a tilt of the input pen according to another exemplary embodiment of the present invention;
FIG. 49 is a view illustrating an extended embodiment of an input pen that is equipped with a motion sensor according to an exemplary embodiment of the present invention;
FIG. 50 is a view illustrating use of an input pen and a multi display apparatus according to still another exemplary embodiment of the present invention;
FIG. 51 is a view illustrating a table that distinguishes motions of an input pen when the input pen includes a gyro sensor according to an exemplary embodiment of the present invention;
FIG. 52 is a view illustrating an input pen and a multi display apparatus according to still another exemplary embodiment of the present invention;
FIG. 53 is a view illustrating an input pen and a multi display apparatus according to another exemplary embodiment of the present invention;
FIG. 54 is a block diagram illustrating a configuration of an input pen that includes a photographer and a motion sensor according to an exemplary embodiment of the present invention;
FIG. 55 is a view illustrating a control operation using an input pen and a multi display apparatus according to an exemplary embodiment of the present invention;
FIG. 56 is a view illustrating an operation of a multi display apparatus to distinguish between approach of an input pen and approach of user's hand according to an exemplary embodiment of the present invention;
FIG. 57 is a view illustrating a multi display apparatus to sense an approach of an input pen according to another exemplary embodiment of the present invention;
FIG. 58 is a view illustrating a multi display apparatus to sense an approach of an input pen according to another exemplary embodiment of the present invention;
FIGS. 59 through 65 are flowcharts illustrating a method of controlling an operation of a multi display apparatus according to various exemplary embodiments of the present invention;
FIG. 66 is a concept view illustrating an exterior of a pen holder according to various exemplary embodiments of the present invention; and
FIG. 67 is a block diagram illustrating a configuration of a pen holder according to various exemplary embodiments of the present invention.

Reference will now be made in detail to the embodiments of the present invention, examples of which are illustrated in the accompanying drawings, wherein like reference numerals refer to the like elements throughout. The embodiments are described below in order to explain the present invention while referring to the figures.

In the following description, a multi display apparatus is an apparatus that includes a display consisting of one or more touch screens, and is able to execute an application or display a content. For example, the multi display apparatus may include a tablet personal computer (PC), a portable multimedia player (PMP), a personal digital assistance (PDA), a smart phone, a mobile phone, and a digital album. Although a multi display apparatus including a cellular phone or a smart phone according to exemplary embodiments will be explained below, the exemplary embodiments should not be construed as limited to this configuration.

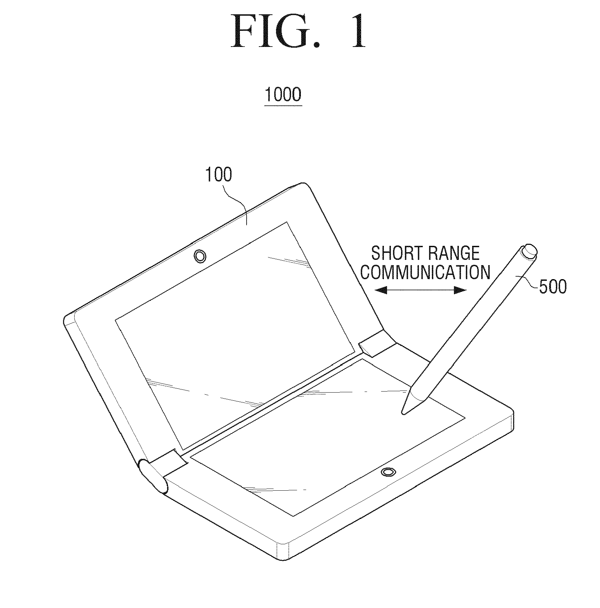

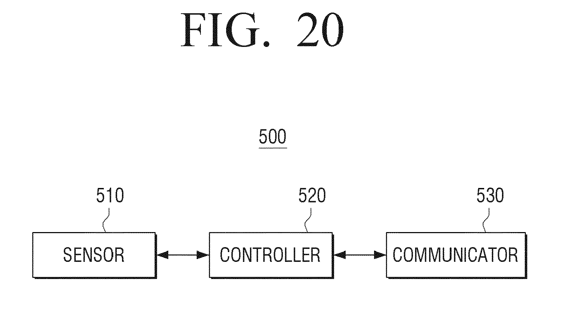

Referring to FIG. 1, the multi display system 1000 includes the multi display apparatus 100 and the input pen 500. The multi display apparatus 100, also referred to as display apparatus 100, and the input pen 500 exchange data with each other using a short range communicating means as illustrated in FIG. 1. The input pen 500 may include a sensor 510, as illustrated in FIG. 20. The sensor 510 may include at least one of various modules such as a camera, a rotation sensor, a geomagnetic sensor, and a touch sensor, but is not limited thereto. Accordingly, the input pen 500 may perform various sensing operations.

The input pen 500 may transmits a result of sensing by the sensor 510 to the multi display apparatus 100. The multi display apparatus 100 may perform various operations according to the result of the sensing provided from the input pen 500 or a touch by the input pen 500.

Hereinafter, a configuration and an operation of the multi display apparatus 100 will be explained first and then a configuration and an operation of the input pen 500 will be explained. Thereafter, interactions between the display apparatus 100 and the input pen 500 according to various exemplary embodiments of the present invention will be explained.

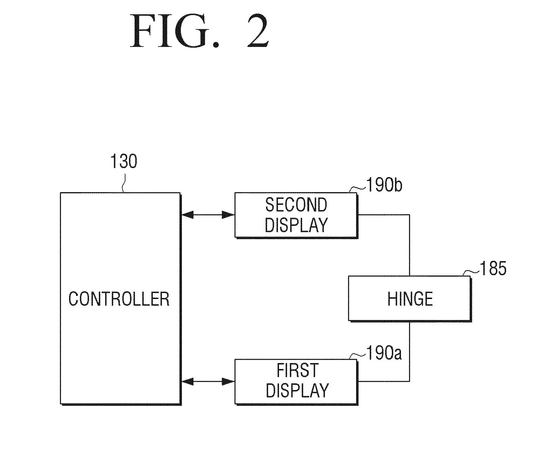

Referring to FIG. 2, the multi display apparatus according to an exemplary embodiment of the present invention includes a controller 130, a hinge 185, a first display 190a, and a second display 190b.

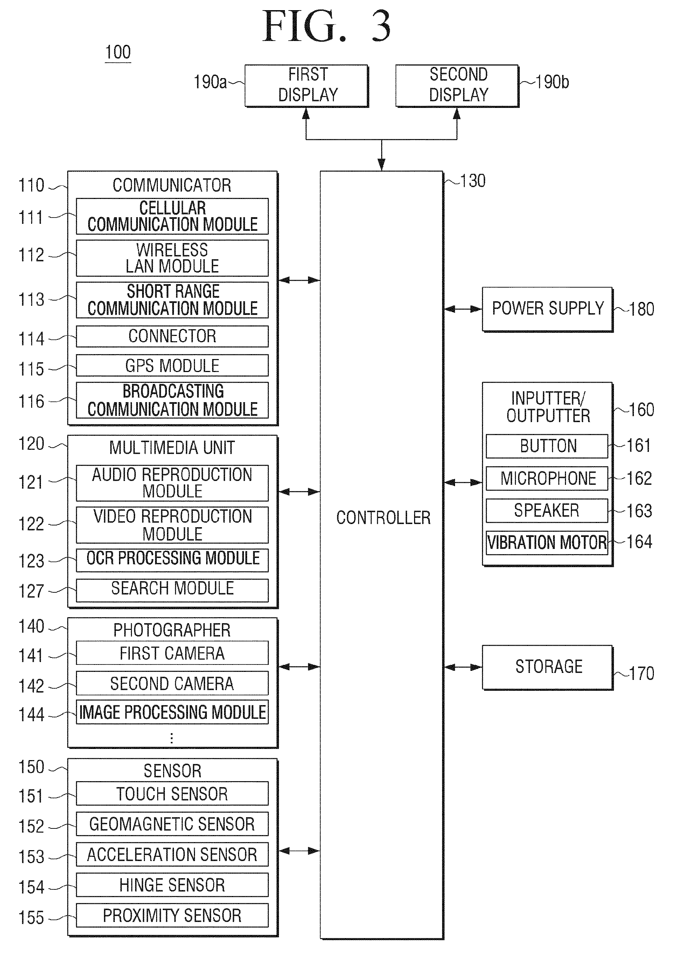

The hinge 185 physically connects the first display 190a and the second display 190b. The hinge 185 is formed on a contact portion between the first display 190a and the second display 190b and behaves as a shaft to allow the first display 190a and the second display 190b to rotate separately and with respect to each other. The hinge 185 may further include a hinge sensor 154, as illustrated in FIG. 3, to sense a degree of folding between the first display 190a and the second display 190b. Furthermore, the hinge 185 may be implemented by using a flexible connector or a part of a flexible touch screen, but is not limited thereto.

The first and second displays 190a and 190b rotate about the hinge 185. Accordingly, the first and second displays 190a and 190b may be closed such that they are brought into contact with each other, or may be bent back in the opposite direction and opened such that their rear surfaces are brought into contact with each other. Also, the first and second displays 190a and 190b may be opened in a 180 degrees unfolded state according to a configuration of the hinge 185. A manner in which the first and second displays 190a and 190b are folded and unfolded with reference to the hinge 185 according to various exemplary embodiments of the present invention will be explained in detail below.

The first and second displays 190a and 190b may display various screens such as a desktop including various icons, a web browsing screen, an application execution screen, a content reproducing screen such as a moving image and a photo, and a user interface screen under the control of the controller 130. In particular, as will be explained below, the controller 130 performs a necessary operation according to information sensed by the sensor 510 of the input pen 500, and controls the first and second displays 190a and 190b to display a result of performing the operation. This will be explained in detail below.

The first and second displays 190a and 190b may be implemented by using a touch screen to sense a user's touch. Specifically, the first and second display 190a and 190b may each include a touch sensor 151 layered with the first and second displays 190a and 190b, respectively. The touch 151 may sense a user's touch, and a proximity sensor 155 may sense an approach of the user's touch. The, first and second displays 190a and 190b may include a liquid crystal display (LCD), plasma screen, or light emitting diode (LED) display, but are not limited thereto.

The controller 130 controls the first and second display 190a and 190b according to the user's selection to perform various operations. Accordingly, the controller 130 selectively controls the first and second displays 190a and 190b according to an operating environment, and displays a particular type of screen thereupon.

For example, when the user executes an application stored in the multi display apparatus 100, the controller 130 displays an execution screen of the application (referred to as a first screen) on the first display 190a, which is one of the first and second displays 190a and 190b. Accordingly, when the user executes a new application or touches an object displayed on the first screen, the controller 130 displays a new second screen according to the manipulation on the second display 190b.

As such, when the user executes another new application or touches an object displayed on the second screen, the controller 130 displays a new third screen on the first display 190a according to a result of the manipulating. As described above, the controller 130 selectively uses the first and second displays 190a and 190b, thereby allowing the user to use the multi display function effectively.

Also, as will be explained below, the controller 130 receives a result of sensing from the input pen 500, generates a corresponding event, and controls to display the event on the first display 190a or the second display 190b.

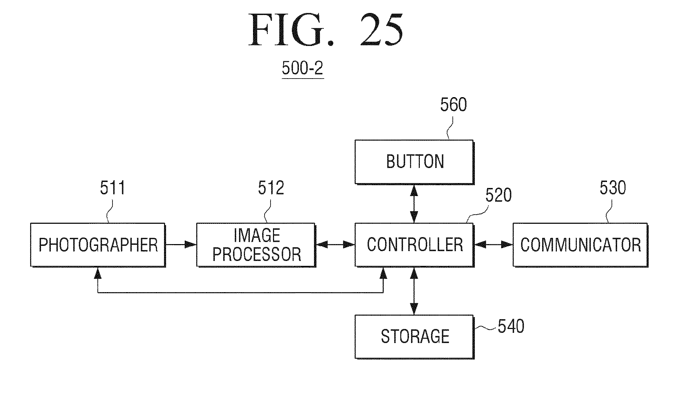

For example, if the sensor of the input pen 500 includes a photographer 511, as illustrated in FIG. 25, and an image photographed by the input pen 500 is received through a communicator 110, the controller 130 may detect a color or a texture of the photographed image and may store the same in a storage 170.

As such, when the input pen 500 or a user object touches at least one of the first and second displays 190a and 190b, the controller 130 may control to display the stored color or texture at a touch point of the at least one of the first and second displays 190a and 190b.

For example, the controller 130 may detect a character existing in the photographed image by analyzing the photographed image, and may control to store the detected character in the storage 170.

Also, the input pen 500 may also include a button 560, as illustrated in FIG. 25. When the button 560 is pressed and a control signal corresponding to the manipulating of the button 560 of the input pen 500 is received from the input pen 500, the controller 130 may perform an operation corresponding to the control signal.

Also, the input pen 500 may include a motion sensor 514. When a sensing signal sensed by the motion sensor 514 of the input pen 500 is received from the input pen 500, the controller 130 may control to perform an operation corresponding to a motion of the input pen 500 with respect to the at least one of the first and second displays 190a and 190b.

At this time, when the input pen 500 touches at least one of the first and second displays 190a and 190b, the controller 130 may control to perform a different operation according to a tilt of the input pen 500 with reference to a touch surface of the at least one of the first and second displays 190a and 190b.

In addition, when the input pen 500 approaches the multi display apparatus 100, the controller 130 is operated in a pen input mode, and, when a user object other than the input pen 500 approaches the multi display apparatus 100, the controller 130 is operated in a keyboard input mode to display a soft keyboard on one of the first and second displays 190a and 190b.

Operations of the controller 130 will be explained in detail below according to various exemplary embodiments of the input pen 500 and the multi display apparatus 100.

Hereinafter, a configuration of a multi display apparatus 100 which is operated according to the above-described exemplary embodiment of the present invention will be explained.

Referring to FIG. 3, a multi display apparatus 100 according to an exemplary embodiment of the present invention includes a communicator 110, a multimedia unit 120, a controller 130, a photographer 140, a sensor 150, an inputter/outputter 160, a storage 170, a power supply 180, and first and second displays 190a and 190b, respectively.

The communicator 110 may be configured to exchange information with an external device using various wired/wireless communication methods. The external apparatus may include at least one of other apparatuses, a mobile phone, a smart phone, a tablet PC, a computer server, and a digital TV. These apparatuses may be connected to the multi display apparatus 100 through a communication network.

The communicator 110 may include wireless communication modules such as a cellular communication module 112, a wireless LAN module 112, a short range communication module 113, a GPS communication module 115, a broadcast communication module 116, and a connector 114 including at least one of wire communication modules such as a high-definition multimedia interface (HDMI), a universal serial bus (USB), and an institute of electrical and electronics engineers (IEEE) 1394, but is not limited thereto.

The cellular communication module 111 uses wireless access technology according to a cellular communication protocol under the control of the controller 130, and allows the multi display apparatus 100 to be connected with an external apparatus (in particular, a base station of a cellular system) through at least one antenna or a plurality of antennas (not illustrated).

Also, the cellular communication module 111 exchanges radio signals containing a voice, a video, a short message service (SMS) message, or a multimedia messaging service (MMS) message with another communicable apparatus such as a mobile phone having a phone number input to the multi display apparatus 100, a smart phone, and a tablet PC.

The wireless LAN module 112 accesses a wireless access point (AP) (not illustrated) that exists within a predetermined range under the control of the controller 130, and is connected to the Internet. The wireless LAN module 112 may support the wireless LAN standard of IEEE, but is not limited thereto.

The short range communication module 113 is configured to allow the multi display apparatus 100 to perform short range communication with an external apparatus under the control of the controller 130. The short range communication module 113 may include at least one of a Bluetooth module, an infrared data association (IrDA) module associated with an IrDA data 1.4 standard, a near field communication (NFC) module, a Wi-Fi module, and a Zigbee module, but is not limited thereto.

The Bluetooth module transmits a data stream in the form of a data packet using 2402∼2480 MHz, of industrial scientific and medical (ISM), that is, 79 channels in total. When a frequency hopping method is used to transmit packets (data) little by little while hopping a plurality of channels rapidly according to a specific pattern, 79 channels may hop 1600 times per 1 second.

The IrDA module transmits data using infrared rays. The infrared rays have a longer wavelength that that of visible rays and thus smoothly passes through minute particles drifting in the air. In particular, the infrared rays can easily guarantee a wide bandwidth in comparison with electromagnetic wave and has the merit of transmitting data at high speed. According to the IrDA data 1.4 standard, the multi display apparatus 100 is able to wirelessly communicate with an external apparatus at a rate of up to 16Mbps within a 1M distance.

The NFC module communicates with an external apparatus in a non-contact short range wireless communication method using a frequency band of 13.56Mz. When a plurality of terminals using the NFC technology approach one another within a short distance such as about 10cm, the terminals exchange data with one another. In this case, the external apparatus may include a module including an NFC tag and the multi display apparatus 100 may include an NFC reader. When tagging is performed, data is transmitted from the external apparatus to the multi display apparatus 100. To exchange information, the external apparatus and the multi display apparatus 100 may include an NFC tag and an NFC reader, respectively.

The Wi-Fi module performs short range communication according to the IEEE 802.11 standard. According to the IEEE 802.11n, data can be transmitted at a rate of up to 150Mbps. If multiple-input and multiple-out (MIMO) technology to increase output using a plurality of antennas is applied, data can be transmitted at a rate of up to 600Mbps. In particular, the Wi-Fi direct method guarantees the above rate and also enables direct communication between apparatuses without a separate AP.

The communicator 110 may include the Zigbee module. The Zigbee is a short range communication method according to IEEE 802.15.4 technology standard, and has a transfer rate of 250Kbps, 20Kbps, and 40 Kbps. This method is suitable for relatively simple data transfer.

As described above, the communicator 110 may be implemented in the above-described various short-range communication methods, but is not limited thereto.

The connector 114 is configured to provide an interface with various apparatuses such as a USB 2.0, a USB 3.0, an HDMI, and IEEE 1394, but is not limited thereto.

The connector 114 may be used as an interface to connect the multi display apparatus 100 and an external apparatus or a power source. The connector 114 may transmit data stored in the storage 170 of the multi display apparatus 100 to the external apparatus or receive data from the external apparatus through a wire cable connected to the connector 114 under the control of the controller 130. Power may be input to the connector 114 from the power source through the wire cable connected to the connector 114, or a battery may be charged through the wire cable.

The GPS module 115 receives electromagnetic waves from a plurality of GPS satellites (not illustrated) in the Earth's orbit, and calculates a location of the multi display apparatus 100 using a time of arrival from the GPS satellites (not illustrated) to the multi display apparatus and GPS parameters.

The broadcasting communication module 116 may receive broadcast signals (for example, TV broadcast signals, radio broadcast signals, or data broadcast signals) and additional broadcast information (for example, electronic program guide (EPG) or electronic service guide (ESG)) from a broadcasting station through a broadcast communication antenna (not illustrated) under the control of the controller 130.

The multimedia unit 120 is included to reproduce moving image contents, audio content, and other various multimedia contents. The multimedia unit 120 processes the multimedia content using a parser or a codec and reproduces the content. The multimedia unit 120 includes an audio reproducing module 121 and a video reproducing module 122.

The audio reproducing module 121 may reproduce a stored or received digital audio file (for example, a file having an extension of mp3, wma, ogg, or wav) under the control of the controller 130. A moving image reproducing module 123 may reproduce a stored or received digital moving image file (for example, a file having an extension of empg, mpg, mp4, avi, mov, or mkv) under the control of the controller 130.

The video reproducing module 122 supports various codecs to be able to reproduce a digital video file. That is, the video reproducing module 122 reproduces a video file by means of a codec which is pre-stored according to a codec format of the video file to be reproduced. The audio reproducing module 122 or the moving image reproducing module 123 of the multimedia module 120may be included in the controller 130.

The OCR processing module 123 analyzes an image and detects a character. The OCR processing module 123 may be stored in the storage 170 in a form of a user application executable by the user and may be executed by the controller 130, or alternatively, may be included in the multi display apparatus 100 in a form of an independent chipset. The OCR embraces various technologies to detect various characters included in an image. For example, if an image represents a specific mathematical equation besides characters, numbers, and signs, the OCR processing module 123 may detect a mathematical sign and a number included in the mathematical equation. However, to process a mathematical equation, the OCR processing module 123 may include a separate mathematical equation processing module (not illustrated). In this case, the mathematical equation processing module (not illustrated) analyzes an image, extracts a mathematical equation, and performs calculation or search. The OCR processing module 123 detects a character from an image using various OCR algorithms. The OCR algorithm is well known to one of ordinary skill the art, and is not a technical feature of exemplary embodiments of the present invention, and thus is not described in detail.

The controller 130 controls the communicator 110, the multimedia unit 120, the photographer 140, the sensor 150, the inputter/outputter 160, the storage 170, the power supply 180, and the first and second displays 190a and 190b, respectively.

The controller 130 provides a clock to hardware components, and includes a CPU to transmit control signals, a memory to temporarily or semi-permanently store a process, a GPU to process graphics, and a system bus to transmit data between the memory and the CPU and the GPU. Also, the controller 130 includes an operating system (OS) to run the hardware configuration, and an application to provide a user interface to the OS and transmit the interface to a framework. Each element of the controller 130 will be explained in detail below.

The photographer 140 may include at least one of a first camera 141 and a second camera 142 as illustrated in FIG. 3. Although only the first camera 141 and the second camera 142 are illustrated in FIG. 3, an additional camera may be included according to an exemplary embodiment of the present invention.

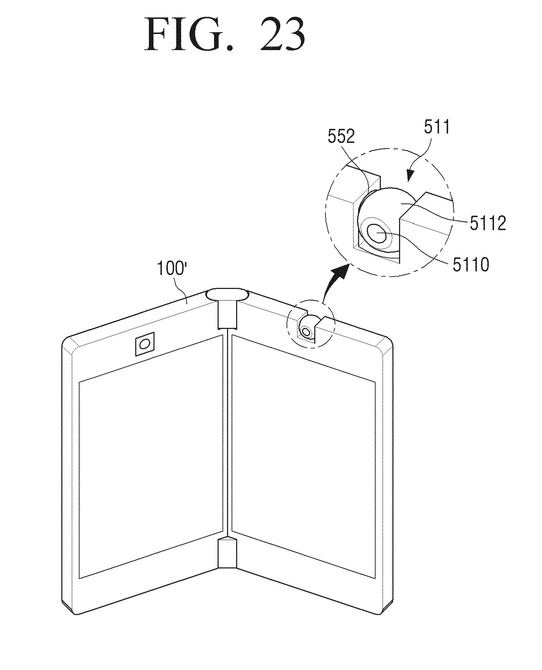

Each of the first and second cameras 141 and 142 includes a shutter (not illustrated), a lens 5110 of FIG. 23, an aperture (not illustrated), and a charge coupled device (CCD) image sensor (not illustrated), and an analogue/digital converter (ADC). The shutter is a mechanism to adjust an amount of exposed light along with the aperture. The lens receives light from an external light source and processes an image. At this time, the aperture adjusts an amount of incident light according to how much it is opened or closed. The CCD image sensor accumulates light input through the lens and outputs the image photographed by the lens in synchronization with a vertical sync signal according to an amount of accumulated light. An image is obtained by the CCD image sensor that converts light reflected from a subject into an electric signal. In order to obtain a color image using the CCD image sensor, a color filter is required. A filter such as a color filter array (CFA) may be employed. The CFA allows each pixel to pass only the light representing one color, and has a regularly arranged configuration and has various forms according to its arrangement configuration. The ADC converts an analogue image signal output from the CCD image sensor to a digital signal. The above configuration is merely an example and the configuration of each camera may be variously modified. For example, each camera may photograph an image using a complementary metal oxide semiconductor (CMOS) image sensor rather than the CCD image sensor.

The first camera 141 and the second camera 142 may be provided in a housing of the multi display apparatus 100 or may be connected to the multi display apparatus 100 using a separate connecting means. At least one of the first camera 141 and the second camera 142 may include an auxiliary light source (for example, a flash (not illustrated)) to provide necessary light to perform photographing.

According to an exemplary embodiment of the present invention, the first camera 141 may be disposed on a front surface of the multi display apparatus 100, and the second camera 142 may be disposed on a rear surface of the multi display apparatus 100. According to another exemplary embodiment of the present invention, the first camera 141 and the second camera 142 may be adjacent to each other (for example, a gap between the first camera 141 and the second camera 142 is larger than 1cm and less than 8cm) to photograph a 3D still image or a 3D moving image. According to still another exemplary embodiment of the present invention, the first camera 141 may be displayed on a first panel and the second camera 141 may be disposed on a second panel.

The photographer 140 may detect a user's motion or shape through at least one of the first camera 141 and the second camera 142, and may transmit the user's motion or shape to the controller 130 as an input to execute or control an application. For example, the user's motion may refer to a user's hand motion sensed by the first or second camera. The user's shape may refer to a facial shape of the user sensed by the first or second camera.

According to still another exemplary embodiment of the present invention, the multi display apparatus 100 may detect a user's motion using other means such as an infrared ray sensor, and may execute or control an application in response to the motion.

The sensor 150 is to sense various state changes such as a user's touch on the multi display apparatus 100, a user motion, and a motion of the multi display apparatus 100. In the above-described exemplary embodiment of the present invention, the touch sensor or proximity sensor has been described as an example of the sensor 150. In another exemplary embodiment of the present invention, the sensor 150 may include at least one of a touch sensor 151, a geomagnetic sensor 152, an acceleration sensor 153, a hinge sensor 154, and a proximity sensor 155.

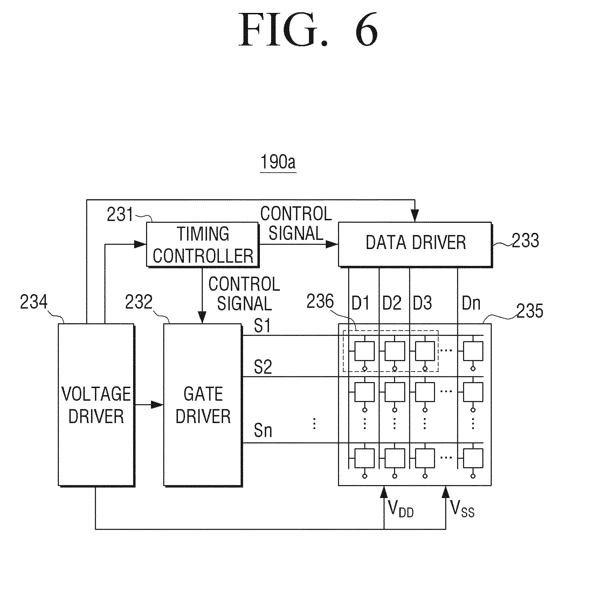

The touch sensor 151 is a sensor that can sense a touch of a user object on the display of the multi display apparatus 100. That is, the touch sensor 151 senses input to select an object displayed on a display screen by touching the first or second display 190a or 190b using a body such as a finger or a inputting means capable of being sensed. The touch sensor 151 may be divided into a capacitive touch sensor and a piezoelectric touch sensor according to how a user's touch is sensed. A type of the touch sensor 151 may be determined variously according to an exemplary embodiment. The touch sensor 151 may be included in the first and second displays 190a and 190b along with a display panel 235, as illustrated in FIG. 6.

The geomagnetic sensor 152 is a sensor that senses azimuth by detecting a flow of a magnetic field. The geomagnetic sensor 152 detects azimuth coordinates of the multi display apparatus 100 and detects a direction in which the multi display apparatus 100 is placed based on the azimuth coordinates. The direction in which the multi display apparatus 100 is placed is recognized as control input and the controller 130 performs corresponding output.

The acceleration sensor 153 is a sensor that senses acceleration of the multi display device 100, and sets virtual x, y, and z axes on the multi display device 100 and senses a value of acceleration of gravity that changes according to an inclination of each axis. The acceleration sensor 153 may be used to detect acceleration (i.e., dynamic acceleration) of a moving object, but may be used mainly to detect the acceleration of gravity.

The hinge sensor 156 may senses an angle or a motion of the hinge 185. The proximity sensor 155 may sense whether an object approaches the multi display apparatus 100 of the user. The proximity sensor will be explained in detail below.

Although not illustrated in FIG. 3, the sensor 150 of the multimedia display device 100 may further include at least one of a gravity sensor that senses in which direction gravity is acted, a gyro sensor that recognizes six axes in total by adding rotation to an existing acceleration sensor, an orientation sensor that automatically senses horizontal and vertical frames of a content such as an image and automatically rotates and arranges the content, an illuminance sensor that senses an amount of ambient light around the multi display device 100, an altitude sensor that measures atmospheric pressure, an RGB sensor that senses a color of an object, a distance sensor that measures a distance using ultrasonic wave or infrared rays, and a hall sensor that uses a change in a voltage according to a magnitude of a magnetic field.

The sensor 150 detects a state of each sensor, generates a signal corresponding to the detection, and transmits the signal to the controller 130. The sensors of the sensor 150 may be added or deleted according to performance of the multi display apparatus 100.

The inputter/outputter 160 is an element that performs input/output using a screen or other external connecting ports. Specifically, the inputter/outputter 160 receives an input signal that is transmitted from an inputting means connected to the multi display apparatus 100 such as a mouse, a keyboard, or a joystick, or a wireless inputting means such as a remote controller, and transmits the input signal to the controller 130. Also, the inputter/outputter 160 may output various signals or data that is generated by the controller 130 to an external apparatus. The inputter/outputter 160 includes a button 161, a microphone 162, a speaker 163, and a vibration motor 164.

At least one button 161 may be formed on a front surface, a side surface, or a rear surface of the housing of the multi display apparatus 100 in the form of a push type or a touch type, and may include at least one of a power/lock button, a volume control button, a menu button, a home button, a back button, and a search button. When the button 161 is pressed, a corresponding control command is generated and transmitted to the controller 130. The controller 130 controls the operation of the multi display apparatus 100 according to the control command.

The microphone 162 receives a voice or a sound under the control of the controller 130 and generates an electric signal.

The speaker 163 may output a sound corresponding to various signals of the cellular communication module 111, the wireless LAN module 112, the short range communication module 113, the multimedia unit 120, or the photographer (for example, a radio signal, a broadcast signal, a digital audio file, a digital moving image file, or photographing) to the outside of the multi display apparatus 100.

The speaker 163 may output a sound corresponding to a function of the multi display apparatus 100 (for example, a button sound or a ringtone corresponding to calling). A single speaker 163 or a plurality of speakers 163 may be formed on an appropriate location or locations of the housing the multi display apparatus 100. For example, the speaker 163 may include an internal speaker module that is formed on a location that is in the proximity to user's ears when the user is on the phone, and an external speaker module that has higher output suitable to reproduce audio/video files or to allow a user to view a broadcast, and is disposed on an appropriate location of the housing of the multi display apparatus 100.

The vibration motor 164 converts an electric signal into a mechanical vibration under the control of the controller 130. For example, when a voice call is received from another apparatus (not illustrated), the multi display apparatus 100 that is in a vibration mode drives the vibration motor 164. A single vibration motor 164 or a plurality of vibration motors 164 may be disposed in the housing of the multi display apparatus 100. The vibration motor 164 may be operated in response to a user's touch gesture sensed on the first or second display 190a or 190b, and a continuous touch motion sensed on the first or second display 190a or 190b.

The storage 170 is configured to store various programs and data such as an operating system (OS) or an application..

The storage 170 may store an operating system (OS) program to control the operation of the multi display device 100. When the multi display device 100 is turned on, the stored OS is read out from the storage, compiled, and runs each component of the multi display device 100.

The storage 170 may also store an application program that is managed by the OS, performs the operation of the multi display device 100 using resources of the OS, and provides a user interface. The application program is read out from the storage by the OS according to a user's execution command, and is converted into an executable format and performs various operations.

Further, the storage 170 may store various multimedia data that are processed by the controller 130, content data, and data that is received from an external source. That is, the storage 170 may store signals, information, or data that are input/output according to the operations of the cellular communication module 111, the wireless LAN module 112, the short-range communication module 113, the connector 114, the GPS module 115, the multimedia part 120, the photographer 140, the sensor 150, the inputter/outputter 160, and the first and second displays 190a and 190b, respectively, under the control of the controller 130.

For example, the storage 170 may store information that is transmitted according to a result of sensing by the input pen 500, or may store a result of analyzing the information by the controller 130.

The storage 170 may be implemented as at least one of a memory card that is mountable in or dismountable from a read only memory (ROM), a random access memory (ROM), or the multi display apparatus 100 (for example, an SD card or a memory stick), a non-volatile memory, a volatile memory, a hard disk drive (HDD), and a solid state drive (SSD).

The power supply 180 supplies power to be used in the multi display apparatus 100. The power supply 180 may be implemented by a rechargeable battery, and may further include a voltage converter to convert an external power source and supply it to a rechargeable battery.

The power supply 180 may supply power to the multi display device 100 in various modes such as a maximum performance mode, a general mode, a power saving mode, and a standby mode under the power control of the controller 130.

The first and second displays 190a and 190b, respectively, are included in the sensor 150 as described above, and output images stored in the frame buffers. The first and second displays 190a and 190b, respectively, may display multimedia contents, images, moving images, and texts under the control of the controller 130.

The first display 190a and the second display 190b are physically separated from each other. Display screens displayed on the first display 190a and the second display 190b may be controlled independently. For example, resolution of the first display 190a and resolution of the second display 190b are individually set. Also, screen enlargement, rotation, screen movement, and screen split of the first display 190a and the second display 190b are individually performed.

The first display 190a and the second display 190b may display a single display screen using a virtual integrated frame buffer.

The first and second displays 190a and 190b, respectively, are display apparatuses which display various applications executable by the controller 130 (for example, call, data transfer, broadcast, and camera) and provide user interfaces corresponding to the applications. The first and second displays 190a and 190b, respectively, may include the above-described touch sensor 151. In this case, the first and second displays 190a and 190b, respectively, may receive input of at least one touch gesture through a user's body (for example, fingers including thumb) or an inputting means that can be sensed (for example, a stylus pen).

Such a user interface may include a predetermined touch region, a soft key, and a soft menu. An electronic signal corresponding to at least one touch gesture that is input through the user interface may be transmitted to the first and second display 190a and 190b, respectively, through an LCD controller (not illustrated). Also, the first and second displays 190a and 190b, respectively, may sense a continuous touch motion and may transmit an electronic signal corresponding to a continuous or discontinuous touch motion to the LCD controller. As described above, the touch sensor 151 may be implemented by a resistive method, a capacitive method, an infrared-ray method, or an acoustic wave method.

The first and second displays 190a and 190b, respectively, convert a sensing signal regarding a user operation that is sensed through the touch sensor into a digital signal (for example, x and y coordinates), and transmits the digital signal to the controller 130. The controller 130 may perform a control operation corresponding to the user operation that is input through the first and second displays 190a and 190b, respectively, using the received digital signal. For example, the controller 130 may select a soft key that is displayed on the first and second displays 190a and 190b, respectively, or may execute an application corresponding to the soft key in response to the user operation.

The above-described user gesture is not limited to direct contact of the user's body or a touch inputting means with the first and second displays 190a and 190b, respectively, and may be made in a non-contact method. Sensitivity of the user operation detectable by the first and second displays 190a and 190b, respectively, may be changed according to performance or a configuration of the multi display apparatus 100.

The multi display apparatus 100 is an apparatus that executes an application, a widget, and a function, which are all stored in the storage 170 and are executable by the controller 130 through a touch screen. A conventional touch screen may provide applications, widgets, functions, and graphic objects corresponding to that group (that is, a soft key or a shortcut icon) through a home screen or an application menu, and the multi display apparatus 100 executes a corresponding application, widget, or function in response to detection of a user's touch gesture on each graphic object.

The widget recited herein refers to a mini application that is downloaded by the user and used, or may be generated by the user. For example, the widget includes a weather widget, a stock widget, a calculator widget, an alarm clock widget, and a dictionary widget. A shortcut icon to execute a widget may provide brief advance information through a corresponding widget application. For example, an icon of a weather widget provides a current temperature and a weather symbol briefly, and a widget application that is executed by touching the icon provides more information such as weather for each region or periods. The application recited herein includes a widget-based application and a non-widget-based application.

The sensor 150 including the first display 190a and a second body 4 including the second display 190b may be connected to each other through a connector, and the sensor 150 and the second body 4 may be fold in or fold out by a predetermined angle with reference to the hinge 185 as described above.

However, the connector may be implemented by using a flexible connector or a part of a flexible touch screen other than the hinge 185.

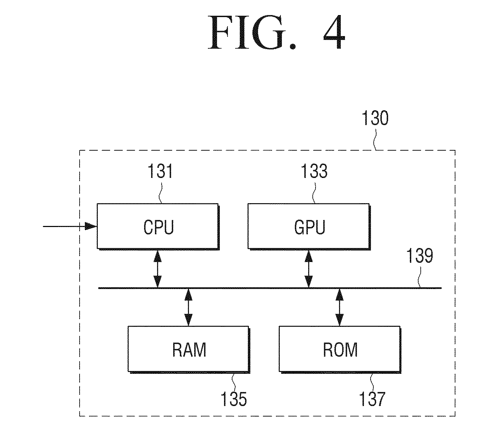

Hereinafter, a hardware configuration of the above-described controller 130 will be explained in detail with reference to FIG. 4.

Referring to FIG. 4, the controller 130 of the multi display apparatus 100 includes a central processing unit (CPU) 131, a graphics processing unit (GPU) 133, a random access memory (RAM) 137, a read only memory (ROM) 137, and a system bus 139 from the perspective of hardware, and includes an OS to drive the hardware configuration, and an application that provides a user interface on the OS and transmits the user interface to a framework from the perspective of software. The OS, the framework, and the application will be explained below.

The CPU 131 performs data communication with each block through the system bus 139, and controls a function of each block. The CPU 131 collects a result of the controlling, transmits a control signal to various peripherals connected to the controller 130 based on the result of the controlling, and controls the peripherals. Also, the CPU 131 reads out a command (instructions) and data (argument) corresponding to each process from the RAM and controls an operator to perform an operation.

The CPU 131 may perform booting using booting information pre-stored in the ROM 137. That is, when a system is turned on, the CPU 131 reads out a command to operate each hardware configuration from the ROM 137, and transmits a control signal to each hardware component according to the command. Also, the CPU 131 reads out data stored in a storage (not illustrated) from the RAM 135 and transmits data that should be graphic-processed from among the data stored in the RAM 135 to the GPU 133. The CPU 131 receives the data that has been graphic-processed by the GPU 133, transmits the data to an LCD controller (not illustrated) connected to the system bus 139, and displays an image on the at least one of the first and second displays 190a and 190b, respectively.

At this time, the CPU 131 temporarily stores the image data that has been processed by the GPU 133 in a virtual frame buffer region assigned to a predetermined region of the RAM 135. The CPU 131 assigns the region of the virtual frame buffer to support the highest resolution of the at least one of the first and second displays 190a and 190b, respectively (for example, 1024*600). If two the first and second displays 190a and 190b are provided, the CPU 131 assigns the region of the virtual frame buffer on a scale Of 1024*1200.

The CPU 131 inputs the data temporarily stored in the virtual frame buffer to the GPU 133, and performs digital signal processing.

The GPU 133 performs graphic processing with respect to the input data under the control of the CPU 131. Specifically, the GPU 133 may generate a screen including various objects such as an icon, an image, and a text using an operator (not illustrated) and a renderer (not illustrated). The operator calculates an attribute value such as coordinates values, shape, size, and color of each object to be displayed according to a layout of the screen. The renderer generates a screen of various layouts including an object based on the attribute value calculated by the operator. The screen generated by the renderer may be transmitted to the first and second displays 190a and 190b through the bus 139 and displayed on a display region or may be stored in the storage 170.

The CPU 131 may control to display the data graphic-processed by the GPU 133 through at least one of the first and second displays 190a and 190b, or store the data in the storage 170. Also, the CPU 131 may input the processed data to a display controller (not illustrated).

The GPU 133 may include a decoder, a renderer, and a scaler. Accordingly, the GPU 133 decodes a stored content, renders the decoded content and forms a frame, and scales a size of the formed frame according to a display size under the control of the display controller (not illustrated). If the frame is to be displayed on one of the first and second displays 190a and 190b, the frame is scaled according to the size of one display, and, if the frame is to be displayed on both the two displays, the frame is scaled according to the entire display size. The GPU 133 provides the processed frame to the display and displays it.

The controller 130 may further include an audio processor and an interface. The interface is an element to perform interfacing with the surrounding elements.

The audio processor (not illustrated) is an element that interfaces with the multimedia unit 120 through an audio interface (not illustrated), processes audio data, and provides the audio data to a sound outputting means such as a speaker. The audio processor may perform audio signal processing such as decoding audio data which is stored in the storage 170 or received through the communicator 110, filtering noise, and amplifying the data to an appropriate decibel. In the above example, if the reproduced content is a moving image content, the audio processor processes audio data that is demultiplexed from the moving image content, synchronizes the audio data with the GPU 133, and provides the audio data to the speaker to be output.

The ROM 137 stores a set of commands to boot a system. When a turn on command is input and power is supplied, the CPU 131 copies an OS stored in the storage 170 into the RAM 135 according to a command stored in the ROM 137, executes the OS, and boots the system. When booting is completed, the CPU 131 copies various application programs stored in the storage 170 into the RAM 135, and performs various operations by executing the application programs copied into the RAM 135. As described above, the CPU 131 may perform various operations by executing the application programs stored in the storage 170.

As described above, when touch and other user manipulation are sensed on the multi display apparatus 100, the controller 130 may determine whether the user manipulation is intended. When it is determined that the user manipulation is intended, the controller 130 reads out information on an operation corresponding to the user manipulation from the storage 170 and performs the operation corresponding to the information. The above-described operation of the controller 130 may be implemented by executing various programs stored in the storage 170. A plurality of photographers 140 may be provided in the multi display apparatus 100. For example, a first photographer may be provided in the sensor 150 in which the first display 190a is provided, and a second photographer may be provided in the second body 4 in which the second display 190b is provided. The controller 130 may store an image that is photographed by the photographer 140, or may attach the image to a mail, a messenger, or a message and may transmit the image to the outside. Also, the controller 130 may recognize a motion gesture by analyzing the image photographed by the photographer 140, and may perform a control operation corresponding to the motion gesture.

The CPU 131 may be implemented by using at least one of a single core processor, a multi core processor, a triple core processor, and a quad core processor, but is not limited thereto. If the CPU 131 is a multi core processor, each processor included within the multi core processor may control the first display 190a and the second display 190b independently.

Hereinafter, a software hierarchy diagram of the controller 130 will be explained.

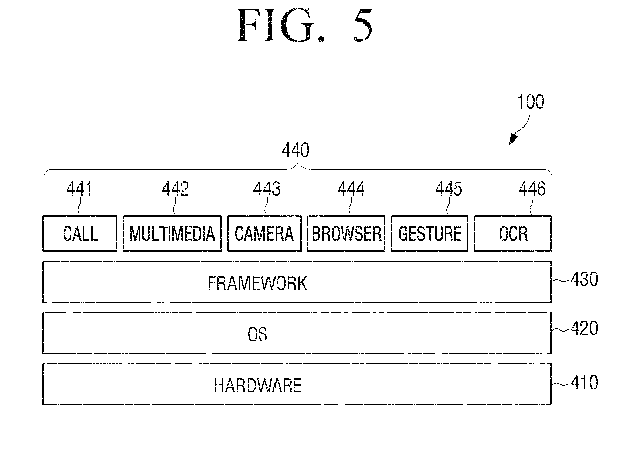

Referring to FIG. 5, the multi display apparatus 100 includes hardware 410, an OS 420 to drive the hardware, an application layer 440 including application layers 441 through 446 that are managed by the OS as processes and provide user services using resources, and a framework layer 430 to intermediate between the OS and the application.

The OS 420 controls an overall operation of the hardware 410 and manages the hardware 410 and a process corresponding to each application. That is, the OS 420 is a layer that manages the hardware and performs a basic function such as memory and security. The OS 420 includes modules such as a display driver to drive a multi display, a communication driver to exchange data, a camera driver to drive a camera, an audio driver to drive an audio unit, and a power supply manager. Also, the OS 420 may include an API library and a runtime that a developer can access. The OS 420 processes a call of an application and operates the hardware according to a result of the processing.

The framework layer 430 exists as an upper layer of the OS 420. The framework 430 connects the application layer 440 and the OS layer 420. That is, the framework layer 430 includes a location manager, a notification manager, and a frame buffer to display an image on a touch screen.

The application layer 440 exists as an upper layer of the framework layer 430 to perform various functions of the multi display apparatus 100. For example, the application layer 440 may include a call application 441, a multimedia application 442, a camera application 443, a browser application 444, a gesture application 445, and an OCR processing application 446.

The applications 441 through 446 provide a user interface, and receive a command from the user and transmit the command to the OS 420 through the framework, or request resources of the OS 420. The OS 420 processes a system call and manages tasks of many applications. The OS 420 operates many hardware configurations including the first display 190a and the second display 190b according to a result of processing the system call.

Hereinafter, a hardware configuration of a display will be explained.

FIG. 6 is a view illustrating a circuit configuration of an image outputter of the first display 190a or alternatively, the second display 190b of FIG. 2. Hereinafter, the first display 190a will be mainly described, but the second display 190b has the same configuration as that of the first display 190a and thus is operated in the same way.

The display may include the first display 190a and the second display 190b as described above. Also, the display may further include a touch screen.

Referring to FIG. 6, the image outputter of the first display 190a may include a timing controller 231, a gate driver 232, a data driver 233, a voltage driver 234, and a display panel 235.

The timing controller 231 receives a clock signal (DCLK), a horizontal sync signal (Hsync), and a vertical sync signal (Vsync), which are suitable to correspond to resolution of the touch screen, from an external source, generates a gate control signal (scan control signal) and a data control signal (data signal), rearranges input R, G, and B data, and provides the R, G, and B data to the data driver 233.

The timing controller 231 may generate a gate shift clock (GSC), a gate output enable (GOE), and a gate start pulse (GSP) regarding the above gate control signal. The GSC is a signal to determine a time at which a thin film transistor (TFT) connected to light emitting elements such as R, G, and B organic light emitting diodes (OLEDs) is turned on and/or off. The GOE is a signal to control output of the gate driver 232, and the GSP is a signal to indicate a first driving line of a screen out of one vertical sync signal.

Also, the timing controller 231 may generate a source sampling clock (SSC), a source output enable (SOE), and a source start pulse (SSP) regarding the data control signal. The SSC is used as a sampling clock to latch data in the data driver 233, and determines an operation frequency of a data drive IC. The SOE transmits the data latched by the SSC to the display panel 235. The SSP is a signal to inform latch of data or a sampling start corresponding to the one duration of horizontal synchronization.

The gate driver 232 generates a scan signal and is connected to the display panel 235 through scan lines S1, S2, S3, ..., Sn). The gate driver 232 applies a gate on/off voltage (Vgh/Vgl), which is provided from the voltage driver 234, to the display panel 235 according to the gate control signal generated by the timing controller 231. The gate on voltage (Vgh) is transmitted to a gate line 1 (GL1) through a gate line N (GLn) in sequence to realize a unit frame image on the display panel 235.

The data driver 233 generates a data signal and is connected to the display panel 235 through data lines (D1, D2, D3, ..., Dm). The data driver 233 completes scaling and inputs the RGB data of the image frame to the display panel 235 according to the data control signal generated by the timing controller 231. The data driver 233 converts the image data of the RGB, which is provided from the timing controller 231 in series, into data in parallel, converts digital data into an analogue voltage, and provides image data corresponding to one horizontal line to the display panel 235. This process is performed with respect to each horizontal line in sequence.

The voltage driver 234 generates driving voltages and transmits them to the gate driver 232, the data driver 233, and the display panel 235. That is, the voltage driver 234 receives a commercial power from an external source, that is, an alternating current (AC) voltage of 110V or 220V, and generates a power voltage (VDD) necessary to drive the display panel 235 and provides the power voltage, or provides a grounded voltage (VSS). Also, the voltage driver 234 may generate the gate on voltage (Vgh) and provides it to the gate driver 232. To achieve this, the voltage driver 234 may include a plurality of voltage driving modules (not illustrated) that are individually operated. The plurality of voltage driving modules (not illustrated) may be operated to provide different voltages under the control of the controller 130, and the controller 130 may control the voltage driver 234 such that the plurality of voltage driving modules provide different driving voltages according to pre-set information. For example, the plurality of voltage driving modules may provide different first voltages and a second voltage that is set as default according to pre-set information under the control of the controller 130.

According to an exemplary embodiment of the present invention, the voltage driver 234 may include a plurality of voltage driving modules corresponding to a plurality of regions into which the display panel 235 is divided. In this case, the controller 130 may control the plurality of voltage driving modules to provide different first voltages, that is, ELVDD voltages according to screen information (or input image information) of the plurality of regions. That is, the controller 130 may control a level of the ELVDD voltage using an image signal that is input to the data driver 233. The screen information may be at least one of brightness and grayscale information of the input image.

The display panel 235 includes a plurality of gate lines (GL1 through GLn) and a plurality of data lines (DL1 through DLn) that intersect to define a pixel region. R, G, and B light emitting elements such as OLEDs may be formed on a pixel region 236 where the gate lines and the data lines intersect. Also, a switching element, that is, a TFT is formed on a certain region of the pixel region 236, specifically, a corner. When such a TFT is turned on, grayscale voltages are provided to the R, G, and B light emitting elements from the data driver 233. At this time, the R, G, and B light emitting elements provide light according to an amount of electricity provided based on the grayscale voltages. That is, if much electricity is provided, the R, G, and B light emitting elements provides a large amount of light.

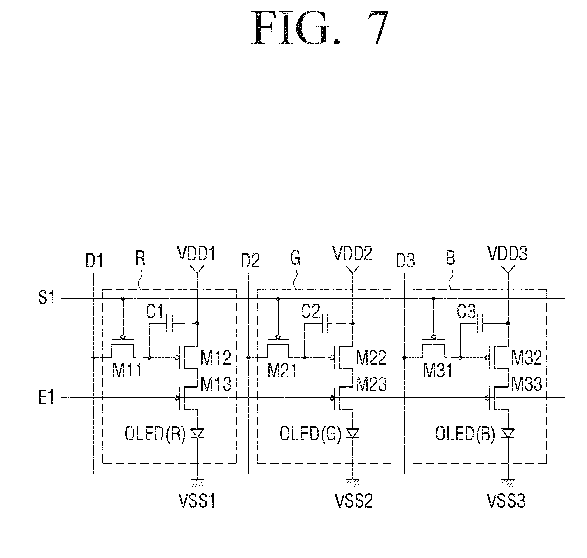

Referring to FIG. 7, the display panel 235 includes three R, G, and B pixel regions 236. The R, G, and B pixel regions 236 include switching elements M11, M21, and M31 that are operated by a scan signal (S1) and a gate on voltage (Vgh), switching elements M12, M22, and M32 that output electricity based on a pixel value including a changed high grayscale value to be provided to the data lines (D1 through Dn), and switching elements M13, M23, and M33 that adjust an amount of electricity transmitted from the switching elements M12, M22, and M23 to the R, G, and B light emitting elements according to the control signal provided by the timing controller 231. The switching elements M13, M23, and M33 are connected to the OLEDs and supply electricity to the OLEDs. The OLED recited herein is a display that emits light by itself using a principle of emission of an electric field when currents flow in a fluorescent or phosphorescent organic matter thin film. An anode electrode of the OLED is connected to a pixel circuit and a cathode electrode is connected to an ELVSS. Such an OLED generates light of predetermined brightness in response to currents supplied from the pixel circuit. Gate electrodes of the switching elements M11, M21, and M31 are connected to the scan line (S1), and one of a source electrode and a drain electrode is connected the data line (D1). As described above, the display panel 235 may be implemented by using an active matrix OLED (AM-OLED). However, the above-described exemplary embodiments of the present invention is merely an example and does not exclude a passive matrix OLED (PM-OLED) that is operated by having one line emit light simultaneously.

When the display 190a or 190b of the multi display apparatus 100 is implemented by using an OLED as described above, a separate light emitting means (e.g., a backlight unit) is not required and thus thickness of the multi display apparatus can be reduced and also weight of the multi display apparatus can be reduced. Also, the configuration can be simplified.

However, although the OLED has been described in the above exemplary embodiment, the display may be implemented by using various displays such as a liquid crystal display (LCD) panel, a plasma display panel (PDP), a vacuum fluorescent display (VFD), a field emission display (FED), and an electro luminescence display (ELD). Also, the display may be implemented by using a flexible display or a transparent display.

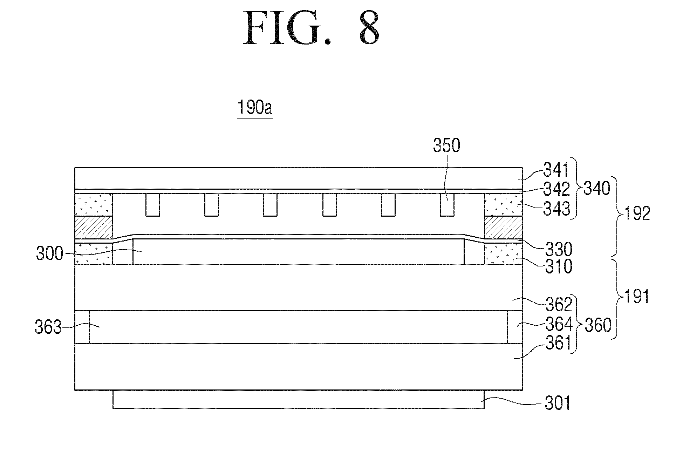

Referring to FIG. 8, the first display 190a includes an image outputter 191 and a touch screen 192.

The image outputter 191 includes a display panel 360 in which an upper substrate 362 and a lower substrate 361 are formed in close contact with each other, an upper polarizing plate 300 that is formed on the upper substrate 362 of the display panel 360, and a lower electrode 310 that is formed on an edge of the polarizing plate 300. The image outputter 191 further includes a lower polarizing plate 301 that is formed on the lower substrate 361.

A liquid crystal layer 363 may be formed between the upper substrate 362 and the lower substrate 361. The upper substrate 362 and the lower substrate 361 include a display region to display an image and a border region that is formed along an edge of the display region. Although not illustrated, the display region of the lower substrate 361 includes a plurality of gate lines and a plurality of data lines, a thin film transistor that is formed on a region where the plurality of gate lines and the plurality of data lines intersect, and a pixel electrode that is connected to the thin film transistor. A sustain electrode that partially overlaps the pixel electrode may be provided. A plurality of pads may be formed on the border region of the lower substrate 361 to be connected with the gate lines and the data lines.

The upper substrate 362 and the lower substrate 361 may be sealed by a sealing member 364 such as a sealant. The sealing member 364 may be formed along the border region of the upper substrate 362 and the lower substrate 361.

The touch screen 192 includes a lower transparent electrode 330 that is connected to the lower electrode 310 and is formed on the upper polarizing plate 300, a touch pad 340 in which an upper transparent electrode 342 is provided and that is attached to the upper substrate 362, and a protrusion 350 that is provided between the upper transparent electrode 342 and the lower transparent electrode 330.

The touch pad 340 includes a base film 341, the upper transparent electrode 342 that is formed on the base film 341, and an upper electrode 343 that is formed on the upper transparent electrode 342.

When the touch pad 340 is pressed by a predetermined external force, the protrusion 350 of the region to which the force is applied is brought into close contact with the lower transparent electrode 330, and accordingly, the lower transparent electrode 330 and the upper transparent electrode 342 are electrically connected to each other. The currents flowing in the upper transparent electrode 342 and/or the lower transparent electrode 330 are changed by the electrical connection, and this change is sensed by a separate sensing means (not illustrated). The sensing means transmits a sensed signal to the controller 130, which is separately provided. The controller 130 generates coordinates of the region in which the flow of the currents is changed using the sensed signal, and transmits the coordinates to a predetermined driver (not illustrated). The driver may perform the same operation as manipulating an image displayed on the display panel 360 using an input tool such as a mouse in response to the input coordinates.

In contrast, the multi display device 100 may include an image frame buffer having various configurations due to its specific characteristics. Hereinafter, the image frame having various potential configurations will be described.

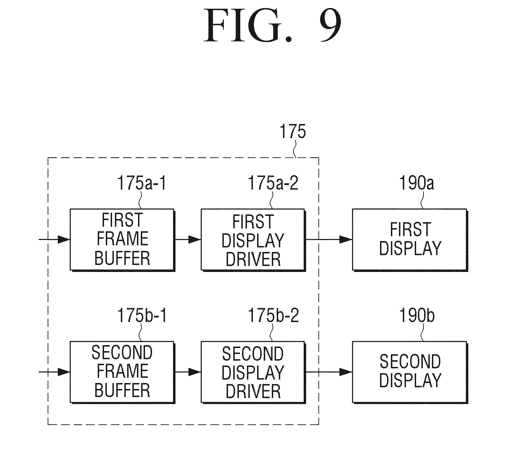

Referring to FIG. 9, the display driver 175 includes a first frame buffer 175a-1, a first display driver 175a-2, a second frame buffer 175b-1, and a second display driver 175b-1. That is, the first and second displays 190a and 190b, respectively, may include respective frame buffers 175a-1 and 175b-1 and respective display drivers 175a-2 and 175b-2.

The first frame buffer 175a-1 is configured to buffer an image frame to be displayed on the first display 190a, and the second frame buffer 175b-1 is configured to buffer an image frame to be displayed on the second display 190b.

For example, an image frame that has been digital signal processed by the GPU 133 may be stored in the first and second frame buffers 175a-1 and 175b-1 in a bitmap format. In this case, a buffering region of each of the frame buffers 175a-1 and 175b-1 is assigned according to a maximum pixel size supportable by each of the first and second displays 190a and 190b, respectively. The first display driver 175a-2 analyzes the image frame stored in the first frame buffer 175a-1 and converts the image frame into a first image source signal. The first display driver 175a-2 provides the first image source signal to the first display 190a and drives the first display 190a to display the image frame.

Likewise, the second display driver 175b-2 analyzes the image frame stored in the second frame buffer 175b-1, converts the image frame into a second image source signal, provides the second image source signal to the second display 190b, and displays the image frame.

Such two frame buffers may be suitable to process the image frame corresponding to each of the first and second displays 190a and 190b, respectively, in parallel. When a parallel processor outputs an image signal corresponding to each of the displays 190a and 190b, respectively, image output efficiency can be improved.

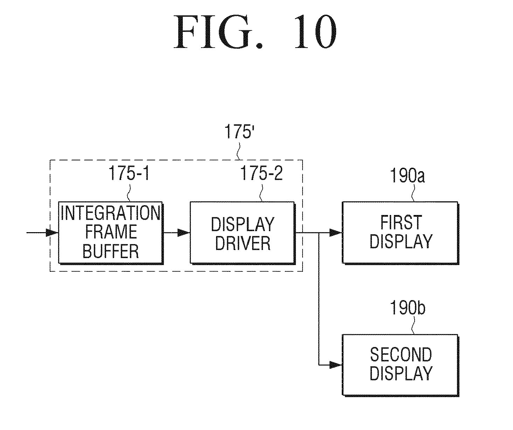

However, unlike in FIG. 9, the the first and second 190a and 190b, respectively, may use a single integrated frame buffer 175-1 rather than using the first frame buffer 175a-1 and the second frame buffer 175b-1 provided separately, as illustrated in FIG. 10.

FIG. 10 is a block diagram illustrating a configuration of the multi display apparatus 100 that controls operations of the first and second displays 190a and 190b, respectively, using the integrated frame buffer 175-1. When the frame buffer is implemented by using the integrated frame buffer 175-1, the integrated frame buffer 175-1 may be assigned a size larger than a maximum resolution of the first and second displays 190a and 190b.

For example, when each of the first and second displays 190a and 190b, respectively, displays at a maximum resolution of 1024*800, the integrated frame buffer 175-1 may be assigned a storage region corresponding to a frame buffer size capable of displaying a resolution of 1024*1600. A first region of the integrated frame buffer 175-1 stores a first image frame to be displayed on the first display 190a, and a second region stores a second image frame to be displayed on the second display 190b.

A display driver 175-2 provides the first or second image frame to the first display 190a or the second display 190b using addresses of the first image frame and the second image frame stored in the integrated frame buffer 175-1, and drives each of the first and second displays 190a and 190b.

As described above, the sensor 150 of the multi display apparatus 100 may include the proximity sensor 155. Hereinafter, a configuration and an operation of the proximity sensor 155 will be explained.

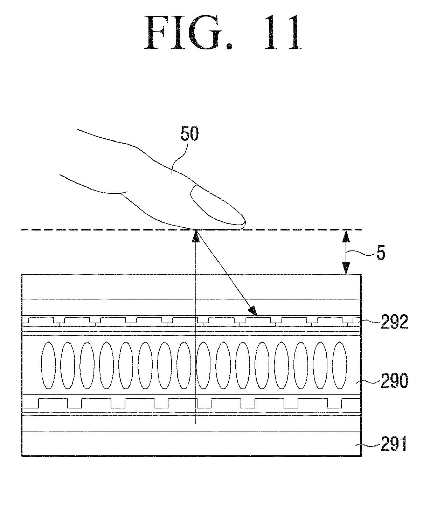

FIG. 11 is a view illustrating an example of a method for sensing hovering. The user may input a control command to the multi display apparatus 100 only by moving his/her finger or other user objects close to a touch screen without directly touching the touch screen. In this case, the multi display apparatus 100 may sense hovering using the proximity sensor 155. The hovering may be recognized as a single touch gesture when the user does not directly touch the touch screen and a motion is recognized within a predetermined effective recognition range on space.

Referring to FIG. 11, an infrared ray (IR) source 291 is disposed on an upper portion of a display 290 to recognize hovering, and an IR sensor 292 is disposed on a lower portion of the display 290. The IR source 291 emits infrared rays to a surface of the display 290. Specifically, the IR source 291 is disposed on the lower portion of the display 290 that displays an image, and emits infrared rays to the surface of the display 290. There may be a predetermined region in which the approach of a user object 50 is recognized on the surface of the display 290. This region is an effective recognition region 5 in which hovering is recognized.

The user object refers to a means to input a command to the multi display apparatus 100, and may be a part of the user's body such as a finger, or an input pen 500.

When the user object 50 enters the effective recognition region 5, the IR sensor 292 senses infrared rays reflected from the approaching user object 50 and generates an IR scan image. Specifically, the IR sensor 292 may generate the IR scan image corresponding to the infrared rays reflected from the approaching user object 50 using a plurality of IR sensing elements, which are arranged in an array form. The multi display apparatus 100 may sense hovering input using the generated IR scan image.

As will be explained below, it may be necessary to distinguish between hovering of an input pen 500 and hovering of other objects besides the input pen 500.

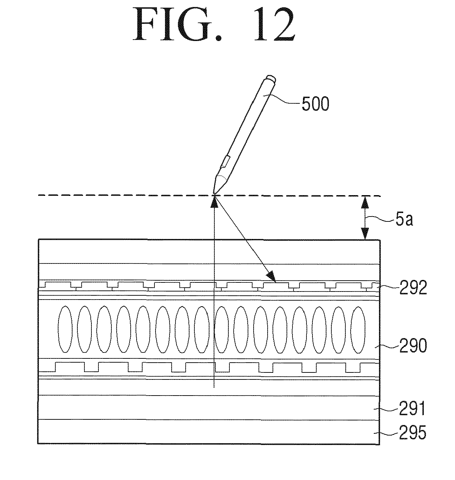

FIG. 12 is a view illustrating an example of a method of sensing hovering using an input pen 500 according to an exemplary embodiment of the present invention. As will be explained below, the input pen 500 may include a magnetic field coil therein. The multi display apparatus 100 may further include a magnetic field sensor 295 to sense a change in the magnetic field according to proximity of the magnetic field coil to a display 290, which includes an infrared ray (IR) source 291 and an IR sensor 292 to recognize hovering of the input pen 500. Since a point over which the input pen 500 hovers has its magnetic field changed due to the magnetic field coil of the input pen 500, the magnetic field sensor 295 may sense hovering of the input pen 500 at a corresponding point. There may be a predetermined region in which the approach of the input pen 500 is recognized by a surface of the display 290. This region is an effective recognition region 5a in which hovering of the input pen 500 is recognized. At this time, the IR sensor 292 of the proximity sensor 155 senses the hovering, but, when both the IR sensor 292 of the proximity sensor 155 and the magnetic field sensor 295 sense hovering of the user object, the result of sensing by the proximity sensor 155 is disregarded. Accordingly, when the magnetic field sensor 295 senses the hovering of the input pen 500, the multi display apparatus 100 is regarded as being in a pen input mode and displays a corresponding menu item or screen.

In contrast, when the magnetic field sensor 295 does not sense the hovering of the input pen 500, but the IR sensor 292 of the proximity sensor 155 senses hovering, it may be determined that a user object other than the input pen 500 including the magnetic field coil (not illustrated) approaches the multi display apparatus 100. In this case, the controller 130 may enter a state in which it is controlled by objects other than the input pen 500. For example, the controller 130 may be operated in a keyboard input mode to display a soft keyboard which is touchable by user's fingers on at least one of the first display 190a and the second display 190b.

Hereinafter, an exterior of the multi display apparatus 100 according to an exemplary embodiment of the present invention will be explained with reference to the accompanying perspective view.

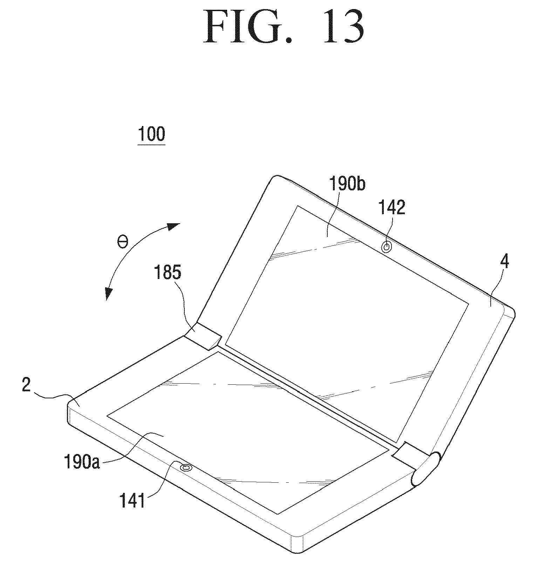

FIG. 13 is a perspective view illustrating the multi display apparatus 100 in detail according to an exemplary embodiment of the present invention. In FIG. 13, the multi display apparatus 100 includes the first and second displays 190a and 190b, respectively, which are connected to each other by means of a hinge 185.

Referring to FIG. 13, the multi display apparatus 100 includes first and second bodies 2 and 4, respectively, which are connected to each other by the hinge 185 and are movable relative to each other. The first display 190a may be provided on one surface of the first body 2, and at least one physical button (not illustrated) may be provided on one side surface of the first display 190a. The second display 190b may be provided on one surface of the second body 4, and at least one physical button (not illustrated) may be provided on one side surface of the second display 190b. The physical button (not illustrated) includes at least one of a push button and a touch button. In an exemplary embodiment of the present invention, the first display 190a that is provided on the first body 2 including a speaker (not illustrated) and a microphone (not illustrated) is operated as a main screen, and the second display 190b that is provided on the second body 4 that does not include such a member may be operated as a sub screen. In an exemplary embodiment of the present invention, the first body 2 includes a first camera 141 and the second body 4 includes a second camera 142.
When the multi display apparatus 100 is placed as illustrated in FIG. 13, the first and second displays 190a and 190b, respectively, display screens in a landscape mode.

If the multi display apparatus 100 is configured to have the first body 2 and the second body 4 connected to each other by means of the hinge 185 and move relative to each other, the multi display apparatus 100 may be any apparatus like a mobile phone, a laptop computer, a tablet PC, and a portable multimedia player (PMP). Although the first display 190a and the second display 190b are provided on the first body 2 and the second body 4, respectively, the following explanation may also be applied to an apparatus in which a touch screen display is provided on only one of the two panels. Also, at least one of function buttons 161 on the side surfaces of the first and second displays 190a and 190b, respectively, may be omitted. Furthermore, although the first body 2 and the second body 4 are connected to each other by means of the hinge 185, they may be connected to each other by means of other elements only if the first body 2 and the second body 4 can be folded in relative to each other.

As illustrated in FIG. 13, the hinge 185 may include two hinges that are formed at opposite edges of a connection portion between the first body 2 and the second body 4. Also, the hinge 185 may be a single hinge that is disposed on the entire connection portion between the first body 2 and the second body 4.

The first body 2 on which the first display 190a is placed and the second body 4 on which the second display 190b is placed may rotate with reference to the hinge 185. The multi display apparatus 100 may perform various operations according to an angle between the first and second bodies 2 and 4, respectively. The mode of the multi display apparatus 100 may be divided into various modes according to a state of the angle between the bodies.

A relative angle (θ) is a rotation angle of the second body 4 that is rotated with reference to the first body 2 in a predetermined direction (for example, a counter clockwise direction).

Specifically, the relative angle (θ) may be detected using a hinge sensor that is embedded in the hinge 185. The hinge sensor may include at least one of a hall sensor, a pressure sensor, an inductive sensor, an electric content sensor, and an optical sensor, and may recognize the relative angle (θ) by detecting a movement and a relative location of the hinge.

Also, the relative angle (θ) may be recognized by the geomagnetic sensor or the acceleration sensor 153 detecting locations of the first and second bodies 2 and 4.

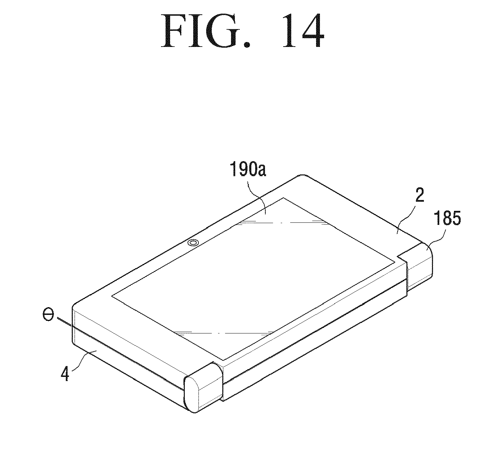

FIGS. 14 through 17 are views illustrating examples of various modes that are distinguished according to the angle between the bodies according to an exemplary embodiment of the present invention.

First, FIG. 14 is a perspective view illustrating the multi display apparatus 100 when it is folded with reference to the hinge 185. As illustrated in FIG. 14, the first body 2 and the second body 4 are in contact with each other with the first and second displays 190a and 190b, respectively, on the first body 2 and the second body 4 facing each other. That is, the second display 190b is placed on the opposite side of the first display 190a. When the user views the first display 190a, the user cannot directly view the second display 190b because it is placed on the opposite side. In this way, the user views only one display.

At this time, the relative angle (θ) is defined as 0°. For example, the relative angle between the first and second bodies 2 and 4 may be between 0° and 60°. This state may be called a single mode. The single mode may be usefully used when the multi display apparatus 100 is not in use and is in a locked state or may be used in a call application. In the single mode, the first display 190a on a front surface displays a task screen of at least one application, and the second display 190b on a rear surface may be turned off or may be inactivated.

Some application may use an option menu and may turn on the second display 190b on the rear surface. Since the user views only one display screen in the single mode, the controller 130 controls only one of the first and the second displays 190a and 190b. That is, the controller 130 transmits a control signal on the display that the user is currently viewing. By not transmitting a separate control signal and a separate data signal on the one of the first and the second displays 190a and 190b that is not controlled by the controller 130, power consumption is reduced.

At this time, the one of the first and the second displays 190a and 190b that does not receive a control signal and a data signal is operated in a sleep mode, and is released from the sleep mode when a signal to disable the sleep mode is applied from the controller 130 or when the user rotates the direction of the multi display apparatus 100 and views the one of the first and the second displays 190a and 190b that has been in the sleep mode.

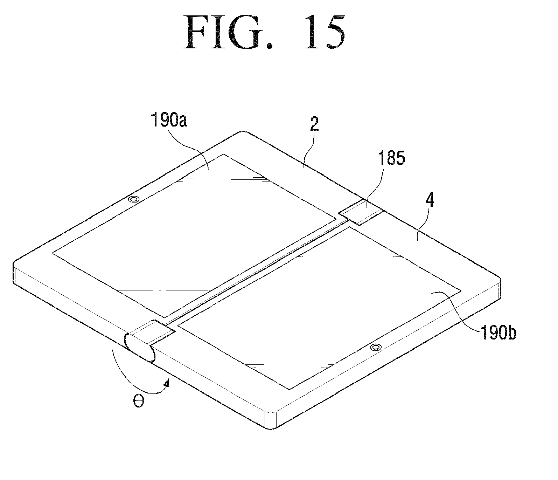

FIG. 15 illustrates the first body 2 and the second body 4 when they are parallel to each other, that is, are unfolded. In this state, the relative angle (θ) is 180° or approaches 180° within a predetermined range. Hereinafter, this state will be referred to as an expanding mode. For example, when the angle between the first and second bodies 2 and 4 ranges from 175° to 185°, the multi display apparatus 100 determines that the first and second bodies 2 and 4 are unfolded. In the expanding mode, two task screens of two applications may be displayed on the first and second displays 190a and 190b, respectively, one screen of one application may be displayed on the first and second displays 190a and 190b, or two task screens of one application may be displayed on the first and second displays 190a and 190b. No application is displayed on one of the first and second displays 190a and 190b or a defaulted home screen may be displayed. The expanding mode may be usefully used in an E-book, a moving image player application, and a web browsing screen.

In contrast, FIG. 13 illustrates the relative angle (θ) of the second body 4 with respect to the first body 2 exceeding 180°, that is, illustrates the two displays 190a and 190b when they are slightly folded inward towards each other. In the following descriptions, this state will be referred to as a tool kit mode. For example, when the relative angle between the first and second bodies 2 and 4 is between 185° and 265°, the tool kit mode is recognized. The tool kit mode refers to a state in which the first and second displays 190a and 190b, respectively, are slightly folded inward towards each other and may be useful when the multi display apparatus 100 is used like a laptop computer. For example, a task screen may be displayed on one display 190a, whereas various task environments such as a tool of a keyboard may be provided on the other display 190b.

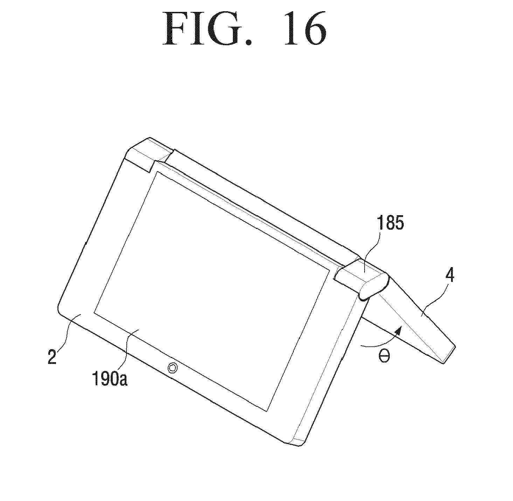

FIG. 16 illustrates a state in which the relative angle (θ) of the second body 4 with respect to the first body 2 is less than 180°, that is, the two displays 190a and 190b are almost folded out to face each other in opposite directions. This state is called a standing mode. For example, the relative angle between the first and second bodies 2 and 4 is between 30° and 90°. In the following descriptions, this state will be referred to as a standing mode.

In the standing mode, the two displays 190a and 190b are folded out to face outwardly and the multi display apparatus 100 may be placed on a bottom in a triangular shape. The standing mode is useful when the multi display apparatus 100 is charged or used as a digital clock or album, or when the user views a private broadcast, movie, and moving image for a long time.

According to another exemplary embodiment of the present invention, the standing mode may be applied to an application that requires collaboration of two or more uses or interaction, for example, a video conference or a collaborative game. Some application may display a task screen only on the first display 190a of the front surface in the standing mode and may turn off the second display 190b of the rear surface. Some application may use an option menu and may turn on the second display 190b of the rear surface.

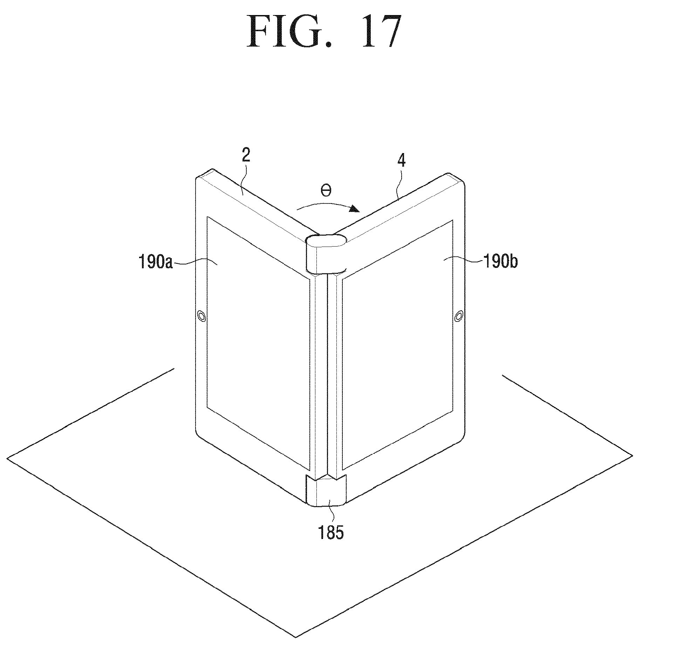

FIG. 17 illustrates another exemplary embodiment of the present invention of the standing mode of FIG. 16, and illustrates the multi display apparatus 100 that is placed upright such that a part of the hinge is in contact with a bottom. This state may be referred to as a portrait view mode. In the portrait view mode, the relative angle between the first and second bodies 2 and 4 is between 30° and 90°, and, when it is determined that the multi display apparatus 100 is placed upright by means of the acceleration sensor 153, the portrait view mode is recognized.

Specifically, the acceleration sensor 153 senses a rotation of the multi display apparatus 100. The acceleration sensor 153 senses a switch between the portrait view mode in which the first and second displays 190a and 190b, respectively, of the multi display apparatus 100 are placed on the left and right sides, and a landscape view mode in which the first and second displays 190a and 190b, respectively, are placed on the upper and lower sides.

The portrait view mode may be applied to an application that has to provide different images to two or more users, for example, a video conference or a multi moving image player.

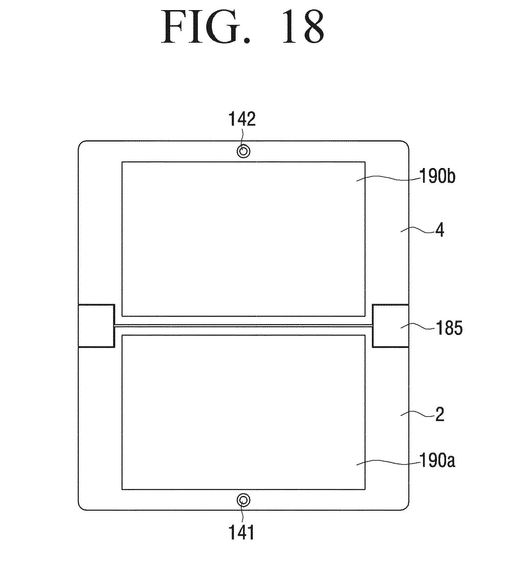

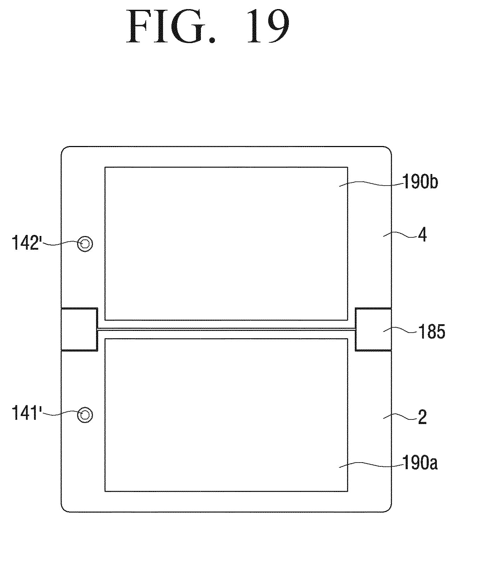

FIGS. 18 and 19 are views illustrating placements of two cameras of the multi display device 100 according to an exemplary embodiment of the present invention. FIGS. 18 and 19 illustrate the multi display device 100 viewed from the front. FIGS. 18 and 19 are illustrating the placement of the cameras and thus omit components other than the cameras.

Referring to FIG. 18, the multi display apparatus 100 includes the first body 2 and the second body 4, and the first body 2 includes the first display 190a and the second body 4 includes the second display 190b. The first body 2 and the second body 4 are connected to each other by means of the hinge 185 and are movable relative to each other. A first camera 141 may be placed on a center of a border region opposite the hinge 185 from among border regions of the first body 2. A second camera 142 may be placed on a center of a border region opposite the hinge 185 from among border regions of the second body 4.

Placement of the cameras will be explained with reference to FIG. 19. Explanations are made with reference to a direction in which the user faces the multi display apparatus 100 for the sake of easy understanding. A first camera 141' may be placed on a center surface of a left border region of the first body 2, and a second camera 142' may be placed on a center surface of a left border region of the second body 4. In another exemplary embodiment of the present invention, the first and second cameras may be placed on center surfaces of right border regions of the first and second bodies 2 and 4, respectively. In still another exemplary embodiment of the present invention, the first and second cameras may be placed on corner regions, or any other regions for that matter, of the first and second bodies 2 and 4, respectively. The multi display apparatus 100 may be used in the horizontal direction as described above, and may be displayed in a vertical direction.

The user performs a variety of input through the above-described multi display apparatus 100, and the multi display apparatus 100 performs output corresponding to the input.

Hereinafter, input to the above-described multi display apparatus 100 using various user objects will be explained.

The input using a user object may include a touch, hovering, and a motion. The user object may be a part of the user's body, such as a finger and a palm, or other objects such as an input pen 500. The input pen 500 may be made of conductive material such as metal, or other materials. For example, the input pen 500 may include a magnetic field coil and the multi display apparatus 100 may include a magnetic field sensor.

As described above, the input pen 500 including the magnetic field coil may be the user object. That is, the user object includes all kinds of objects or bodies that can be recognized by the multi display apparatus 100 when they contact the multi display apparatus 100 or exist within a predetermined range. The user objects may be used independently or interchangeably.

The touch is a type of input that is recognized as a touch when the user object contacts the multi display apparatus 100. For example, the touch is a user's operation of making contact with one position or a plurality of continuous positions on the touch screen using fingers of the user's right or left hand (in particular, index finger), thumb, or a user object which can be sensed by the touch screen (for example, a stylus pen). A technical means of recognizing a touch will be explained below.

The hovering is a type of input that is recognized when the user object is placed within a predetermined range of the multi display apparatus 100 without directly touching the multi display apparatus 100 or without pressing a button. Various exemplary embodiments of the present invention are provided on an assumption that hovering and touch are distinguished from each other. A technical means to recognize hovering will be explained below in detail.

The motion is a type of input that is recognized when there is a predetermined recognizable motion in the proximity of the multi display apparatus 100. The motion is included in the hovering in a broad sense and thus an explanation thereof is omitted here.

Hereinafter, various types of input used in exemplary embodiments of the present invention will be explained with reference to following tables 1 through 3. Hereinafter, the touch input will be mainly explained, but the hovering input may include various types of input according to the same criterion. Also, the user object may be a part of the user's body or an input pen 500 as described above.

**[Table 1]**

| Type | | Mark |
|---|---|---|
| Single Finger Gesture | Tap | 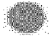 |
| | Touch & Hold | 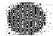 |
| | Double Tap | 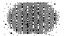 |
| | Drag | 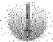 |
| | Drag & Drop | 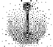 |
| | Flick | 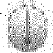 |

Table 1 illustrated types of gestures that are made using a single finger.

Referring to table 1, the types of gestures made using a single finger may include tap, touch & hold, double tap, drag, drag & drop, and flick, but is not limited thereto. The tap is a user's operation of touching the touch screen with the user object within a predetermined time and then raising the user object. The touch & hold is a user's operation of touching the touch screen with the user object and keeping touching for more than a predetermined time. The double tap is a user's operation of tapping twice within a predetermined time. The drag is a user's operation of touching and moving the user object in a predetermined direction while still touching, and the drag & drop is a user's operation of touching an object on the touch screen, dragging it to a predetermined position, and then raising the user object. The flick is a user's operation of dragging rapidly.

**[Table 2]**

| Type | | Mark |
|---|---|---|
| Two Finger Gesture | Two finger Tap | 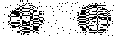 |
| | Touch & Spread | 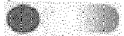 |
| | Pinch Out | 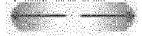 |
| | Pinch In | 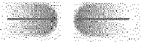 |
| | Two finger Drag | 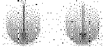 |
| | Cross Two Finger | 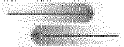 |
| | Touch & Rotate | 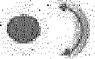 |

Table 2 illustrates various types of gestures that are made using two fingers. However, fingers will be explained as an example of the user object, but the same operations are defined when other user objects are used.

Referring to table 2, the types of gestures made using two fingers may include two finger tap, touch & spread, pinch out, pinch in, two finger drag, cross two finger, and touch & rotate, but are not limited thereto. The two finger tap is a user's operation of tapping with two fingers simultaneously, and the touch & spread is a user's operation of pressing the touch screen with two fingers simultaneously and moving only one finger in a straight line without moving the other finger. The pinch out is a user's operation of touching the touch screen with two fingers simultaneously and then moving the two fingers further apart, and the pinch in is a user's operation of touching the touch screen with two fingers simultaneously and then moving the two fingers closer together. The two finger drag is a user's operation of dragging with two fingers in the same direction, and the cross two finger is a user's operation of dragging with two fingers closer together, crossing the two fingers, and then dragging further apart. Finally, the touch & rotate is a user's operation of touching the touch screen with one finger and keeping touching (touch & hold), and touching with the other finger and rotating about fixed one finger while still touching.

**[Table 3]**

| Type | | Mark |
|---|---|---|
| Multi Finger Gesture | Three finger touch | 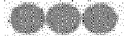 |
| | Four finger touch | 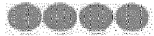 |
| | Five finger touch | 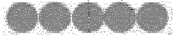 |
| Palm | Palm | 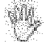 |

Table 3 illustrates various types of gestures that are made using two or more fingers, and a type of gesture that is made using the user's palm.

Referring to table 3, the types of gestures made using two or more fingers may include three finger touch, four finger touch, and five finger touch. Also, gestures such as tap, drag, and rotate may be performed using two or more fingers as illustrated in tables 1 and 2.

As described above, the user object may include an input pen as well as a part of the user's body, such as fingers. In particular, when the input pen performs input by transmitting a predetermined command or sensing information to the multi display apparatus 100, various user experiences may be provided.

Hereinafter, a configuration of an input pen 500 and a multi display apparatus 100 including the input pen 500 according to various exemplary embodiments of the present invention will be explained. The input pens 500, 500-1,500-1', 500-2, 500-2', 500-2", 500-3, 500-4, 500-5, 500-5', 500-5", 500-6, and 500-7 according to various exemplary embodiments of the present invention may be used in connection with not only the multi display apparatus 100 but also a single display apparatus which is implemented by using a single display. That is, the input pens 500, 500-1,500-1', 500-2, 500-2', 500-2", 500-3, 500-4, 500-5, 500-5', 500-5", 500-6, and 500-7 sense or generate a variety of information and perform a variety of input by transmitting the information to the single display apparatus or other apparatuses using a communicating means. A pen holder 600, which will be described below, may perform a same operation as the input pens 500, 500-1, 500-1', 500-2, 500-2', 500-2", 500-3, 500-4, 500-5, 500-5', 500-5", 500-6, and 500-7.

First, a basic configuration of the input pen 500 will be explained.

FIG. 20 is a block diagram illustrating the configuration of the input pen 500 according to an exemplary embodiment of the present invention. Referring to FIG. 20, the input pen 500 includes a sensor 510, a controller 520, and a communicator 530.

The sensor 510 senses at least one physical quantity that exists in a predetermined range. For example, the sensor 510 may include at least one of a camera that photographs an image, an acceleration sensor that detects acceleration corresponding to a force exerted to a moving object or acceleration of gravity of a still object, a geomagnetic sensor that senses azimuth by detecting a flow in a magnetic field, a gyro sensor that is used to detect a motion by detecting a rotation speed, an IR sensor that detects IRs emitted from an object, and a pressure sensor that detects a magnitude of applied pressure. The sensor 510 including the above-described sensors will be explained in detail below.

The controller 520 controls an overall operation of the input pen 500. In particular, the controller 520 receives a result of sensing by the sensor 510, and controls the communicator 530 to transmit information corresponding to the result of the sensing to the multi display apparatus 100. The controller 520 includes a micro processor unit (MPU) or a central processing unit (CPU), and an operating system (OS) to operate the MPU or CPU.

The communicator 530 communicates with the multi display apparatus 100. Specifically, the communicator 530 transmits information on a sensing result obtained through the sensor 510 to the multi display apparatus 100. Also, the communicator 530 may receive a control signal from the multi display apparatus 100 if necessary.

The communicator 530 may be implemented by using various short range wireless communicating means. For example, the communicator 530 may be implemented by using Bluetooth, IR communication, near field communication (NFC), Wi-Fi, and Zigbee, but is not limited thereto.

For example, if the communicator 530 of the input pen 500 includes a Bluetooth module, the input pen 500 may transmit a data stream to the multi display apparatus 100 in the Bluetooth method. The Bluetooth is a method in which a data stream is transmitted in the form of a data packet using 2402-2480 MHz, of industrial scientific and medical (ISM), that is, 79 channels in total. When a frequency hopping method is used to transmit packets (data) little by little while hopping a plurality of channels rapidly according to a specific pattern, 79 channels may hop 1600 times per 1 second. Also, the communicator 530 of the input pen 500 may transmit data using an IR communication method. The IR communication method is for transmitting data using IRs. The IRs have a longer wavelength than that of visible light and thus can smoothly pass through minute particles floating in the air. In particular, the IRs can easily guarantee a wide bandwidth in comparison with electromagnetic waves and thus has the merit of transmitting data at high speed. If the infrared data association (IrDA) DATA 1.4 standard is applied, the input pen 500 and the multi display apparatus 100 can wirelessly exchange data with each other at a rate of up to 16Mbps within a 1M distance.

The input pen 500 may adopt an NFC method. The NFC is a non-contact short range wireless communication method using a frequency band of 13.56Mz. When a plurality of terminals using the NFC technology approach one another within a short distance such as about 10cm, they can exchange data with one another. In this case, the input pen 500 may include a module including an NFC tag, and the multi display apparatus 100 includes an NFC reader. When tagging is performed, data is transmitted from the input pen 500 to the multi display apparatus 100. To exchange data with each other, the input pen 500 and the multi display apparatus 100 may include an NFC tag and an NFC reader, respectively.

Besides these, the communicator 530 of the input pen 500 may communicate with the multi display apparatus 100 using Wi-Fie or Zigbee. These communication methods have been described above and thus a redundant explanation is omitted.

The communicator 530 of the input pen 500 may be implemented by using the above-described various short range communication methods, or may be implemented by using other communication technologies which are not mentioned in the present descriptions if necessary.

As described above, the input pen 500 senses a variety of information using the sensor 510, and transmits the sensed information to the multi display apparatus 100 through the communicator 530. When an event indicating reception of the sensed information is generated, the multi display apparatus 100 performs various control operations based on the sensed information. That is, the controller 130 of the multi display apparatus 100 receives a sensing signal which is sensed by the sensing part 510 through the communicator 110, and controls the operations of the first display 190a and the second display 190b according to the sensing signal.

Hereinafter, a configuration of an input pen 500-1 that may be connected with and disconnected from the multi display apparatus 100 will be explained.

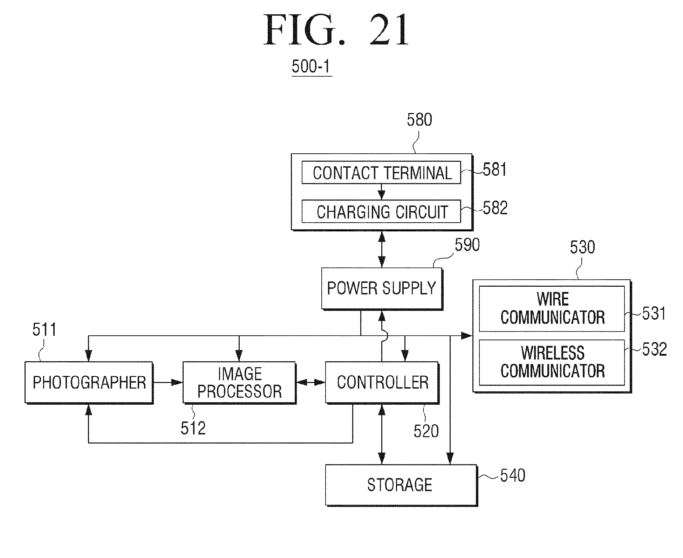

Referring to FIG. 21, the input pen 500-1 includes a photographer 511, an image processor 512, a charger 580, a power supply 590, a communicator 530, a storage 540, and a controller 520.

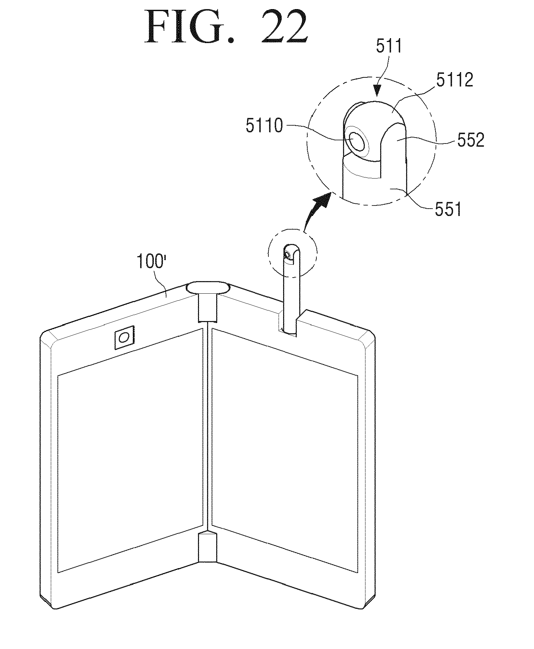

The photographer 511 photographs an object. The photographer 511 includes a shutter (not illustrated), a lens (5110 of FIG. 22), an aperture (not illustrated), a charge coupled device (CCD) image sensor (not illustrated), and an analogue/digital converter (ADC). The detailed configuration and the operation of the photographer 511 have been described above when the multi display apparatus 100 was described and a redundant explanation is omitted.

The image processor 512 signal-processes RAW data that has been digital-converted under the control of the controller 520 into displayable data.

Specifically, the image processor 512 removes a black level that occurs due to dark currents generated in the CCD image sensor and a color filter array (CFA) filter, which are sensitive to a change of temperature. The image processor 512 performs gamma correction to encode information according to nonlinearity of human vision. The image processor 512 performs CFA interpolation to interpolate a Bayer pattern implemented by RGRG lines and GBGB lines of gamma-corrected data into RGB lines. The image processor 512 converts interpolated RGB signals into YUV signals, performs edge compensation to filter the Y signal using a high pass filter and clearly process an image, performs color correction to correct color values of U and V signals using standard color coordinates, and removes noise.

The image processor 512 generates a JPEG file by compressing and signal-processing Y, U, and V signals from which the noise has been removed, and stores the generated JPEG file in the storage 540. The ADC may be included in the image processor 512. Also, the image processor 512 may not be included in the input pen 500-1 and may be included in the multi display apparatus 100. In this case, image information that has been pre-processed by the photographer 511 is transmitted to the multi display apparatus 100 through the communicator 530, and the image processor 512 of the multi display apparatus 100 performs image processing.

The above-described image processing operation of the image processor 512 is merely an example and the image processing may be performed in other methods.

The charger 580 receives DC power from the multi display apparatus 100 and charges a secondary cell embedded in the input pen 500-1, and supplies the charged power to the power supply 590. The charger 580 includes a contact terminal 581 and a charging circuit 582.

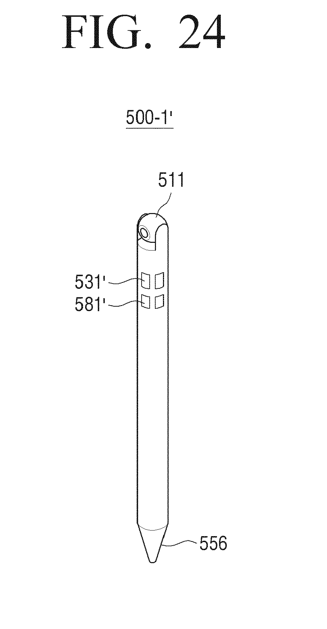

When the input pen 500-1 is mounted to the multi display apparatus 100 via a connector (not illustrated) that is provided in the multi display apparatus 100 to mount the input pen 500-1 therein, the contact terminal 581 connects the input pen 500-1 with a power supply of the multi display apparatus 100. As illustrated in FIG. 24, the contact terminal 581 may protrude from a side surface of the input pen 500-1 and may be made of conductive metallic material such as copper.

The charging circuit 582 charges the input pen 500-1 with DC power supplied through the contact terminal 581. The charging circuit 582 includes a secondary cell and the secondary cell is charged with power supplied through the contact terminal 581. The secondary cell may be one of a nickel cell, a cadmium cell, and a nickel-cadmium cell, but is not limited thereto. When the secondary cell is fully charged, the charging circuit 582 may not charge the secondary cell even if DC power is input.

The power supply 590 supplies power to the input pen 500-1. The power supply 590 receives power from the charged secondary cell and transmits the power to each element. The power supply 590 sets the maximum power consumption on the assumption that each element of the input pen 500-1 requires power supply. When the components of the multi display device 100 are not operated, the power supply 590 transmits minimum currents. However, when high power consumption is required because a camera attached to the input pen 500-1 is operated for example, necessary currents are supplied according to a supply current enable signal.

As described above, the communicator 530 communicates with the multi display apparatus 100. Specifically, the communicator 530 transmits image information that is photographed by the photographer 511 to the multi display apparatus 100.

The communicator 530 includes a wire communicator 531 and a wireless communicator 532. The wireless communicator 532 may include a short range wireless communication module as described above and a detailed description thereof is omitted.

The wire communicator 531 is connected to the multi display apparatus 100 through a wire and communicates with the multi display apparatus 100. The wire communicator 531 may include a communication terminal 531', as illustrated in FIG. 24. The communication terminal 531' is brought into contact with a communication module of the multi display apparatus 100 and exchanges data with the multi display apparatus. The communication terminal 531 protrudes from one side surface of the input pen 500-1 and is brought into contact with the communication module when the input pen 500-1 is mounted in the multi display apparatus 100.

The storage 540 stores image data that is output from the image processor 512, or stores image data which is output from the photographer 511 if the image processor 512 exists in the multi display apparatus 100. The storage 540 may serve as a buffer to temporarily store an image and transmit the image to the multi display apparatus 100. In another exemplary embodiment of the present invention, the input pen 500-1 may not include the storage 540. In this case, the input pen 500-1 transmits photographed image data to the multi display apparatus 100 on a real-time basis.

The controller 520 controls the operation of the input pen 500-1. Specifically, the controller 520 controls the photographer 511 to photograph an image, and controls the image processor 512 to process the photographed image. Also, the controller 520 may control the communicator 530 to transmit data to the multi display apparatus 100, or may control the storage 540 to store image data. The controller 520 may include an MPU or a CPU, and an OS to operate the MPU or the CPU.

The above-described configuration of the input pen 500-1 may include a housing 551, a connection arm 552, and a pen point 556, as illustrated in FIGS. 22 through 24.

The housing 551 contains the configuration of the input pen 500-1 in an inner space. In an exemplary embodiment of the present invention, the housing 551 may contain circuit parts corresponding to the image processor 512, the power supply 590, the storage 540, the charger 580, the controller 520, and the communicator 530 described above in a cylindrical inner space. The housing 551 has one end connected with the pen point 556 and has the other end connected with the connection arm 552 and thus connected with the above-described photographer 511. The contact terminal of the charger 580 may protrude from one side surface of the housing 551, and the communication terminal 531' of the wire communicator 531 described above may protrude from the other side surface.

The connection arm 552 is connected with one end of the housing 551 and connects the housing 551 to the photographer 511. Two opposite connection arms 552 may be formed at one end of the housing 551 in parallel with the housing 551, and the connection arms 552 are connected with opposite side surfaces of a housing 5112 of the photographer 511 through a shaft (not illustrated). Accordingly, the photographer 511 is rotatable about the shaft (not illustrated). Accordingly, the photographer 511 may photograph a subject which is located ahead of it, and also, may turn around and photograph a subject that is located above or behind it.

The pen point 556 is included to make contact (touch-tap) with the display 190a and 190b of the multi display apparatus 100. In an exemplary embodiment of the present invention, the pen point 556 extends from the housing 551 in the opposite direction of the photographer 511 and protrudes in a conical shape.

Also, although not illustrated, a portion where the photographer 511 is connected with the connection arm 552 (hereinafter, referred to as a head) may be rotatably connected with the housing 552. Due to the above-described configuration, the photographer 511 can photograph not only a subject that is located ahead of it, but also a subject that is located aside or behind it. Also, the photographer 511 may photograph a panorama image when it performs 360° photographing.

When the above-described input pen 500-1 is connected with the multi display apparatus 100 as illustrated in FIG. 23, the input pen 500-1 may function as a camera within the multi display apparatus 100. Since the photographer 511 is rotatable about the shaft (not shown) as described above, the photographer 511 may be adjusted to face the front of the first and second displays 190a and 190b or face the rear. When the photographer 511 is placed to face the front of the first and second displays 190a and 190b, the photographer 511 photographs a subject ahead of the first and second displays 190a and 190b, transmits the photographed image to the multi display apparatus 100 through the wire communicator 531, and displays the image on the first and second displays 190a and 190b. On the other hand, when the photographer 511 is placed to face the rear of the first and second displays 190a and 190b, the photographer 511 photographs a subject behind the first and second displays 190a and 190b, transmits the photographing image to the multi display apparatus 100 through the wire communicator 531, and displays the image on the first and second displays 190a and 190b.

When the input pen 500-1 is disconnected from the multi display apparatus 100, the input pen 500-1 photographs an image through the photographer 511 and transmits the photographed image to the multi display apparatus 100 through the wireless communicator 532. Various exemplary embodiments of the present invention will be explained below.

Hereinafter, an input pen 500-2 including a photographing function and the multi display apparatus 100 according to an exemplary embodiment of the present invention will be explained.

Referring to FIG. 25, the input pen 500-2 according to various exemplary embodiments of the present invention includes a photographer 511, an image processor 512, a button 560, a controller 520, a communicator 530, and a storage 540.

Since the photographer 511, the image processor 512, the controller 520, the communicator 530, and the storage 540 are the same as those of the input pen 500-1 described above, only the button 560 will be additionally explained. However, as described above, the image processor 512 may not be included in the input pen 500-2, and may be included in the multi display apparatus 100 and may perform image-processing with respect to the image received from the input pen 500-2.

The button 560 receives input of the user. The button 560 may include a button 561 that is pressed by a user's touch (tap) or by pressure. The button 561 may be implemented by using all configurations through which the user inputs a predetermined control command of the input pen 500-2 by touching with user's finger, such as a touch panel, a touch screen, and a mechanical button.

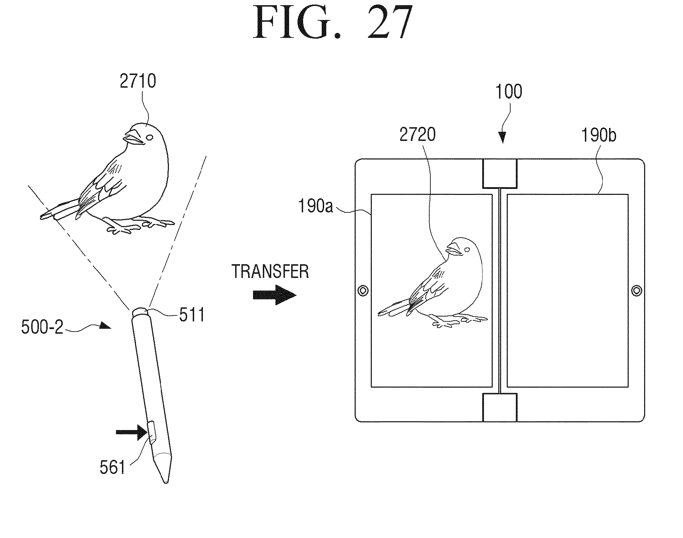

In an exemplary embodiment of the present invention, the button 561 may protrude from an outside surface of the input pen 500-2 and may be mechanically pressed as illustrated in FIG. 27. The button may be at least one of a wheel button, a push button, and a switch button.

By pressing the button 561 of the input pen 500-2 or pressing the button 561 and then releasing the button 561, the user transmits a predetermined command to the multi display apparatus 100 through the input pen 500-2. The button 561 is formed penetrating through a side surface of the housing 551 and is supported by a spring in the housing 551. Therefore, the button 561 is inserted into the housing 551 when being pressed and restores to its original state due to a restoring force of the spring when being released.

When the button 561 is pressed, the controller 520 controls the photographer 511 to start photographing and controls the communicator 530 to transmit the photographed image data to the multi display apparatus 100.

The multi display apparatus 100 may display the image data which is received from the input pen through at least one of the first and second displays 190a and 190b. The user may perform various manipulations such as storing, deleting, editing, forwarding, and attaching, while allowing the user to view the displayed image data.

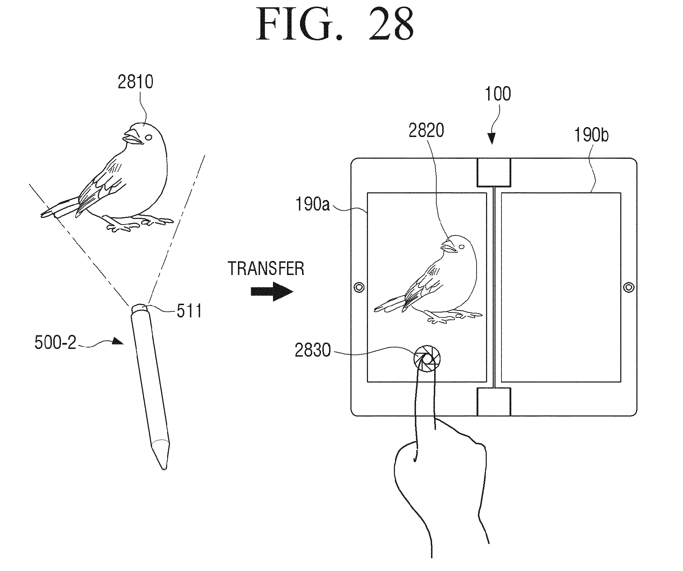

FIGS. 27 and 28 are views illustrating a method of photographing when the input pen 500-2 photographs an image and transmits the photographed image to the multi display apparatus 100 according to an exemplary embodiment of the present invention.

For example, as illustrated in FIG. 27, when the button 561 of the input pen 500-2 is pressed, the photographer 511 photographs a subject 2710, for example, a bird. When the button 561 is pressed again, photographed image data is transmitted to the multi display apparatus 100. However, even when the button 561 is not pressed after the subject has been photographed, the photographed image may be automatically transmitted to the multi display apparatus 100. A left display, that is, the first display 190a, of the multi display apparatus 100 displays an image 2720 of the photographed bird.

In FIG. 28, a photographing button 2830 to perform photographing is provided on the multi display apparatus 100. The input pen 500 may transmit a live view on a subject 2810 to the multi display apparatus 100. The controller 130 may display the live view on at least one of the first and second displays 190a and 190b. In FIG. 28, the live-view of the subject 2810 is displayed as an image 2820 only on the left display that is, the first display 190a. The user may touch the live view when he/she wants to photograph the subject 2810 while viewing the live view.

To achieve this, the multi display apparatus 100 includes a touch screen. As such, when the photographing button 2830 is displayed on the at least one of the first and second displays 190a and 190b, which is a touch screen, the user photographs the subject 2810 by touching the button 2830, thereby capturing the image 2820. However, the photographing button 2830 may not be displayed. In this case, the user may photograph an image by touching a predetermined region of the at least one of the first and second displays 190a and 190b.

Hereinafter, various scenarios if the photographing function of the input pen 500-2 is utilized will be explained.

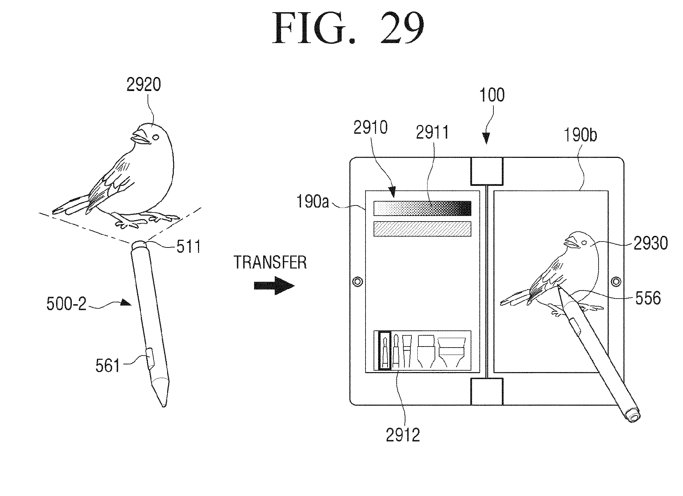

FIG. 29 is a view illustrating a method of reproducing a natural color using the input pen 500-2 with the above-described photographing function according to an exemplary embodiment of the present invention.

In FIG. 29, a subject 2920 is a bird and the user photographs the bird by placing the photographer 511 of the input pen 500-2 in the proximity of the bird's wing. As illustrated in FIG. 27, the user may photograph the bird by pressing the button 561 of the input pen 500-2. The photographed image 2930 may be transmitted to the multi display apparatus 100 through the communicator 530, and the multi display apparatus 100 displays the transmitted image on the at least one of the first and second displays 190a and 190b. The multi display apparatus 100 may display various tools or menus that are applicable to the photographed image on the other of the at least one of the first and second displays 190a and 190b.

For example, as illustrated in FIG. 29, a palette 2910 that detects a color of the photographed image and displays a location of the color on color coordinates may be displayed on an upper end of the left display, that is, the first display 190a, of the multi display apparatus 100. The user may identify a color 2911 on the palette 2910 and may change the color 2911 according to his/her own taste. Also, a tool set 2912 may be displayed on a lower end of the left display, that is, the first display 190a. The tool set 2912 indicates a type of a pen tool currently set and utilized by the input pen 500-2. For example, there are many types of pen tools such as a thin color pencil, a thick color pencil, a thin brush to perform oil painting, a ball-pen, a wide brush to perform oil painting, a thin brush to perform watercolor painting, and a wide brush to perform watercolor painting. The user may select the type of pen tool to be utilized by the input pen 500-2 according to a user's preference. For example, the user may color in a sketch with thin color pencils. In this case, the user selects the thin color pencil from the tool set 2912 by touching (tapping) the icon of the thin color pencil with user's hand or the input pen 500-2. In FIG. 29, the thin color pencil is selected to be utilized by the input pen 500-2, and, when the user touches (taps) a picture of the right display, which is the second display 190b, through the pen point 556 of the input pen 500-2, the detected color or texture is reproduced at the touch point and displayed.

However, the above example is merely an exemplary embodiment of the present invention. When the color 2911 of the photographed image 2930 is detected through the input pen 500-2, the first and second displays 190a and 190b of the multi display apparatus 100 may display an image different from the above photographed image 2930. For example, although not illustrated, a name of the detected color may be displayed on the left display, which is the first display 190a, and a box indicating that the color 2911 may be displayed. As such, the user can identify the name of the detected color and the color intuitively.

Besides the color, a texture may be detected from the photographed image, and, when the user touches (taps) a picture on the display through the input pen 500-2, the texture may be reproduced at the touch point.

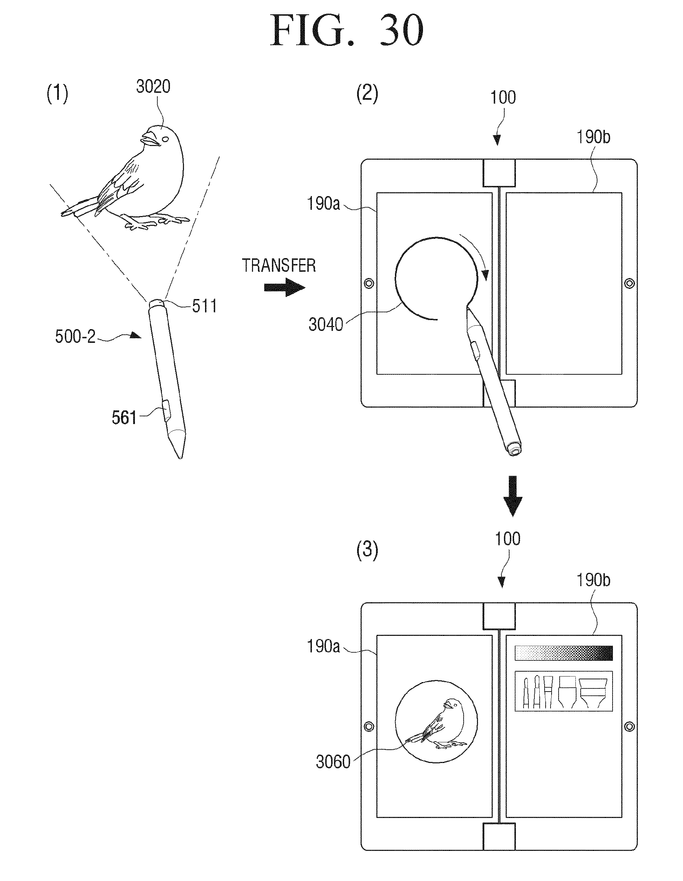

FIG. 30 is a view illustrating a method of editing an image using the input pen 500-2 with the above-described photographing function according to an exemplary embodiment of the present invention.

Referring to FIG. 30, the user may photograph a subject 3020 using the input pen 500-2 in the same way as in the above-described exemplary embodiment of the present invention (view (1) of FIG. 30). The photographed image is transmitted to the multi display apparatus 100.

On the other hand, the user may specify a region 3040 into which the photographed image is to be inserted on at least one of the first display 190a and the second display 190b using user's finger or the input pen 500-2. In FIG. 30, the user may specify the region 3040 by drawing a circle.

When the region is specified (view (2) of FIG. 30), the controller 130 of the multi display apparatus 100 controls the at least one of the first and second displays 190a and 190 to display a photographed image 3060 in the specified region 3040 (view (3) of FIG. 30). Accordingly, the photographed image 3060 may be adjusted to have a size or shape according to a size or shape of the specified region 3040. For example, when the user performs drag input to the display circularly, the photographed image 3060 is edited as a circle and is displayed in the specified circular region 3040.

The image 3060 photographed by the input pen 500-2 may be used through various applications.

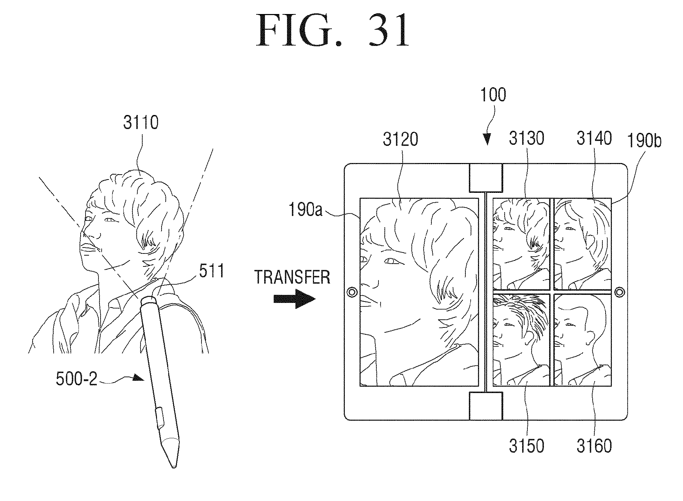

FIG. 31 is a view illustrating a situation in which a hair cutting application used in a beauty salon is executed according to another exemplary embodiment of the present invention.

When the user has his/her hair trimmed in a beauty salon, it is difficult for the user to view his/her profile or hair on the back of his/her head. Although the user may check his/her hair by viewing an image reflected from a mirror, it may be difficult for the user to accurately check his/her hair using the reflected image. As such, the present invention allows a customer's profile or the back of the customer's head to be photographed using the input pen 500-2, thereby transmitting a photographed image to the multi display apparatus 100 to be displayed on the at least one of the first and second displays 190a and 190b.

As illustrated in FIG. 31, a current photographed image 3120 is identified through the left display, which is the first display 190a, and superimposed images 3130 through 3160, which are generated if a user's hair style is changed, may be displayed on the right display, which is the second display 190b. That is, an image 3130 showing a current state of the user's hair may be displayed on the at least one of the first and second displays 190a and 190b, which an image 3140 showing a change to straight hair, an image 3150 showing a change to a funky style, and an image 3160 showing a change to short hair may also be displayed on the same at least one of the first and second displays 190a and 190b. The customer may directly check his/her profile or back of the head through the first and second displays 190a and 190b without viewing an image reflected from a mirror. The above-described exemplary embodiment of the present invention is not limited to the hair cutting application that is used in a beauty salon, and may be used in various exemplary embodiments of the present invention.

Hereinafter, configurations and operations of the input pen 500-2 and the multi display apparatus 100 that may detect an object from a photographed image according to an exemplary embodiment of the present invention will be explained.

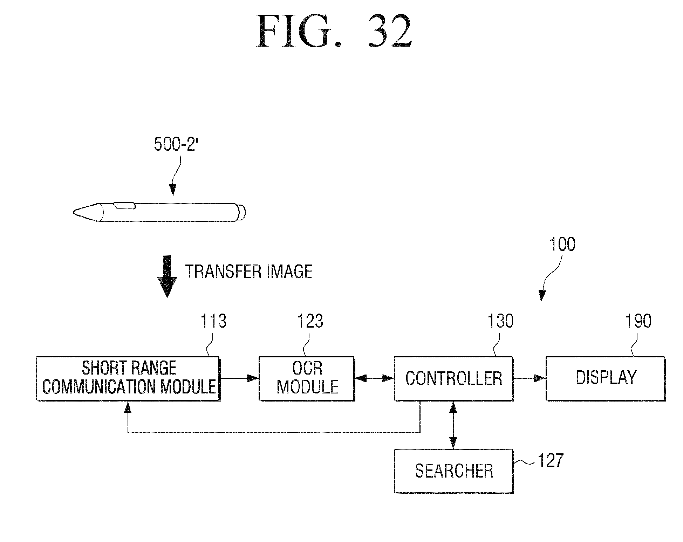

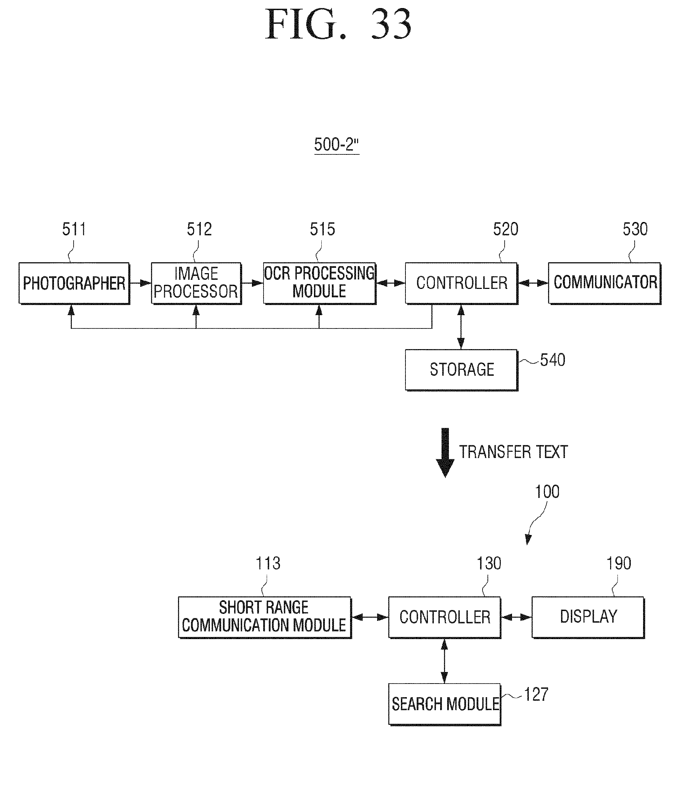

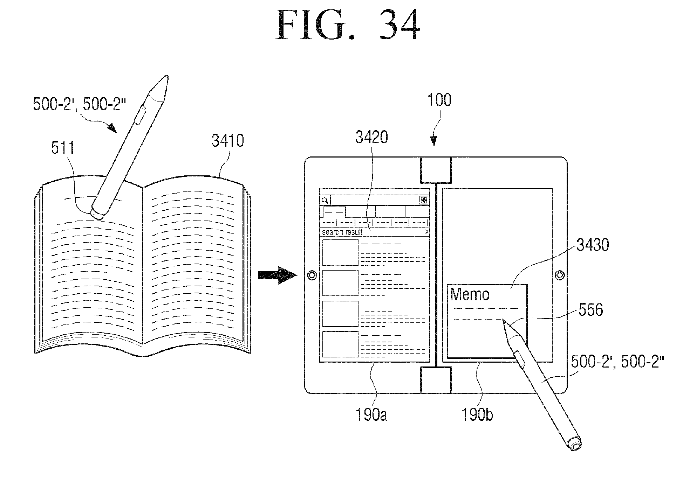

FIGS. 32 and 33 are block diagrams illustrating configurations of an input pen 500-2', an input pen 500-2", and a multi display apparatus 100, which perform optical character recognition (OCR) according to various exemplary embodiments of the present invention. FIG. 34 is a view illustrating a situation in which an OCR function is performed through the input pen 500-2', the input 500-2", and the multi display apparatus 100 of FIG. 32 or 33.

The input pen with the photographing function described above may be used to perform the OCR. That is, the input pen may analyze a photographed image and extract a character.

Referring to FIG. 32, the input pen 500-2' transmits the photographed image to the multi display apparatus 100, and the multi display apparatus 100 performs the OCR. In this case, the input pen 500-2' includes a same configuration as that of the input pen 500-2 described above.

However, although not illustrated in the drawings, the input pen 500-2' may be used to interpret a mathematical equation. The input pen 500-2' transmits the photographed image to the multi display apparatus 100, and the multi display apparatus 100 analyzes the photographed image, detects a mathematical equation, performs a search regarding the mathematical equation or identifies the detected mathematical equation, and calculates the mathematical equation using a predetermined algorithm. A result of the calculating may be displayed on the first and second displays 190a and 190b.

The multi display apparatus 100 may include a short range communication module 113, an OCR processing module 123, a controller 130, the first and second displays 190a and 190b, and a searcher 127.

Each element has the same configuration as described above except for the following description.

The short range communication module 113 receives the photographed image from the input pen 500-2' using short range communication technology. If the received image has not been processed, the image is transmitted to an image processor (not illustrated). When image data which has been processed is received, the image data is transmitted to the OCR processing module 123.

The OCR processing module 123 is a module that analyzes an image and detects a character. The OCR processing module 123 may be stored in the storage 170 in a form of a user application executable by the user and may be executed by the controller 130, or may be included as an element of the multi display apparatus 100 in a form of an independent chipset. The OCR embraces various technologies to detect various characters included in an image. For example, if an image represents a specific mathematical equation besides characters, numbers, and signs, the OCR processing module 123 may detect a mathematical sign and a number included in the mathematical equation. However, in the case of a mathematical equation, a separate mathematical equation processing module (not illustrated) may extract a mathematical equation from an image, calculate the mathematical equation, and transmit a result of searching to the controller 130. The OCR processing module 123 detects a character from an image using various OCR algorithms. The OCR algorithm is well known to one of ordinary skill in the art, and is not a technical feature of exemplary embodiments of the present invention, and thus is not described in detail.

The controller 130 controls the OCR processing module 123 to detect character data from the image received through the short range communication module 113, and, when the character is detected, searches the character through the searcher 127 and displays the character on at least one of the first and second displays 190a and 190b. Also, the controller 130 stores the detected character in the storage 170 if necessary.

The searcher 127 performs a search on the detected character. A search engine is not limited and the searcher 127 may perform a search through the Internet or from among the data stored in the storage 170. The searcher 127 transmits a result of searching to the controller 130.

FIG. 33 is a block diagram illustrating an input pen 500-2" that includes an OCR processing module.

Referring to FIG. 33, an input pen 500-2" includes a photographer 511, an image processor 512, an OCR processing module 515, a controller 520, a storage 540, and a communicator 530.

The storage 540 stores information on a character that is output from the OCR processing module 515.

Since the above elements have the same names and the same functions as those of the input pen 500-2' and the multi display apparatus 100 described above, a redundant explanation is omitted.

The multi display apparatus 100 receives TEXT information indicating a result of detecting a character from a photographed image from the input pen 500-2", stores the TEXT information or performs a search through the searcher 127, and displays a result of searching on the display 190.

Referring to FIG. 34, when reading a book 3410, the user photographs a part that the user wants to look up through the photographer 511 of the input pen 500-2' or 500-2". The photographed image is transmitted to the multi display apparatus 100 through the communicator 530. If the OCR processing module 515 is included in the input pen 500-2' or 500-2", text information according to a result of OCR is transmitted to the multi display apparatus 100. The multi display apparatus 100 performs a search through the searcher 127. A result of searching 3420 is displayed on the left display, which is the first display 190a. The user activates a memo pad 3430 by touching the right display, which is the second display 190a, with the pen point 556 of the input pen 500-2 (tap), makes a note, and stores the result of the searching or edit it.

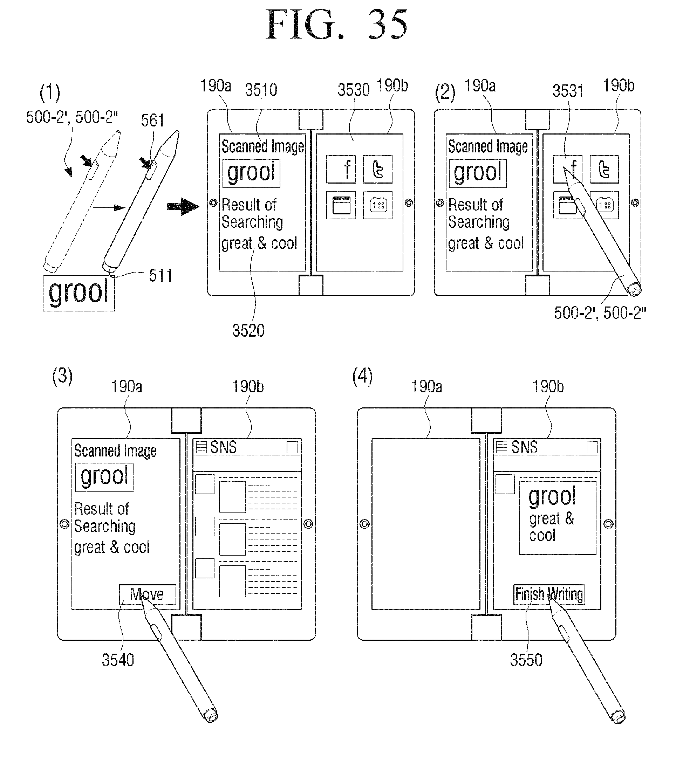

FIG. 35 is a view illustrating the input pen 500-2' or 500-2" and the multi display apparatus 100 of FIG. 32 or 33 which perform an OCR function according to another exemplary embodiment of the present invention.

The user may come across a word that he/she does not know when reading a book or seeing a signboard on the street. The user may want to know what a word "grool" written on a signboard of a restaurant means. The user places the photographer 511 near the corresponding word while pressing the button 561 of the input pen 500-2' or 500-2", scans the word by dragging the input pen 500-2' or 500-2" across the word, and places the input pen 500-2' or 500-2" back (view (i) of FIG. 35). The photographer 511 scans the word "grool", and transmits text data indicating that characters 'g', 'r', 'o', 'o', and 'l' are detected from the scanned image by the OCR processing module 515, or the "grool" image itself to the multi display apparatus 100. The multi display apparatus 100 transmits the received text data or text data indicating that characters 'g', 'r', 'o', 'o', and 'l' are detected from the "grool" image by the OCR processing module 515 to the searcher 127. The searcher 127 performs a search and the controller 130 displays a result of searching, "great & cool", on the left display, which is the first display 190a. The right display, which is the second display 190b, displays an application icon 3530 which may be used by the user. The user may want to upload the result of the searching to social network service (SNS). When the user selects an SNS icon 3531 with the input pen 500-2' or 500-2", the right display, which is the second display 190b, executes the SNS (view (2) of FIG. 35). The left display, which is the first display 190a, displays a "Move" button 3540, and, by touching the "Move" button 3540 with the input pen 500-2' and 500-2" (view (3) of FIG. 35), an SNS screen in which detected text data and results of searching are written is displayed on the right display, which is the second display 190b. When the user touches (taps) a "Finish Writing" button 3550 with the input pen 500-2' and 500-2", a sentence "Grool: great & cool" is written on the SNS account (view (4) of FIG. 35).

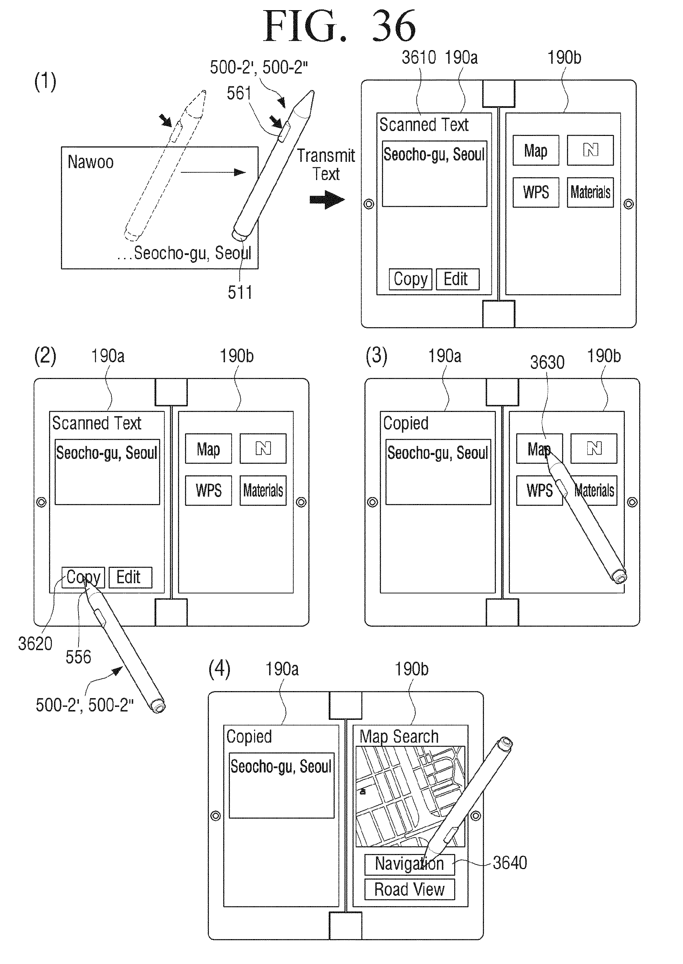

FIG. 36 is a view illustrating the input pen 500-2' or 500-2" and the multi display apparatus 100 of FIG. 32 or 33 that perform an OCR function according to another exemplary embodiment of the present invention.

The user may perform navigation using the OCR function. FIG. 36 illustrates an exemplary embodiment of this situation.

The user photographs an address which is written on a business card received from other people through the photographer 511 of the input pen 500-2' or 500-2". In the same way as in the above-described exemplary embodiment, the user places the photographer 511 on the portion of the business card to be scanned, and, when the user drags the input pen 500-2' or 500-2" while pressing the button 561 and then releases the button 561, a region of the business card corresponding to a location where the photographer 511 moves is scanned. The OCR processing module 515 detects a character from the photographed image. Text information according to a result of detecting is transmitted to the multi display apparatus 100. The left display, which is the first display 190a, of the multi display apparatus 100 displays an address 3610 written on the business card, that is, the scanned text (view (1) of FIG. 36). If necessary, the user may copy or edit the address 3610 by touching (tapping) a "copy" or "edit" button 3620 with the pen point 556 of the input pen 500-2' or 500-2". In the same way as in the above-described exemplary embodiment, the right display, which is the second display 190b, displays icons of usable applications (view (2) of FIG. 36). The user selects a map application 3630 (view (3) of FIG. 36). Then, the map application 3630 is displayed on the right display, which is the second display 190b. The user performs navigation by touching (tapping) a navigation button 3640. The navigation searches to find the address 3610 that includes the texts recognized as a result of the OCR, and runs a navigation system.

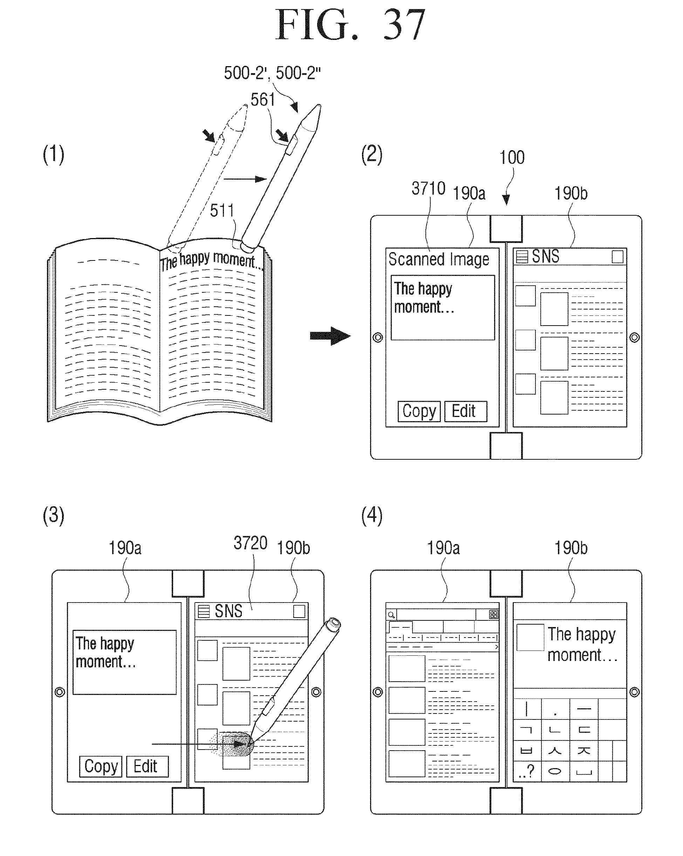

FIG. 37 is a view illustrating the input pen 500-2' or 500-2" and the multi display apparatus 100 of FIG. 32 or 33 that perform an OCR function according to another exemplary embodiment of the present invention.

As illustrated in FIG. 37, the user may read a phrase "the happy moment..." in a book, have it recognized through OCR, and may upload it on his/her own SNS. Similar to above-described exemplary embodiment of the present invention, the user places the photographer 511 of the input pen 500-2' or 500-2" near the phrase of the book to be photographed and scans the phrase while pressing the button 561. The user releases the button 561 at a point where the scanning finishes. When the button 561 is released, the scanning is completed, the photographed image is transmitted to the multi display apparatus 100, and the left display, which is the first display 190a, of the multi display apparatus 100 displays a scanned image 3710, "the happy moment" (view (1) of FIG. 37). As described above, the OCR module of the input pen 500-2' or 500-2" may detect a character or may transmit only an image without detecting a character. The user drags the scanned image 3710 to the right display, which is the second display 190b using the input pen 500-2' or 500-2" (view (2) of FIG. 37). An SNS 3720 is activated on the right display, which is the second display 190b (view (3) of FIG. 37), and the image dragged by the user is written on the SNS 3720 directly and "the happy moment" is displayed on the SNS 3720 (view (4) of FIG. 37).

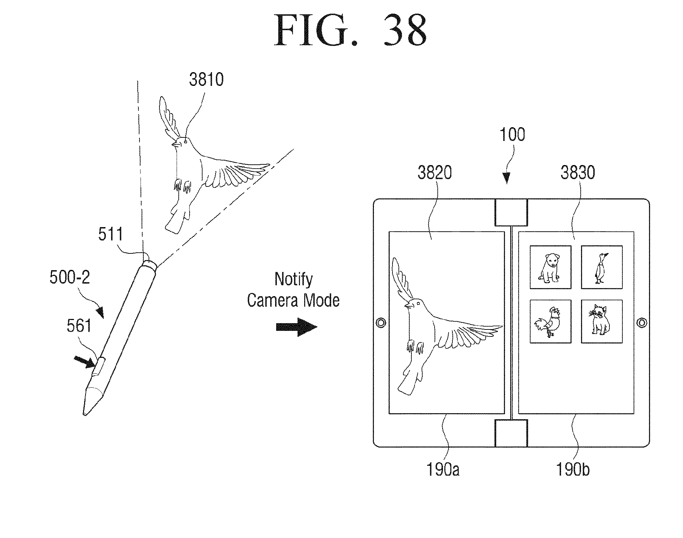

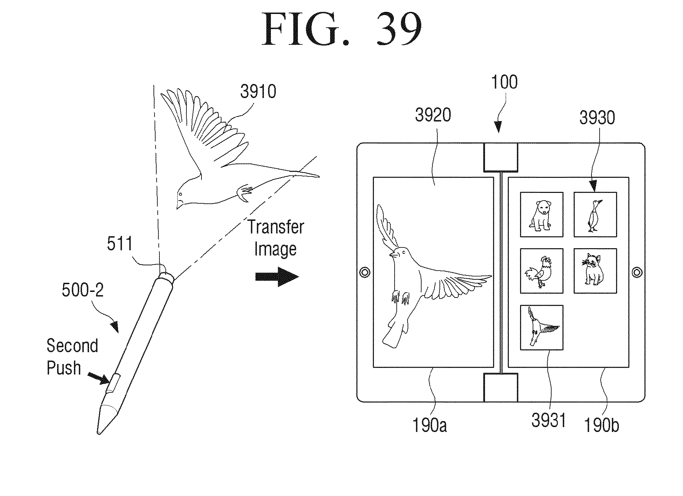

FIGS. 38 and 39 are views illustrating the multi display apparatus 100 that, when an object is photographed by the input pen 500-2, displays the photographed image.

Referring to FIG. 38, the user activates a camera mode in the input pen 500-2 by pressing the button 561 of the input pen 500-2. When the button 561 is pressed, the communicator 530 of the input pen 500-2 transmits a signal informing that a current mode is a camera mode to the multi display apparatus 100, and the multi display apparatus 100 receives the signal informing that the current mode is the camera mode from the input pen 500-2 through the communicator 110, and displays a photographed image on the left display, which is the first display 190a, on a real time basis. In this case, a still image which is photographed at predetermined intervals is transmitted to the multi display apparatus 100, and the multi display apparatus 100 displays the still image on the left display, which is the first display 190a, of the multi display apparatus 100 as soon as it is received, such that the photographed image is practically displayed in the form of a moving image 3820. That is, as shown in FIG. 38, a real bird 3810 to be photographed by the input pen 500-2 is substantially the same as a bird image 3820 displayed on the left display, which is the first display 190a, of the multi display apparatus 100, except for a slight delay of time. In this case, the right display, which is the second display 190b, displays images that were previously photographed in a thumbnail form 3830.

Referring to FIG. 39, by pressing the button 561 of the input pen 500-2 once more, the user determines a still image captured at a moment when the button 561 is pressed as a final image. In this case, the finally determined still image is transmitted to the multi display apparatus 100, and the left display, which is the first display 190a, of the multi display apparatus 100 displays the finally determined and photographed still image 3920. Accordingly, a bird's motion 3910 after that is substantially different from the still image 3920, which is a bird image, displayed on the multi display apparatus 100. Also, on the right display, which is the second display 190b, of the multi display apparatus 100, a thumbnail image 3931 of the finally determined and photographed still image is added to thumbnail images 3930.

However, the displays of the multi display apparatus 100 described above are merely examples and any other modification is possible as long as the configuration of the exemplary embodiments of the present invention is included.

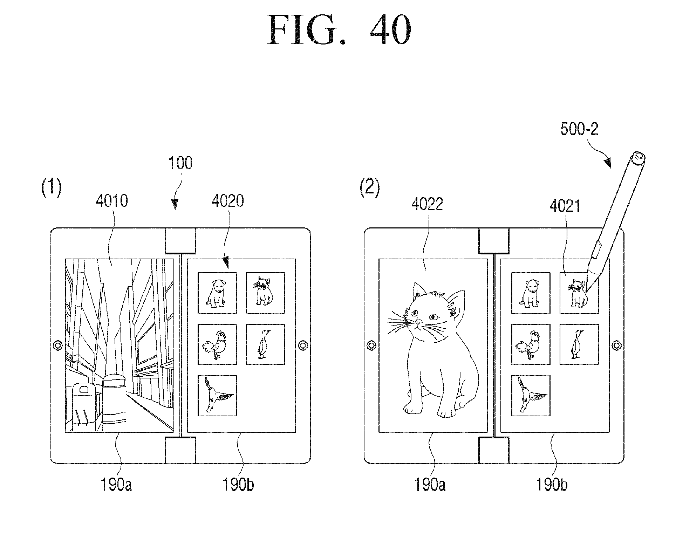

FIG. 40 is a view illustrating a photo album of the multi display apparatus 100 according to an exemplary embodiment of the present invention. An image, which is photographed in the above-described method or received in other methods, may be displayed in the form of a photo album. The controller 130 may control to read out an image stored in the storage 170 and display the image on one of the displays 190a and 190b in a thumbnail form. In this case, when the user touches (taps) one of the displayed thumbnail images 4020 with the input pen 500 or user's hand, the corresponding image may be displayed on the other display on which the thumbnail images are not displayed in full size. When one image is displayed in full size and the user touches (taps) another image from among the thumbnail images, one image displayed in full size is replaced with another image. That is, when a full size image 4010 is displayed on the left display, which is the first display 190a, as illustrated in view (1) of FIG. 40 and a cat image thumbnail 4021 is touched (tapped) from among the thumbnail images of the right display, which is the second display 190b, the full size image 4010 is replaced with a full size image of the cat image 4022 and the cat image 4022 is displayed on the left display, which is the first display 190a, as illustrated in view (2) of FIG. 40.

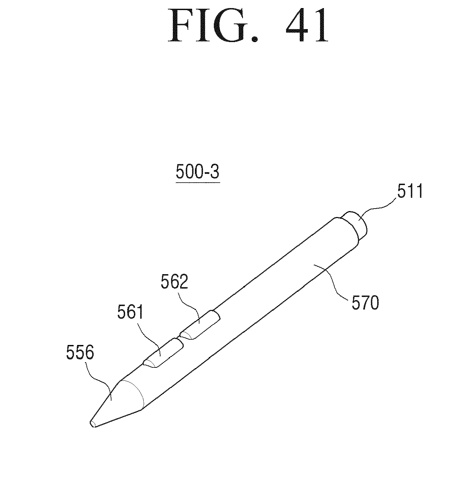

FIG. 41 is a view illustrating an exterior of an input pen 500-3 according to various exemplary embodiments of the present invention.

As illustrated in FIG. 41, the above-described button 560 of the input pen 500-3 according to various exemplary embodiments may include two buttons 561 and 562. The two buttons may be used as a means to diversify input of the input pen 500-3. For example, when the input pen 500-3 includes a photographing function like the above-described input pen 500-2, and when the lower button 561 is pressed, a still image may be photographed, and, when the lower button 562 is pressed, a moving image may be photographed. Also, when the user touches the upper button 562 for more than a predetermined time (touch & hold), continuous still images may be photographed. The input pen 500-3 includes the same configuration as that of the above-described input pen 500-2 and a redundant explanation is omitted.

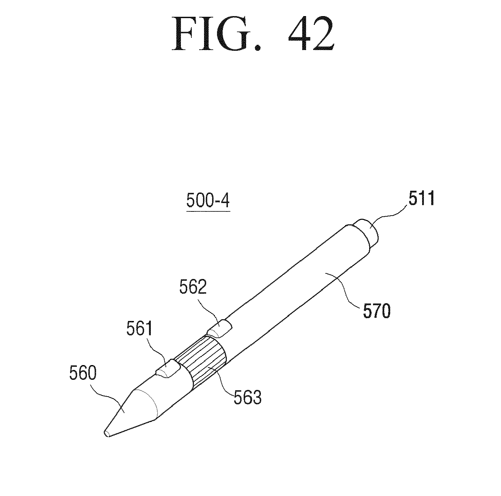

FIG. 42 is a view illustrating an exterior of an input pen 500-4 according to various exemplary embodiments of the present invention.

As illustrated in FIG. 42, the input pen 500-4 according to various exemplary embodiments includes the two buttons 561 and 562 of the above-described button 560, and further includes a rotatable wheel 563. The wheel 563 may be used to perform a scrolling function. That is, when the wheel 563 is rotated in one direction, a scroll up signal is generated and transmitted to the multi display apparatus 100 through the communicator 530, and, when the wheel 563 is rotated in the other direction, a scroll down signal is generated and transmitted to the multi display apparatus 100 through the communicator 530. The multi display apparatus 100 performs an event corresponding to the scroll up signal or the scroll down signal.

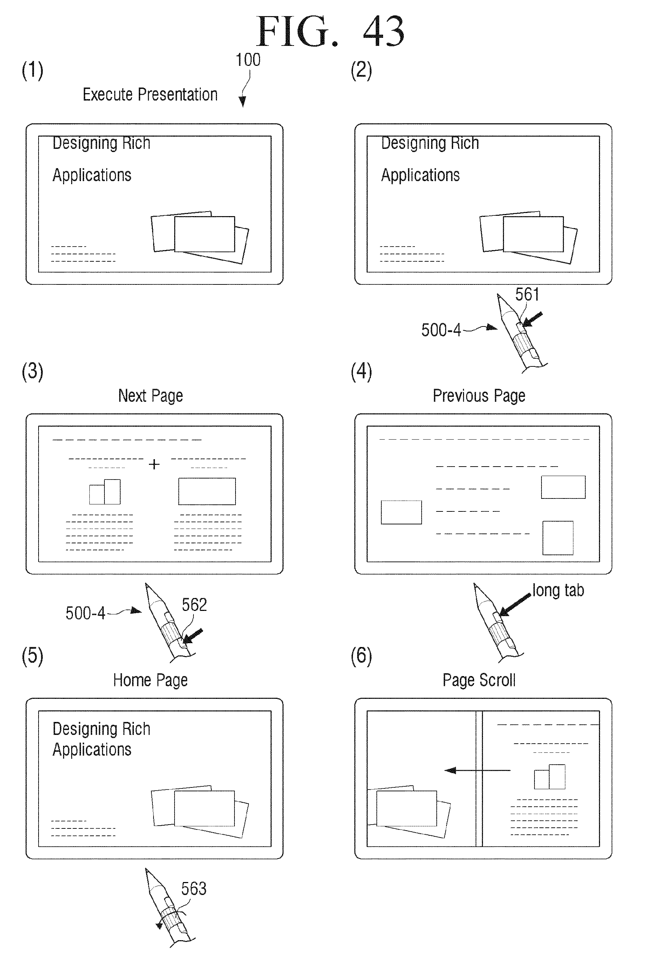

FIG. 43 is a view illustrating an example of a method of controlling execution of a presentation using the input pen 500-4 of FIG. 42 and the multi display apparatus 100.

In FIG. 43, the input pen 500-4 may be used as a remote controller to control a presentation that is executed in the multi display apparatus 100.

That is, when a presentation is executed in the multi display apparatus 100, the user may control to display a next page of the presentation by pressing the lower button 561 of the input pen 500-4 one time. That is, when the lower button 561 of the input pen 500-4 is pressed, a corresponding signal is generated and transmitted to the multi display apparatus 100 through the communicator 530, and the controller 130 of the multi display apparatus 100 generates a control command to display a next page of the presentation being executed and controls to display the next page of the presentation (views (1), (2), and (3) of FIG. 43).

The user may also use the input pen 500-4 to control the multi display apparatus 100 to display a previous page of the presentation by pressing the upper button 562 of the input pen 500-4. That is, when the upper button 562 of the input pen 500-4 is pressed, a corresponding signal is generated and transmitted to the multi display apparatus 100 through the communicator 530, and the controller 130 of the multi display apparatus 100 generates a control command to display the previous page of the presentation being executed and controls to display the previous page of the presentation (view (4) of FIG. 43).

The user may want to return to the first page of the presentation. This is because the first page of the presentation may include information on a table of contents of the presentation and the user may need to review the table of contents while executing the presentation. In order to return to the first page, the user may press the lower button 561 of the input pen 500-4 during longer than a predetermined duration of time (touch & hold). That is, when the lower button 561 of the input pen 500-4 is pressed during more than the predetermined time (touch & hold), a corresponding signal is generated and transmitted to the multi display apparatus 100 through the communicator 530, and the controller 130 of the multi display apparatus 100 generates a control command to display the first page of the presentation being executed and controls to display the first page of the presentation (view (5) of FIG. 43). Furthermore, when the upper button 562 of the input pen 500-4 is pressed during longer than the predetermined time (touch & hold), a corresponding signal is generated and transmitted to the multi display apparatus 100 through the communicator 530, and the controller 130 of the multi display apparatus 100 converts the signal into a control command to display a final page of the presentation being executed, and controls the multi display apparatus 100 to display the final page of the presentation (not illustrated).

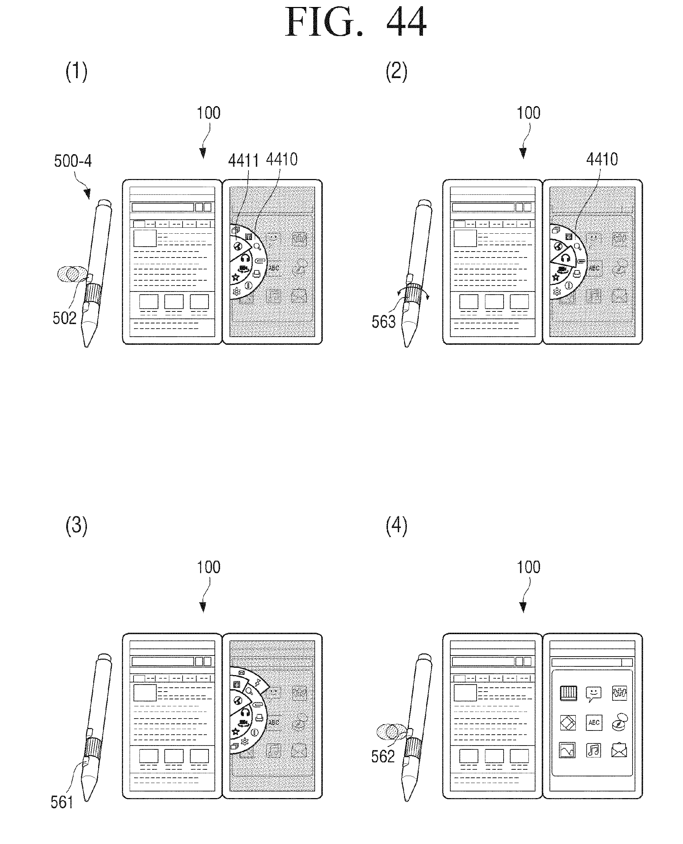

The user may turn over the pages by naturally scrolling in order to provide a smoother presentation or transmit continuous information effectively. In this case, the user may naturally scroll to the next page or previous page by scrolling the wheel 563 of the input pen 500-4. That is, the user may naturally scroll to the next page by scrolling up, and may naturally scroll to the previous page by scrolling down. However, the above scroll up and down directions are merely examples and the opposite directions may be implemented. When the wheel 563 of the input pen 500-4 is rotated in a predetermined direction, a corresponding signal is generated and transmitted to the multi display apparatus 100 through the communicator 530, and the controller 130 of the multi display apparatus 100 displays an image showing that the presentation is naturally scrolled to the next page, generates a control command to display the next page finally, and controls to scroll and display the pages of the presentation (view (6) of FIG. 42). FIG. 44 is a view illustrating an example of a method of executing an input tool using the input pen 500-4 of FIG. 42 and the multi display apparatus 100.

Referring to FIG. 44, the user may display a tool bar 4410 on the right display, which is the second display 190b, by double tapping the upper button 562 of the input pen 500-4 (view (1) of FIG. 44). At this time, the screen on which the tool bar is displayed is dimmed. Then, when the user rotates the wheel 563, menu items 4411 on the tool bar 4410 are activated in sequence. For example, when the wheel 563 is rotated in a clockwise direction with the pen point of the input pen 500-4 down, upstream menu items on the display are activated in sequence, and, when the wheel 563 is rotated in a counterclockwise direction, downstream menu items on the display are activated in sequence (view (2) of FIG. 44). At this time, when the lower button 561 of the input pen 500-4 is pressed, the activated menu item is selected. The menu items included within the tool bar may be formed in a hierarchical structure as illustrated in FIG. 44. That is, when a certain menu item of a first layer is selected, a menu of a second layer related to the selected menu item is displayed, and, when a certain menu item of the second layer is selected, a menu of a third layer related to the selected menu item is displayed (view (3) of FIG. 44). When selection of a menu item of a lowermost layer is completed, the tool bar 4410 automatically disappears. However, the user may have the tool bar 4410 disappear automatically by double tapping the upper button 562 of the input pen 500-4. When the tool bar 4410 disappears, the display gets out of the dimmed screen and is restored to its original screen (view (4) of FIG. 44).

Hereinafter, a configuration of an input pen 500-5 with a motion sensing function according to various exemplary embodiments of the present invention will be explained.

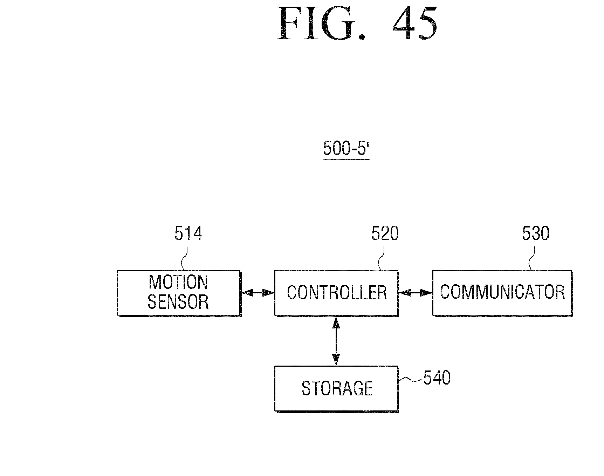

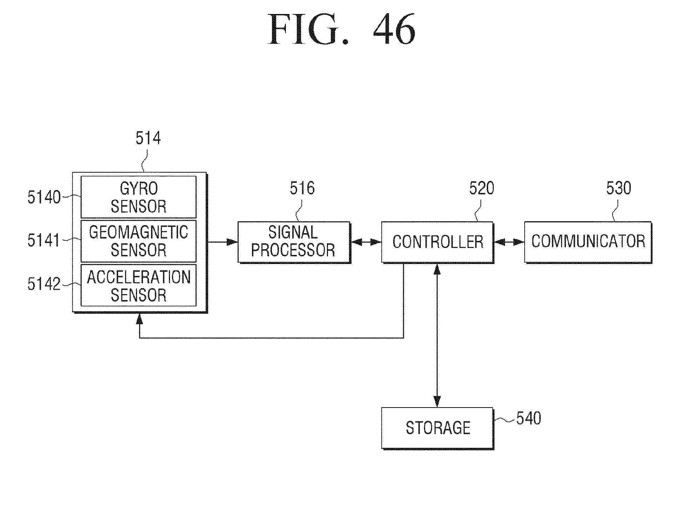

Referring to FIGS. 45 and 46, the input pens 500-5 and 500-5', according to various exemplary embodiments of the present invention includes a motion sensor 514, a controller 520, a storage 540, and a communicator 530.

The feature and the function of each element of the input pen 500-5 are same as those of the same name element except for the features newly explained below.

Referring to FIGS. 45 and 46, the motion sensor 514 senses a motion of the input pen 500-5 and transmits a result of sensing to the controller 520.

Referring to FIG. 45, the controller 520 controls to transmit the motion of the input pen 500-5 that is sensed by the motion sensor 514 to the multi display apparatus 100 through the communicator 530, and to store information on the motion of the input pen 500-5 in the storage 540.

FIG. 46 is a view illustrating another exemplary embodiment of the present invention of an input pen 500-5' similar to that of FIG. 45. As illustrated in FIG. 45, the motion sensor 514 may include a gyro sensor 5140, a geomagnetic sensor 5141, and an acceleration sensor 5142, but is not limited thereto. Also, the motion sensor 514 does not necessarily include all of the sensors and may include at least one of the sensors according to an exemplary embodiment of the present invention.

The gyro sensor 5140 may be used to determine a motion or a position by detecting a rotation speed. The acceleration sensor 5142 may be used to sense acceleration of a moving object, but may be used mainly to sense acceleration of gravity. Also, the geomagnetic sensor 5141 is a sensor to sense azimuth by detecting a flow of a magnetic field, and may be used to sense a direction. Besides these, an IR sensor to sense IR of the object, and a pressure sensor to sense a magnitude of applied pressure may be included.

The input pen 500-5' of FIG. 46 further includes a signal processor 526, unlike the input pen 500-5 of FIG. 45. The signal processor 516 performs signal-processing that is necessary according to a result of sensing. For example, when the gyro sensor 5140 senses a rotation speed, the signal processor 516 may correct an error or may normalize a sensing value by multiplying by a weight according to a purpose. The signal processor 516 may be included in the multi display apparatus 100 as a hardware configuration, and may perform the same function on an application terminal.

Hereinafter, the input pen 500-5 including the motion sensor 514 and the multi display apparatus according to various exemplary embodiments of the present invention will be explained with reference to the accompanying drawings. Furthermore, the input pen 500-5 may also be referenced interchangeably with the input pen 500-5'.

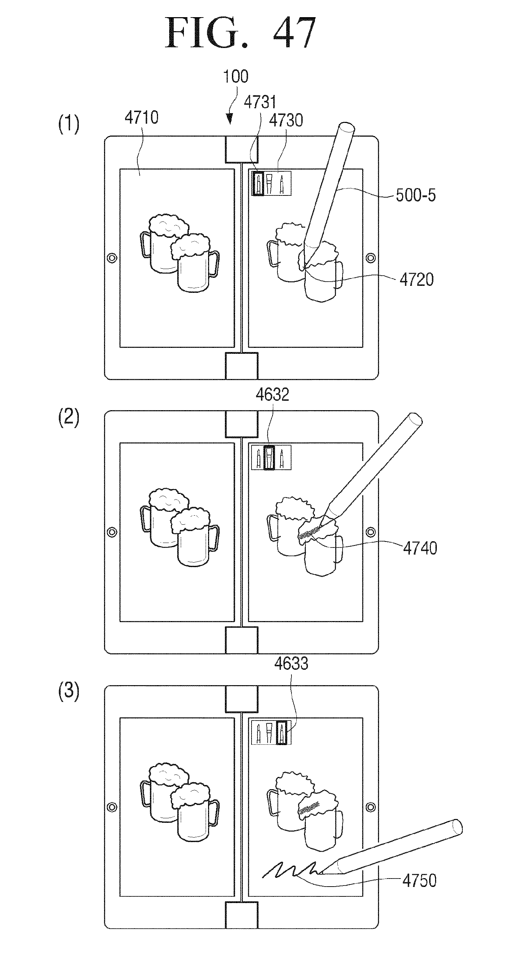

FIG. 47 is a view illustrating a method of performing input on the multi display apparatus 100 by changing settings of the input pen 500-5 according to a tilt of the input pen 500-5 according to an exemplary embodiment of the present invention.

Considering user experiences of drawing a picture, the user may change an angle between a tool and a surface according to a purpose of using the tool. For example, when the user sketches with a pencil, the user holds the pencil almost at a right angle to the surface to draw a precise line. This is because a precise line could be drawn only if an area of a pencil lead in contact with the surface is narrow. In contrast, in order to draw a thick line with the pencil, the angle between the pencil and the surface should be reduced. Since it is common that the pencil lead has a conical shape such that its cross section becomes gradually smaller as it goes downward, the user tilts the pencil to increase the area where the pencil lead and the surface are in contact with each other. Also, when the user wants to color the picture with the pencil in addition to the drawing of the thick line, for example, when the user wants to shade in the drawing using the pencil while drawing a design, the angle between the pencil lead and the surface is minimized. That is, since the side surface of the pencil lead should be in close contact with the surface, the pencil may be used almost in a lying position.

Such a user experience may be used as an exemplary embodiment of the present invention of the input pen 500-5. That is, when the input pen 500-5 touches (taps) at least one of the first display 190a and the second display 190b, the controller 130 of the multi display apparatus 100 may control to perform a different operation according to a direction the input pen 500-5 tilts with reference to the touch surface of the at least one of the first display 190a and the second display 190b.

The degree of tilt of the input pen 500-5 (i.e., the input pen 500-5') with respect to the touch surface may be sensed by the acceleration sensor 5142 of the input pen 500-5. The acceleration sensor 5142 may be used to sense the degree of tilt of the input pen 500-5.

The acceleration sensor 5142 may be implemented by using 2 axes or 3 axes. For example, if the acceleration sensor 5142 is implemented by using a 2-axis acceleration sensor, the acceleration sensor 5142 includes an X axis acceleration sensor and a Y axis acceleration sensor (not illustrated), which intersect each other. If the acceleration sensor 5142 is implemented by using a 3-axis acceleration sensor, the acceleration sensor 5142 includes an X axis acceleration sensor, a Y axis acceleration sensor, and a Z axis acceleration sensor, which are placed in different directions and intersect one another.

The acceleration sensor 5142 converts an output value of each of the X, Y, and Z axis acceleration sensors into a digital value, and provides the digital value to a pre-processor (not shown). The pre-processor (not illustrated) may include a chopping circuit, an amplification circuit, a filter, and an A/D converter. Accordingly, the electric signal output from the 3-axis acceleration sensor is chopped, amplified, filtered, and then converted into a digital voltage value.

The controller 520 performs normalizing to map the pre-processed output signal of each axis within a predetermined range, and calculates a pitch angle and a roll angle using the normalized value.

For example, if the 2-axis acceleration sensor is provided, the controller 520 performs normalizing using the following equation: $\begin{matrix} {Xt}_{norm} = \frac{\left(Xt-{Xt}_{offset}\right)}{{Xt}_{Scale}} \\ {Yt}_{norm} = \frac{\left(Yt-{Yt}_{offset}\right)}{{Yt}_{Scale}} \\ {Xt}_{offset} = \frac{{Xt}_{max} + {Xt}_{min}}{2} , {Xt}_{Scale} = \frac{{Xt}_{max} - {Xt}_{min}}{2} \\ {Yt}_{offset} = \frac{{Yt}_{max} + {Yt}_{min}}{2} , {Yt}_{Scale} = \frac{{Yt}_{max} - {Yt}_{min}}{2}\end{matrix}$

In equation 1, Xt and Yt are output values of X axis and Y axis acceleration sensors, respectively, Xtnorm and Ytnorm are normalized values in the X axis and Y axis acceleration sensors, respectively, Xtmax and Xtmin are a maximum value and a minimum value of Xt, respectively, Ytmax and Ytmin are a maximum value and a minimum value of Yt, respectively, Xtoffset and Ytoffset are offset values of the X axis and Y axis acceleration sensors, and XtScale and YtScale are sensor scale values of the X axis and Y axis acceleration sensors. Xtoffset and Ytoffset, and XtScale and YtScale may be calculated in advance by rotating the input pen 500-5 in which the acceleration sensor 5142 is mounted in multiple times, and may be stored in a storage 540 provided in the acceleration sensor 5142.

The controller 520 may calculate a pitch angle and a roll angle by assigning a normalized value of each axis acceleration sensor of equation 1 to following equation 2: $\begin{matrix}θ = {sin}^{- 1} \left({Xt}_{norm}\right) \\ ϕ = {sin}^{- 1} \left(\frac{{Yt}_{norm}}{cos θ}\right)\end{matrix}$
wherein is a pitch angle and is a roll angle.

The controller 520 determines the degree of tilt of the input pen 500-5 by comparing information on the pitch angle and the roll angle and information pre-stored in the storage 540.

Furthermore, if the acceleration sensor 5142 is implemented by using a 3-axis acceleration sensor, the controller 540 may perform normalizing to map output values of X, Y, and Z axes acceleration sensors which are received through the pre-processor onto values of a predetermined range, and may calculate a pitch angle and a roll angle using the normalized values.

The controller 520 determines the degree of tilt of the input pen 500-5 by comparing information on the pitch angle and the roll angle and information pre-stored in the storage 540.

The tilt value calculated in the above-described method indicates a tilt of the input pen 500-5 with respect to the surface, and the input pen 500-5 transmits the calculated tilt value to the multi display apparatus 100 through the communicator 530.

As described above, the multi display apparatus 100 includes the acceleration sensor 153, and calculates a degree of tilt of the multi display apparatus 100 through the acceleration sensor 153 in a similar method to the above-described method.

The multi display apparatus 100 receives the tilt value of the input pen 500-5 through the communicator 110, and the controller 130 calculates a relative tilt of the input pen 500-5 to a touch surface of the at least one of the first and second displays 190a and 190b, respectively, of the multi display apparatus 100 using the received title value and the title value which is obtained through the acceleration sensor 153 of the multi display apparatus 100. Accordingly, the tilt of the input pen 500-5 towards the touch surface of the multi display apparatus 100 is obtained.

As illustrated in FIG. 47, the left display, which is the first display 190a, includes an original image that has not been edited or altered. Even when an image on the right display, which is the second display 190b, is edited, the original image displayed on the first display 190a remains unchanged.

When the input pen 500-5 has a maximum tilt with respect to the touch surface of the multi display apparatus 100, that is, when the input pen 500-5 has a tilt larger than or equal to a predetermined first value, it is determined that the user holds the input pen 500-5 almost at a right angle with respect to the surface in order to draw a precise line 4720, and the controller 130 may set touch input by the input pen 500-5 to have a thickness of a fine-line pencil 4731, as chosen from a toolset 4730, to draw a precise line. Accordingly, when the user draws a line on the at least one of the first and second displays 190a and 190b with the input pen 500-5, a thinnest line, being the precise line 4720, is displayed on the at least one of the first and second displays 190a and 190b as illustrated in view (1) of FIG. 47.

In contrast, when the input pen 500-5 has an intermediate tilt with respect to the touch surface, that is, when the input pen 500-5 has a tilt less than the predetermined first value and larger than or equal to a predetermined second value, it is determined that the user holds the input pen 500-5 at an intermediate angle with respect to the surface in order to draw a thick line in, and the controller 130 may set touch input by the input pen 500-5 to have a thickness of a thick line pencil 4732 to draw a thick line. Accordingly, when the user draws a line on the display 190a or 190b with the input pen 500-5, a thick line 4740 is displayed on the at least one of the first and second displays 190a and 190b as illustrated in view (2) of FIG. 47.

When the input pen 500-5 has a smallest tilt with respect to the touch surface, that is, when the input pen 500-5 has a tilt less than the predetermined second value, it is determined that the user tilts the input pen 500-5 to be almost parallel with the surface in order to color in view of user experiences, and the controller 130 may set touch input by the input pen 500-5 to show a coloring effect of a color pencil 4733. Accordingly, when the user draws a line on the display 190a or 190b with the input pen 500-5, a thickest line 4750 is displayed on the display 190a or 190b as illustrated in view (3) of FIG. 47.

Also, as illustrated in FIG. 47, a type of a tool corresponding to the thickness of the input pen 500-5 or information on the thickness of the pencil may be highlighted and displayed on the tool set 4730.

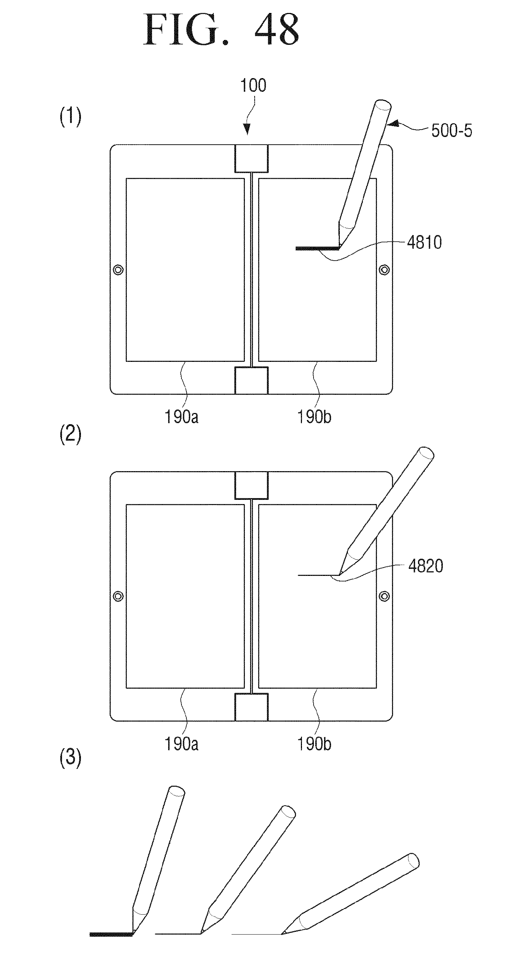

FIG. 48 is a view illustrating a method of performing input on the multi display apparatus 100 by changing settings of the input pen 500-5 according to a tilt of the input pen 500-5 according to another exemplary embodiment of the present invention.

Considering user experiences when using a pen having a pen point, the user bears down with his/her pen to write clearly unlike the case in which the user uses a pen to write normally. At this time, when the user's hand tightens, the user holds the pen more strongly and the pen is naturally pushed up in a direction perpendicular to the surface such that the angle between the pen and the surface increases.

Such a user experience may be utilized in the input pen 500-5. As described above, when the input pen 500-5 touches (tap) at least one of the first and second displays 190a and 190b, the controller 130 of the multi display apparatus 100 may control to perform a different operation according to a degree of tilt of the input pen 500-5 with reference to a touch surface. The degree of tilt of the input pen 500-5 with respect to the touch surface may be sensed through the acceleration sensor 5142 of the input pen 500-5.

When the input pen 500-5 has a maximum tilt with respect to the touch surface, that is, when the input pen 500-5 has a tilt larger than or equal to a predetermined first value, it is assumed that the user bears down with the pen in order to write clearly in view of the above-described user experience. Accordingly, it is determined that the user holds the input pen 500-5 almost at a right angle with respect to the surface in order to draw a clear line, and the controller 130 may set touch input by the input pen 500-5 to have a thickness of a pencil to draw a clear line. Accordingly, when the user draws a line on the display 190a or 190b with the input pen 500-5, a thick and clear line 4810 is displayed on the display 190a or 190b as illustrated in view (1) of FIG. 48. In particular, when the user drags to draw a curved line with the input pen 500-5, a thick straight line may be displayed. That is, curved line input of the user is corrected in the form of a straight line.

On the other hand, when the input pen 500-5 has a small tilt with respect to the touch surface, that is, when the input pen 500-5 has a tilt less than the predetermined first value, it is assumed that the user relaxes his/her hand and uses the pen in view of the above-described user experience. Accordingly, it is determined that the user holds the input pen 500-5 at an intermediate angle with respect to the surface in order to draw a soft line, and the controller 130 may set touch input by the input pen 500-5 to have a thickness of a pencil and an expression to draw a soft. Accordingly, when the user draws a line on the display 190a or 190b with the input pen 500-5, a thin line 4820 is displayed on the display 190a or 190b as illustrated in view (2) of FIG. 48. In this case, a trajectory of the input pen 500-5 is displayed on the display 190a or 190b without being corrected.

Accordingly, a thickness of a displayed line varies according to a tilt of the input pen 500-5 with respect to the touch surface as illustrated in view (3) of FIG. 48, and also, an input line may be corrected in the form of a straight line.

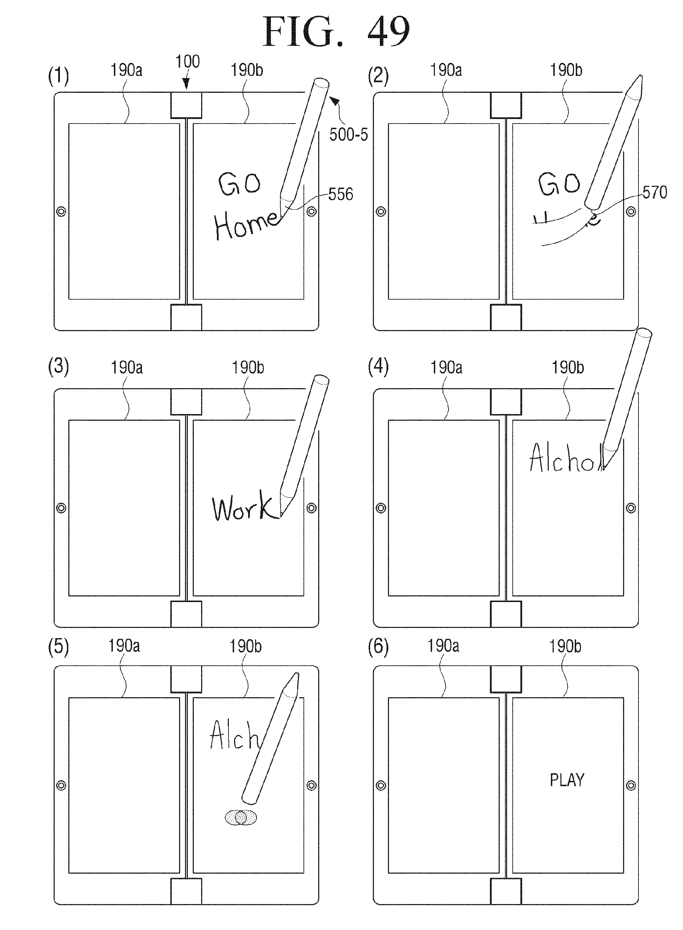

FIG. 49 is a view illustrating an extended exemplary embodiment of the present invention of the input pen 500-5 including the motion sensor 514.

As described above, the motion sensor 514 may sense a motion of the input pen 500-5. For example, when the pen point 560 of the input pen 500-5 faces up, the motion sensor 514 recognizes that the input pen 500-5 is upside down. This situation may correspond to a user experience of using a pencil with an eraser. That is, when the input pen 500-5 is upside down and a touch is input to the multi display apparatus 100, the controller 130 of the multi display apparatus 100 recognizes an eraser mode and deletes input displayed on the display 190a and 190b.

FIG. 49 illustrates an exemplary embodiment of the present invention of an input pen 500-5, such that a user may scribble and/or accidentally delete an input, but may recall original input to be displayed on at least one of the first and second displays 190a and 190b.

In an exemplary embodiment of the present invention of FIG. 49, the user writes "Go Home" on the display 190a or 190b with the pen point 556 of the input pen 500-5 (view (1) of FIG. 49). When the input pen 500-5 is upside down, the multi display apparatus 100 recognizes an eraser mode of the input pen 500-5 and erases the displayed word at a point where touch input is performed in the eraser mode (view (2) of FIG. 49) by a back end 570 of the input pen 500-5. The eraser mode and the function thereof will be explained below. Then, the user writes "Work" with the input pen 500-5 (view (3) of FIG. 49). Then, the user may erase the displayed word in the eraser mode and may write "Alchol" (view (4) of FIG. 49). Also, the user places the input pen 500-5 upside down and double taps the at least one of the first and second displays 190a and 190b with the back end 570 of the input pen 500-5 to display various solutions again. The multi display apparatus 100 recognizes the double tap of the back end 570 as a command to recall previous input of the input pen 500-5 that has been performed from a predetermined time in order of time, and recalls the input that has been previously performed by the input pen 500-5 in order of time. That is, the display 190a or 190b displays a series of processes of writing "Go Home"->erasing->writing "Work"->erasing-> writing "Alchol" in sequence.

The above-described acceleration sensor 5142 recognizes that the input pen 500-5 is upside down (the pen point faces up), and transmits information on the position of the input pen 500-5 to the multi display apparatus 100. At this time, when a touch (tap) is input, the controller 130 of the multi display apparatus 100 erases a point or a line that is displayed since input has been previously performed by the input pen 500-5 at the touch point. When touch and drag is performed, the controller 130 erases a point or line that is displayed since input has been previously performed by the input pen 500-5 (view (5) of FIG. 49).

In contrast, when double tap is performed, that is, when a touch is performed two times within a predetermined time, the controller 130 controls the display 190a or 190b to recall input that has been previously performed by the input pen 500-5 in order of time from a predetermined time (view (6) of FIG. 49).

Hereinafter, the input pen 500-5 and the multi display apparatus 100 considering another user experience according to an exemplary embodiment of the present invention will be explained.

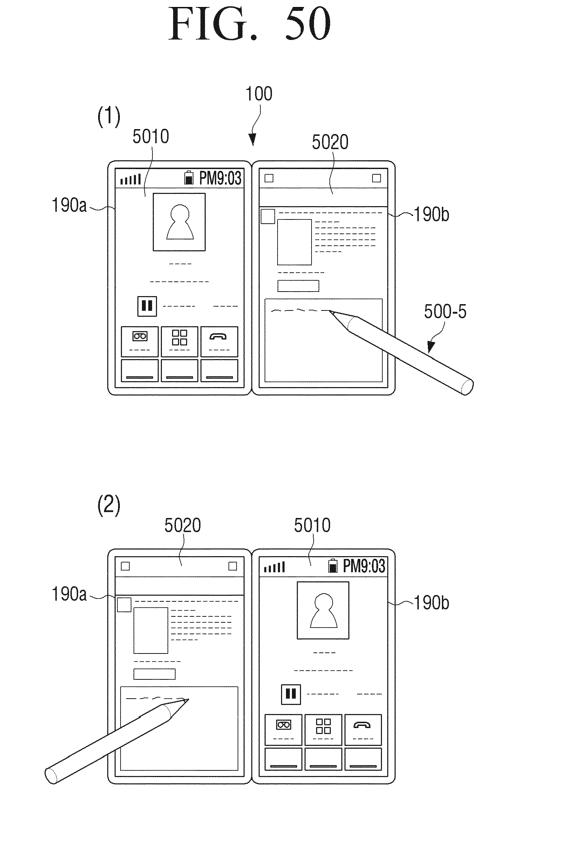

Many products do not take left-handed people into consideration. It is known that 10% of all people are left-handed although the rate varies from country to country. Therefore, a design of a product taking both the left-handed people and the right-handed people into consideration. Accordingly, FIG. 50 illustrates an exemplary embodiment of the present invention of the input pen 500-5 and the multi display apparatus 100 that take both the left-handed people and the right-handed people into consideration.

When a right-handed person makes a note of something with the input pen 500-5 while calling as illustrated in view (1) of FIG. 50, the left display, which is the first display 190a, displays a call screen 5010 and the right display, which is the second display 190b, displays a memo screen 5020. The right-handed person has no problem calling and making a necessary note. However, since a left-handed person should make a note on the right display, which is the second display 190b, with his/her left hand, the left-handed person may inadvertently touch an icon of the call screen with the left hand and thus may be cut off while calling. To avoid this, the left-handed person may try to make a note with the left hand being apart from the left display, which is the first display 190a. However, in this case, it may be difficult to make a call smoothly. In particular, in the case of a video call, the problems become more serious considering locations of cameras.

In this case, if the call screen 5010 is displayed on the right display, which is the second display 190b, and the memo screen 5020 is displayed on the left display, which is the first display 190a, as illustrated in view (2) of FIG. 50, the left-handed person may easily call while making a necessary note without any problem.

The above exemplary embodiment of the present invention may be implemented by distinguishing a case in which the right-handed person holds the input pen 500-5 with his/her right hand and a case in which the left-handed person holds the input pen 500-5 with his/her left hand, and transmitting a distinct signal from the input pen 500-5 to the multi display apparatus in each case. The right-handed person and the left-handed person are distinguished from each other in the following methods.

Firstly, the geomagnetic sensor 5142 of the input pen 500-5 may be used. The geomagnetic sensor 5142 is a sensor that detects azimuth by detecting a flow of a magnetic field. The geomagnetic sensor 5142 detects azimuth coordinates of the input pen 500-5 and detects a direction in which the input pen 500-5 is placed based on the azimuth coordinates. In addition, a tilt of the input pen 500-5 may be detected through the above-described acceleration sensor 5141. A result of the sensing is transmitted to the multi display apparatus 100, and, when the input pen 500-5 is tilted in the left direction (view (1) of FIG. 50), the multi display apparatus 100 recognizes a left-handed mode and the controller 130 controls to display the memo screen 5020 on the left display, which is the first display 190a, and display the call screen 5010 on the right display, which is the second display 190b. On the other hand, when the input pen 500-5 is tilted in the right direction (see view (2) of FIG. 50), the multi display apparatus 100 recognizes a right handed mode and the controller 130 controls to display the memo screen 5020 on the right display, which is the second display 190b, and display the call screen 5010 on the left display, which is first display 190a.

Secondly, the proximity sensor 155 of the multi display apparatus 100 may distinguishes the left-handed person and the right-handed person. That is, when the proximity sensor 155 recognizes approach of the input pen 505-5 from a left lower end to a right upper end of the left display, which is the first display 190a, in sequence, a corresponding signal is generated and transmitted to the controller 130, and the controller 130 recognizes the user as a left-handed person and configures a corresponding display screen. In contrast, when the proximity sensor 155 recognizes approach of the input pen 500-5 from a right lower end to a left upper end of the right display, which is the second display 190b, in sequence, a corresponding signal is generated and transmitted to the controller 130, the controller 130 recognizes the user as a right-handed person and configures a corresponding display screen.

However, if the acceleration sensor 5141 of the input pen 500-5 senses a change in the acceleration in order to distinguish the above case from a case in which the user simply touches the left display, which is the first display 190a, or the right display, which is the second display 190b, using her/his hand, the accuracy of sensing can be improved.

As such, a 3-axis acceleration sensor may be considered. When the acceleration sensor is a 3-axis acceleration sensor, the controller 130 performs normalizing to map output values of X, Y, and Z-axis acceleration sensors which are received through the pre-processor onto values of a predetermined range, and calculates a pitch angle and a roll angle using the normalized values.

The controller 130 determines a degree of tilt and a tilt direction of the multi display apparatus 100 by comparing information on the pitch angle and the roll angle with bending shape information stored in the storage 170 and information provided by the controller 130.

Since the above-described gyro sensor 5140 may be used to sense a rotation speed, it is possible to sense more motions of the input pen 500-5 and thus to perform a variety of input.

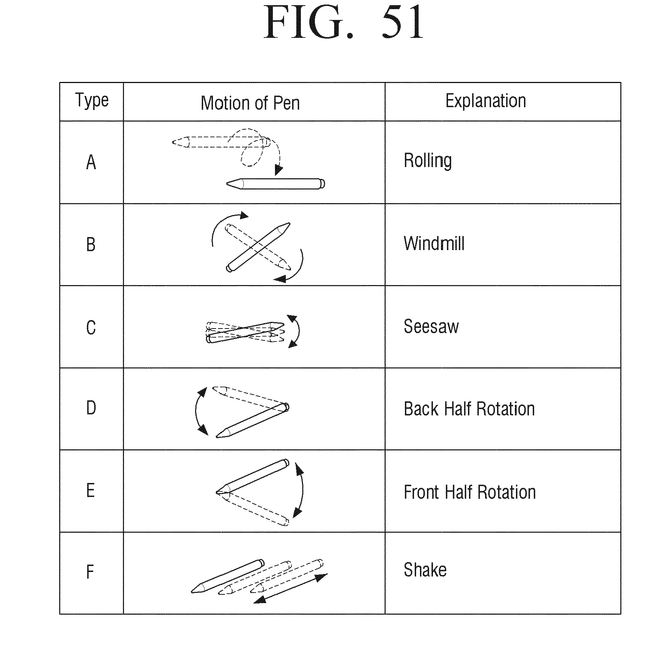

FIG. 51 is a view illustrating a table that distinguishes motions of the input pen 500-5 when the input pen 500-5 includes a gyro sensor according to an exemplary embodiment of the present invention.

A type A indicates an operation of rolling the input pen 500-5. A type B is an input operation of holding a center portion of the input pen 500-5 and turning the input pen 500-5 like a windmill. A type C is an input operation of reciprocally half-turning the input pen 500-5 about a center point like a seesaw. A type D is an input operation of holding an opposite end of the pen point 556 of the input pen 500-5 and half-turning the input pen 500-5. A type E is an input operation of holding an end of the pen point 556 of the input pen 500-5 and half-turning the input pen 500-5. A type F is an input operation of vertically shaking the input pen 500-5 in a lengthwise direction.

The input pen 500-5 may transmit a distinct input signal according to each type of input, and the multi display apparatus 100 may perform output corresponding to each input signal.

Also, a combination of different types of input may include one input signal. For example, when the type A is input and then the type D is input within a predetermined time, the input is recognized as input for activating a plurality of applications and then selecting a desired application.

In addition, besides the types of input illustrated in FIG. 51, a variety of gesture input of moving the input pen 500-5 may be performed.

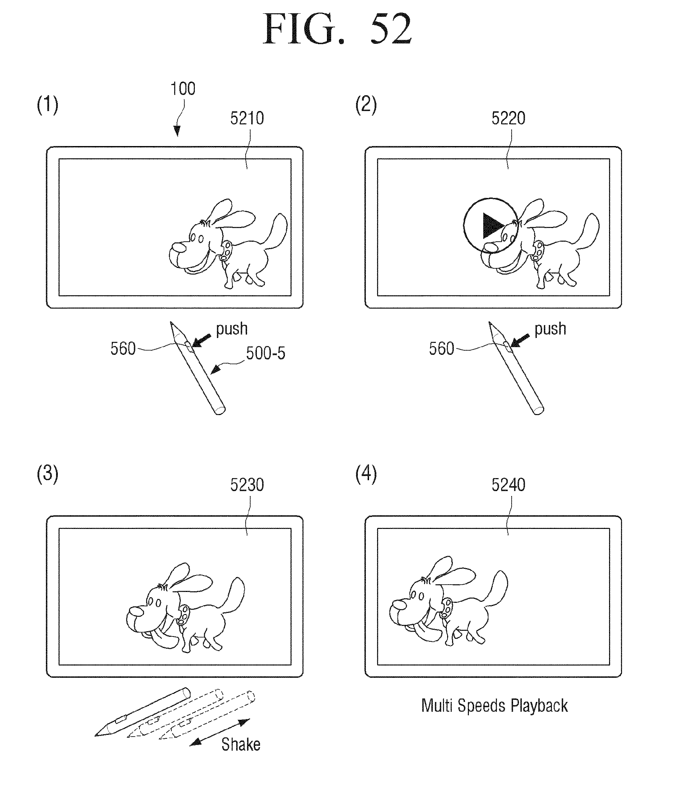

FIG. 52 is a view illustrating the input pen 500-5 and the multi display apparatus 100 according to another exemplary embodiment of the present invention.

The user may replay a moving image or pause it by pressing the button 560 of the input pen 500-5. When a moving image 5210 is replayed and the user presses the button 560 of the input pen 500-5 (view (1) of FIG. 52), a pause signal to pause the moving image is generated and transmitted to the multi display apparatus 100 through the communicator 530. The controller 130 of the multi display apparatus 100 pauses the replay of the moving image 5220 according to the received pause signal (view (2) of FIG. 52). At this time, when the user presses the button 560 of the input pen 500-5 once more, a replay signal for the moving image is generated and transmitted to the multi display apparatus 100 through the communicator 530. The controller 130 of the multi display apparatus 100 replays the moving image 5230 again according to the received reproduction signal (view (3) of FIG. 52). At this time, the user may perform the F type of input by vertically shaking the input pen 500-5 in the lengthwise direction. In this case, an F type input signal is generated and transmitted to the multi display apparatus 100 through the communicator 530. The controller 130 of the multi display apparatus 100 multi speed replays the moving image 5240 according to the received F type input signal (view (4) of FIG. 52).

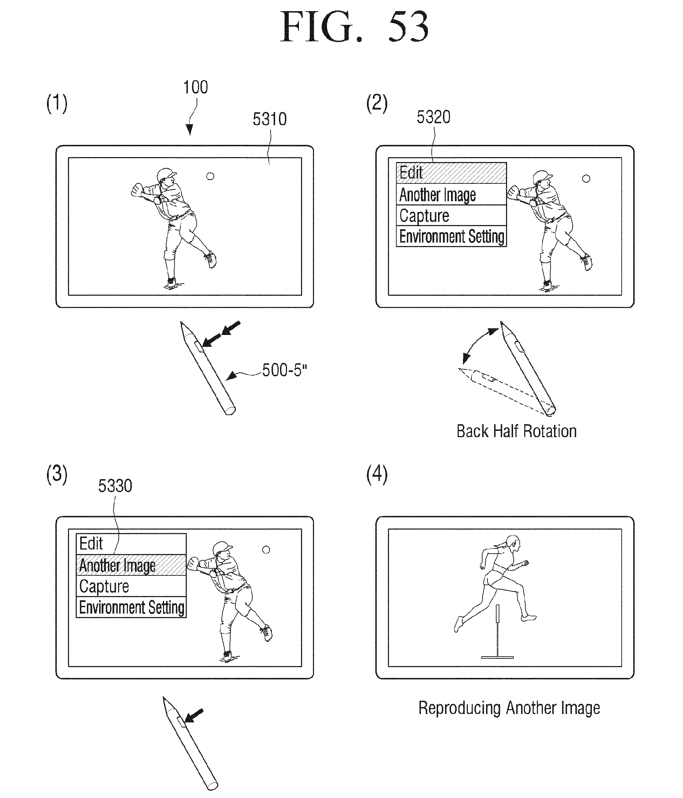

FIG. 53 is a view illustrating the input pen 500-5 and the multi display apparatus 100 according to another exemplary embodiment of the present invention.

The user may display a menu of a moving image and may select an icon from the menu by pressing the button 560 of the input pen 500-5. When a moving image 5310 is replayed (view (1) of FIG. 52) and the user presses the button 560 of the input pen 500-5 two times continuously (when the user presses the button 560 two times within a predetermined -double tap input), a menu window signal to control the moving image is generated and transmitted to the multi display apparatus 100 through the communicator 530. The controller 130 of the multi display apparatus 100 controls to display a menu window 5230 including selectable items of the moving image according to the menu window signal (view (2) of FIG. 53).

At this time, the user may perform the D type of input by holding the opposite end of the pen point 556 of the input pen 500-5 and half-turning the input pen 500-5. At this time, when the user performs an input operation of moving the input pen 500-5 upwardly, a signal to toggle on an item of the current menu window in an upward direction and highlight it is generated and transmitted to the multi display apparatus 100 through the communicator 530. The controller 130 of the multi display apparatus 100 toggles on the item 5320 of the current menu window in the upward direction and highlight it according to the signal. When the top item of the menu window is toggled on and the D type of input in the upward direction is performed, the bottom item of the menu window is toggled on and highlighted.

In contrast, when the user performs an input operation of moving the input pen 500-5 downwardly, a signal to toggle on the item of the current menu window in a downward direction and highlight it is generated and transmitted to the multi display apparatus 100 through the communicator 530. The controller 130 of the multi display apparatus 100 toggles on an item 5330 of the current menu window in the downward direction and highlight it according to the signal. When the bottom item of the menu window is toggled on and the D type of input in the downward is performed, the top item of the menu window is toggled on and highlighted.

When the user presses the button 560 of the input pen 500-5 once more, an item selection signal is generated and transmitted to the multi display apparatus 100 through the communicator 530. The controller 130 of the multi display apparatus 100 selects the currently toggled item according to the selection signal, and displays a screen according to a control command corresponding to the selected item. Referring to view (3) of FIG. 53, since the user presses the button 560 of the input pen 500-5 while an item to display another image is toggled on, another image is replayed (view (4) of FIG. 53).

An input pen 500-6 including both the photographer 511 and the motion sensor 510 described above may be considered.

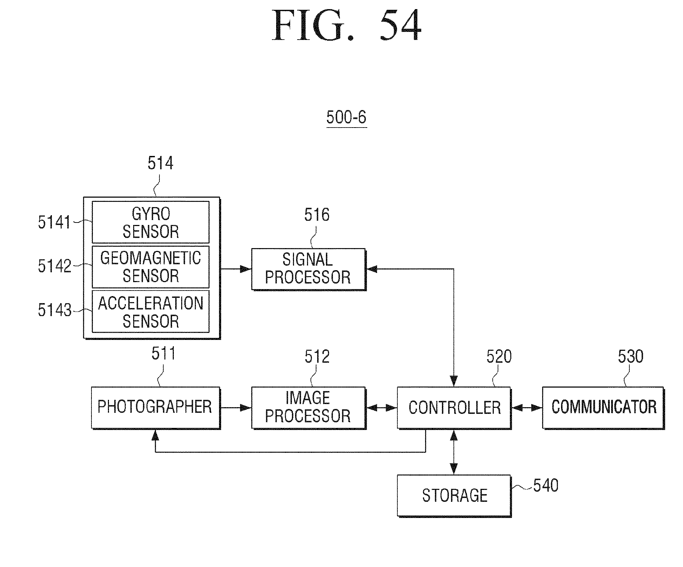

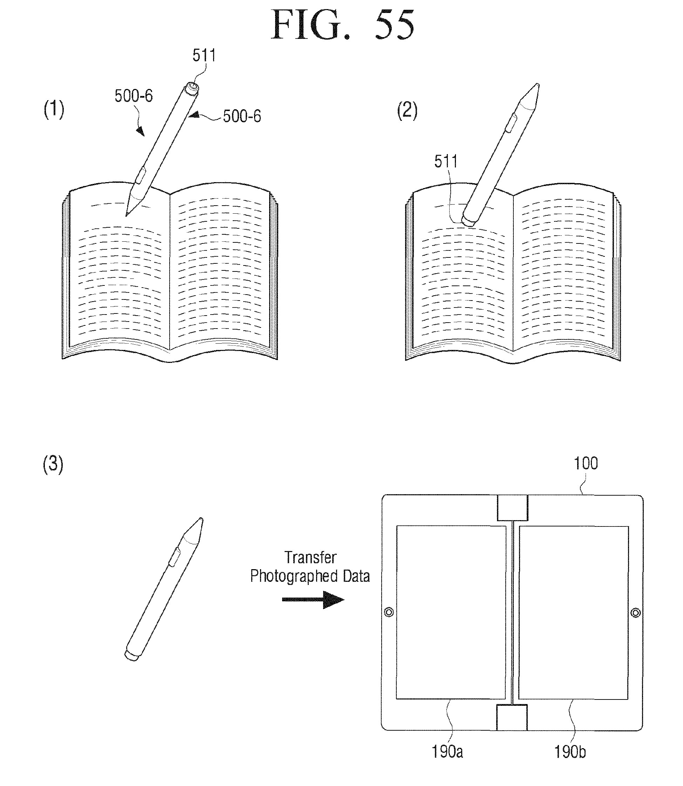

FIG. 54 is a block diagram illustrating a configuration of the input pen 500-6 including both the photographer 511 and the motion sensor 510, and FIG. 55 is a view illustrating the input pen 500-6 and the multi display apparatus 100 according to an exemplary embodiment of the present invention.

Referring to FIG. 54, the input pen 500-6 includes a motion sensing part 514, a photographer 511, a signal processor 516, an image processor 512, a controller 520, a storage 540, and a communicator 530.

Each element has been described above and a detailed description thereof is omitted.

FIG. 55 is a view illustrating a control operation using the input pen 500-6 and the multi display apparatus 100 according to an exemplary embodiment of the present invention.

The user may come across a word that he/she wants to search when reading a book (view (1) of FIG. 55), and may want to photograph it with the input pen 500-6. At this time, when the input pen 500-6 is upside down, the motion sensor 514 recognizes a motion of the input pen 500-6, generates a corresponding signal, and transmits it to the controller 520 via the signal processor 516 (view (2) of FIG. 55). The controller 520 changes a mode of the photographer 511 into a photographing mode. The photographer 511 photographs an image and transmits the photographed image to the controller 520 (view (3) of FIG. 55). The controller 520 controls the communicator 530 to transmit the photographed image to the multi display apparatus 100. The multi display apparatus 100 may display the photographed image or may identify a content included in the photographed image and perform a search. The detailed operations have been described above and thus a detailed explanation is omitted.

As described above, the input pen 500-6 includes the photographing function and the motion sensing function, so that more operations can be performed.

The multi display apparatus 100 may perform a different operation according to an approach of the input pen to the multi display device 100.

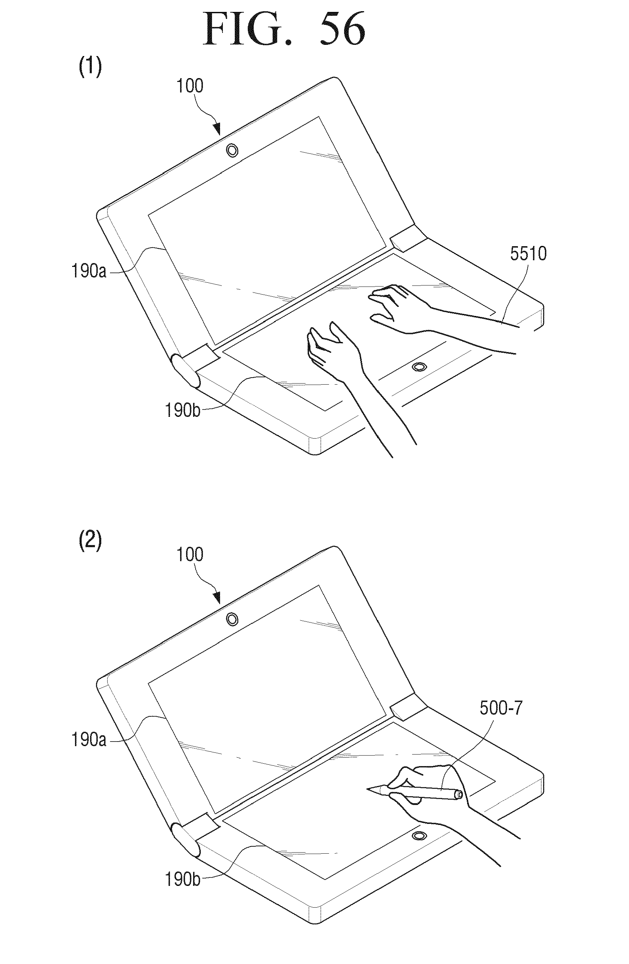

FIG. 56 is a view illustrating an operation of the multi display apparatus 100 that distinguishes between an approach of an input pen 500-7 and approach of user's hand according to an exemplary embodiment of the present invention.

Referring to FIG. 56, when the input pen 500-7 approaches the multi display apparatus 100, the controller 130 of the multi display apparatus 100 is operated in a pen input mode, and, when a user object 5510 other than the input pen 500-7 approaches the multi display apparatus 100, the controller 30 is operated in a keyboard input mode in which a soft keyboard is displayed on one of the first and second displays 190a and 190b.

At this time, the input pen 500-7 may include a magnetic field coil (not illustrated) therein and the multi display apparatus 100 may further include a magnetic field sensor (not illustrated) to sense a change in a magnetic field according to the magnetic field coil. Since a magnetic field of a point located near the input pen 500-7 is changed due to the magnetic field coil of the input pen 500-7, it may be recognized that the input pen 500-7 is placed near at the corresponding point. Also, the above-described proximity sensor 155 senses an approach, but a result of the sensing by the proximity sensor 155 is disregarded. Accordingly, when the magnetic field sensor (not illustrated) senses the approach of the input pen 500-7, the mode is regarded as the pen input mode and thus a corresponding menu, item, or screen is displayed.

In contrast, when the magnetic field sensor (not illustrated) does not sense the approach of the input pen 500-7, but the proximity sensor 155 senses the approach, it may be determined that the user object 5510 other than the input pen 500-7 including the magnetic field coil (not shown) approaches the multi display apparatus 100, and thus, the multi display apparatus 100 is operated in the keyboard input mode in which the soft keyboard is displayed on one of the first and second displays 190a and 190b.

In the above-described exemplary embodiment of the present invention, it is possible to distinguish approach of the hand and approach of the input pen 500-7 through the input pen 500-7. That is, when a motion of the input pen 500-7 is sensed with a change in the acceleration of the input pen 500-7 and approach is sensed by the proximity sensor 155, it may be determined that the input pen 500-7 approaches and thus the controller 130 controls to be operated in the pen input mode. In contrast, when a change in the acceleration of the input pen 500-7 is not sensed and approach is sensed by the proximity sensor 155, it may be determined that the other object other than the input pen 500-7 approaches the multi display apparatus 100, and thus the controller 130 controls to be operated in the keyboard input mode in which the soft keyboard is displayed on one of the first and second displays 190a and 190b.

As a result, using the above-described methods, the multi display apparatus 100 effectively distinguishes the input of the hand and the input of the input pen and displays a corresponding menu or screen.

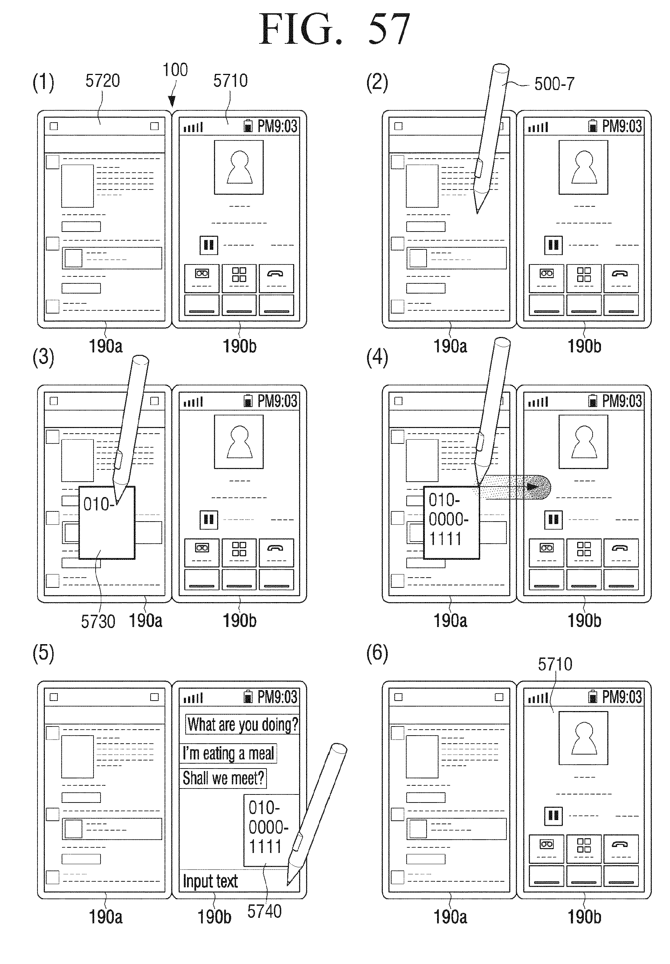

FIG. 57 is a view illustrating the multi display apparatus 100 that senses approach of the input pen 500-7 according to another exemplary embodiment of the present invention.

Referring to FIG. 57, when the user receives a call (view (1) of FIG. 57), the user may place the input pen 500-7 near a display screen 5720 rather than a phone screen 5710 (view (2) of FIG. 57). In this case, a memo pad 5730 is displayed on a location that the input pen 500-7 approaches, and the user makes a note using the input pen (view (3) of FIG. 57). When the making the note is completed, by touching an end of the memo pad 5730 with the input pen 500-7 and dragging it to the right display, which is the second display 190b (view (4) of FIG. 57), the note 5740 may be transmitted to a user who is currently making a call (view (5) of FIG. 57). When the sending the message is completed, the original call screen is restored (view (6) of FIG. 57).

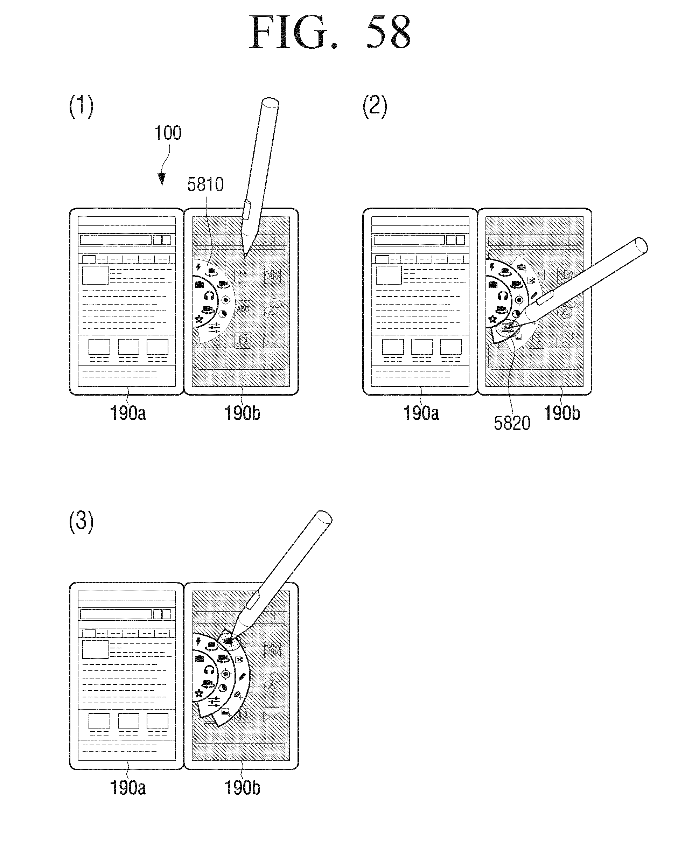

FIG. 58 is a view illustrating the multi display apparatus 100 which senses approach of the input pen 500-7 according to another exemplary embodiment of the present invention.

Referring to FIG. 58, when the user places the input pen 500-7 near the multi display apparatus 100, the controller 130 displays a tool bar 5810 displaying a menu item on the right display, which is the second display 190b. Like in the exemplary embodiment of FIG. 44, a screen on which the tool bar 5810 is displayed is dimmed. The menu items included within the tool bar may be formed in a hierarchical structure like in the exemplary embodiment of FIG. 44. When the input pen 500-7 is placed near the multi display apparatus 100 first, menus of a first layer and a second layer are displayed on the display, and the menu items of the second layer are displayed more dimly that those of the first layer in an opacity UI form (view (1) of FIG. 58). When the user touches a region on which one of the menu items of the first layer is displayed with the input pen 500-7, the menu item of the region is selected and the menu items of the second layer are released from the opacity UI and activated (view (2) of FIG. 58). When a menu item 5820 of the lowermost layer is selected, a control command is completed finally. At this time, the menu items may be automatically released from the tool bar 5810. When the menu items are released from the tool bar 5810, the display gets out of the dimmed screen and is restored to its original screen (view (3) of FIG. 58).

Hereinafter, a method of controlling an operation of a multi display apparatus 100 according to various exemplary embodiments will be explained of the present invention.

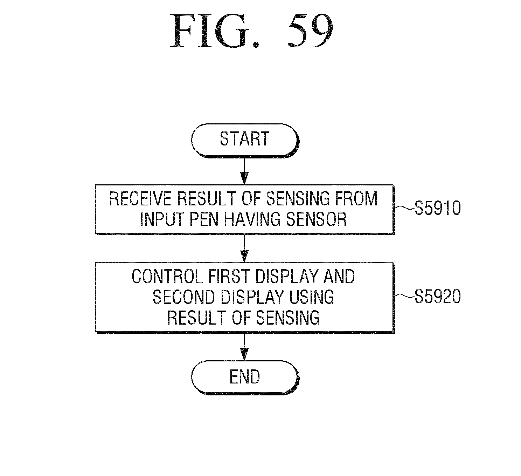

FIGS. 59 through 65 are flowcharts to explain a method of controlling an operation of a multi display apparatus according to various exemplary embodiments of the present invention.

Referring to FIG. 59, the method of controlling the operation of the multi display apparatus according to various exemplary embodiments of the present invention includes from an input pen including a sensor, receiving a result of sensing by the sensor (S5910), and controlling operations of the first and second displays using the result of the sensing (S5920). Each operation has been described above and a detailed description is omitted.

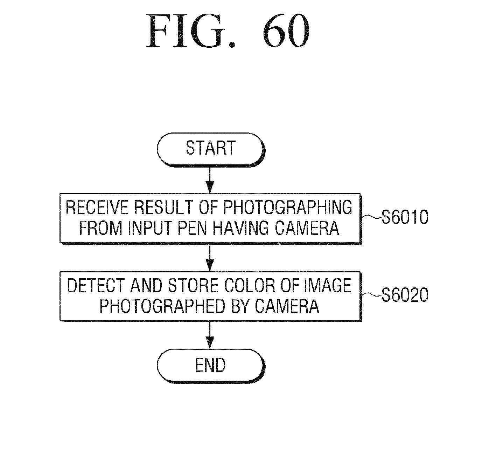

Referring to FIG. 60, the method of controlling the operation of the multi display apparatus according to various exemplary embodiments of the present invention includes receiving a result of photographing by the input pen including a camera from the input pen (S6010), and detecting a color of an image which is photographed by the camera and storing the color (S6020).

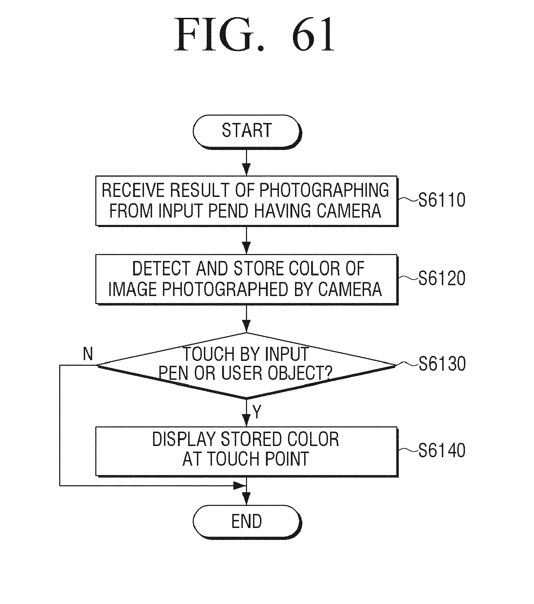

Referring FIG. 61, the method of controlling the operation of the multi display apparatus according to various exemplary embodiments of the present invention may further include, when the input pen or a user object touches at least one of the first and second displays (S6130-Y), displaying the stored color at the touch point (S6140).

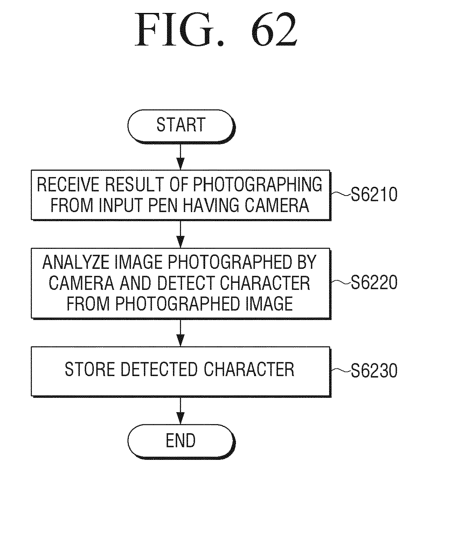

Referring to FIG. 62, the method of controlling the operation of the multi display apparatus according to various exemplary embodiments of the present invention may include receiving a result of photographing by the input pen including a camera from the input pen (S6210), analyzing an image which is photographed by the camera and detecting a character which exists in the photographed image (S6220), and storing the detected character (S6230).

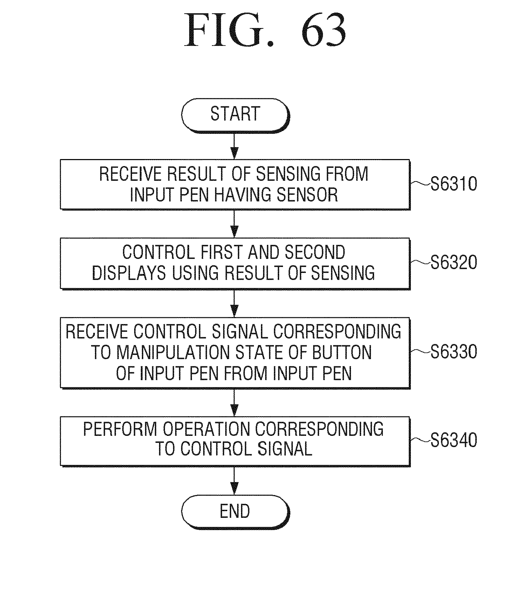

Referring to FIG. 63, the method of controlling the operation of the multi display apparatus according to various exemplary embodiments of the present invention may further include receiving a control signal corresponding to a manipulation state of a button provided on the input pen from the input pen (S6330), and performing an operation corresponding to the control signal (S6340)

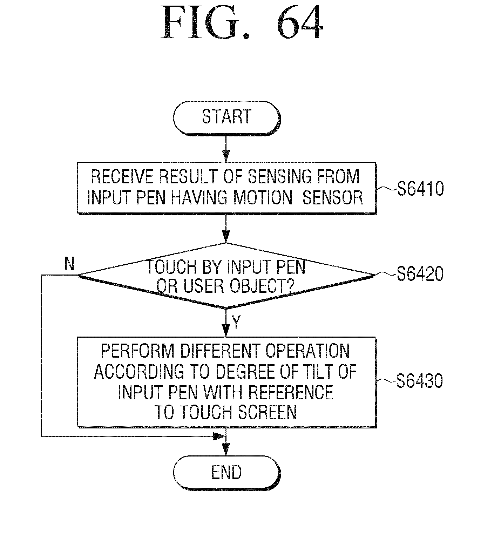

Referring to FIG. 64, the method of controlling the operation of the multi display apparatus according to various exemplary embodiments of the present invention may include receiving a result of sensing by an input pen including a motion sensor from the input pen (S6410), and, when a sensing signal sensed by the motion sensor is received from the input pen, performing an operation corresponding to a motion of the input pen.

The controlling the operations may include, when the input pen touches at least one of the first and second displays (S6420-Y), performing a different operation according to a tilt of the input pen with reference to a touch screen (S6430).

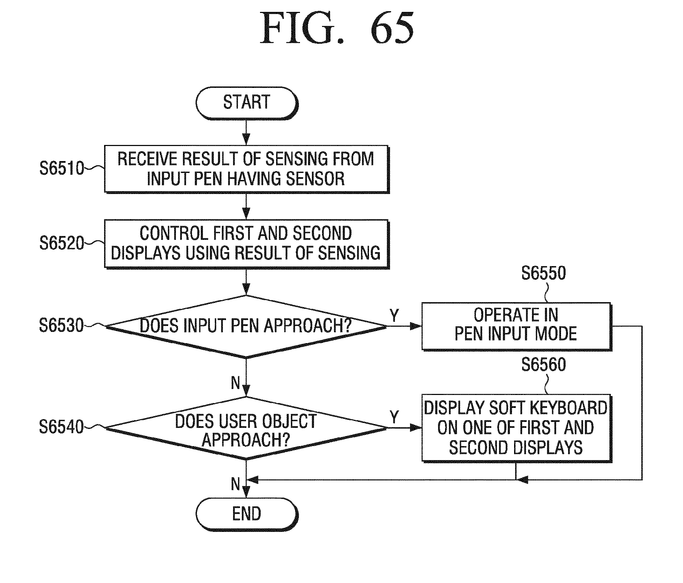

Referring to FIG. 65, a method of controlling the operation of the multi display apparatus according to various exemplary embodiments of the present invention may further include when the input pen approaches the multi display apparatus (S6530-Y), being operated in a pen input mode (S6550), and, when a user object other than the input pen approaches the multi display apparatus (S6540-Y), being operated in a keyboard input mode in which a soft keyboard is displayed on one of the first and second displays (S6560).

The present invention can also be embodied as computer-readable codes on a computer-readable medium. The computer-readable medium can include a computer-readable recording medium and a computer-readable transmission medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network coupled computer systems so that the computer-readable code is stored and executed in a distributed fashion. The computer-readable transmission medium can transmit carrier waves or signals (e.g., wired or wireless data transmission through the Internet). Also, functional programs, codes, and code segments to accomplish the present invention can be easily construed by programmers skilled in the art to which the present invention pertains.

Hereinafter, a pen holder 600 according to various exemplary embodiments of the present invention will be explained.

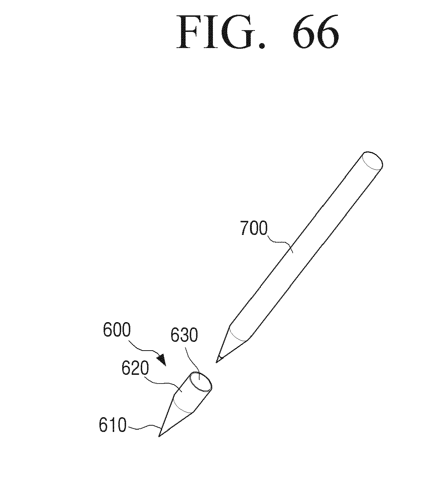

FIG. 66 illustrates an example of a configuration of the pen holder 600 that is connected with a conventional input (i.e., stylus) pen 700, and provides functions according to the above-described exemplary embodiments.

Unlike the above-described input pen 500, the conventional stylus pen 700 does not include a means to sense information and to transfer the information to a multi display apparatus 100. However, when the stylus pen 700 is connected to the pen holder 600, the stylus pen 700 performs same functions as the input pens 500, 500-1, 500-1', 500-2, 500-2', 500-2", 500-3, 500-4, 500-5, 500-5', 500-5", 500-6, and 500-7 according to the above-described various exemplary embodiments of the present invention. Therefore, the pen holder 600 may include same configurations as those of the input pens 500, 500-1,500-1', 500-2, 500-2', 500-2", 500-3, 500-4, 500-5, 500-5', 500-5", 500-6, and 500-7 according to the above-described various exemplary embodiments of the present invention. Also, the pen holder 600 may be used along with not only the multi display apparatus 100 but also a single display apparatus (not illustrated).

Hereinafter, an exterior of the pen holder 600 will be explained.

As illustrated in FIG. 66, an exterior of the pen holder 600 includes a pen point 610, a body 620, and a depression 630. The pen point 610 may touch the multi display apparatus 100 of FIG. 1, or may perform an approach input, and may be formed in a conical shape. The body 620 includes one end connected to the pen point 610 and another end connected to the depression 630, and is configured to receive the stylus pen 700 within the depression 630. The body 620 may include a circuit configuration that generates a signal therein and transmits the generated signal to the display apparatus.

In FIG. 66, the pen holder 600 that is formed to fit over a front of the stylus pen 700 is illustrated. However, the pen holder 600 may also be formed to fit over a rear of the stylus pen 700.

Hereinafter, elements to perform functions of the pen holder 600 will be explained.

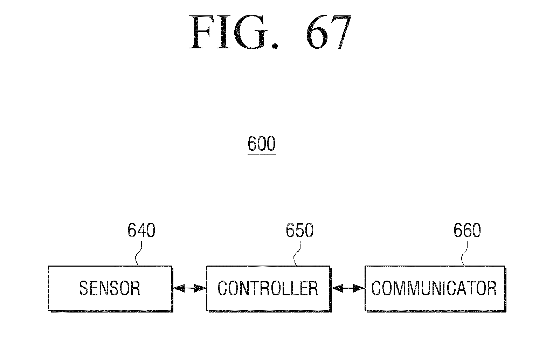

FIG. 67 is a block diagram illustrating a configuration of a pen holder 600 according to various exemplary embodiments of the present invention.

Referring to FIGS. 1 and 67, the pen holder 600 includes a sensor 640, a controller 650, and a communicator 660. Each component is operated in a same manner as that of the same name element of the input pen 500 described above. Accordingly, the pen holder 600 senses predetermined information and transmits the information to the multi display apparatus 100 through the communicator 660. The controller 650 controls operations of the pen holder 600. The pen holder 600 may perform the same functions as those of the input pens 500, 500-1, 500-1', 500-2, 500-2', 500-2", 500-3, 500-4, 500-5, 500-5', 500-5", 500-6, and 500-7 described above. Accordingly, the pen holder 600 photographs an image, transmits photographing information to the multi display apparatus 100, senses a motion, and transmits a result of the sensing to the multi display apparatus 100. The above-described various scenarios are equally applicable to the pen holder 600.

The sensor 640 of the pen holder 600 may include a photographer that photographs a subject. In this case, the pen holder 600 may perform a same function as that of the input pen 500-1 described above. Also, the pen holder 600 may transmit photographed image to a printer or other apparatuses. When information is transmitted to a printer, the printer may output the photographed image.

Furthermore, the pen holder 600 according to another exemplary embodiment of the present invention may further include a button 560. In this case, the pen holder 600 may perform the same function as that of the input pen 500-2 described above. That is, the user may photograph an image by manipulating the button 560, and photographing information may be transmitted to the multi display apparatus 100.

Also, the pen holder 600 according to another exemplary embodiment of the present invention may further include an OCR module. In this case, a text may be extracted from a photographed image through the OCR module, and the extracted text may be transmitted to the multi display apparatus 100. As such, the pen holder 600 may perform same functions as that of the input pen 500-2" described above.

Moreover, the pen holder 600 according to another exemplary embodiment may include a plurality of buttons and may perform same functions as that of the input pen 500-3 described above. However, the pen holder 600 may further include a wheel and may perform same functions as that of the input pen 500-4 described above. This configuration allows a variety of wireless control input.

Further, the pen holder 600 according to another exemplary embodiment may include a motion sensor. In this case, the pen holder 600 senses motion information of the pen holder 600 and transmits it to the multi display apparatus 100. The pen holder 600 may perform same functions as those of the input pens 500-5 and 500-5' described above.

Finally, the pen holder 600 according to another exemplary embodiment may include all of the photographer and the motion sensor described above. In this case, the pen holder 600 may perform same functions as that of the input pen 500-6 described above.

Besides the above-described configurations, the pen holder includes an LCD and displays a control situation of the multi display apparatus 100, or may display an interface for the multi display apparatus 100. The user may generate a command to control the multi display apparatus 100 through the LCD and transmits it, and may identify an operation state of the multi display apparatus 100.

Besides the above-described configurations, the pen holder 600 may include a GPS module. When the pen holder 600 includes a GPS module, the pen holder 600 may detect location information of the pen holder 600 and transmit it to the multi display apparatus 100. If the pen holder is lost, the multi display apparatus 100 may display a current location of the pen holder on the map based on the location information received from the pen holder 600.

On the other hand, when the pen holder 600 includes the above-described photographer, and when the pen holder 600 is lost, the pen holder 600 may photograph an image and may transmit it to the multi display apparatus 100. In this case, more detailed information on the pen holder 600 may be received.

Although a few embodiments of the present invention have been shown and described, it will be appreciated by those skilled in the art that changes may be made in these embodiments without departing from the principles of the invention, the scope of which is defined in the appended claims.

## Claims

1. A display apparatus comprising:
a first display;
a second display;
a hinge arranged to connect the first display and the second display to each other; and
a controller arranged to control operations of the first and second displays according to sensing information of an input pen comprising a sensor.

2. The display apparatus as claimed in claim 1, further comprising a communicator that communicates with the input pen,
wherein the controller receives a sensing signal that is sensed by the sensor through the communicator, and controls the operations of the first and second displays according to the sensing signal.

3. The display apparatus as claimed in claim 2, further comprising a storage,
wherein the sensor is a camera,
wherein the controller receives an image that is photographed by the camera through the communicator, and detects a colour or texture of the photographed image and stores the color or texture in the storage.

4. The display apparatus as claimed in claim 3, wherein, when the input pen or a user object touches at least one of the first and second displays, the controller is arranged to display the colour or texture stored in the storage at the touch point.

5. The display apparatus as claimed in claim 2, wherein the sensor is a camera,
wherein the controller receives an image that is photographed by the camera through the communicator, and controls to display the photographed image on at least one of the first display and the second display.

6. The display apparatus as claimed in claim 2, further comprising a storage,
wherein the sensor is a camera,
wherein the controller is arranged to analyze an image that is photographed by the camera and detects an object that exists in the photographed image, and stores the detected object in the storage.

7. The display apparatus as claimed in claim 2, wherein the sensor is a camera,
wherein the controller analyzes an image that is photographed by the camera and detects at least one character that exists in the photographed image, and, when the input pen or a user object touches at least one of the first and second displays, the controller displays the detected at least one character and corresponding information on a touch region.

8. The display apparatus as claimed in claim 2, wherein the controller receives a control signal corresponding to a manipulation state of a button provided on the input pen from the input pen, and performs an operation corresponding to the control signal.

9. The display apparatus as claimed in claim 8, wherein the sensor is a camera,
wherein the controller receives a real-time image, that is photographed by the camera according to a first manipulation of the button, from the input pen, and displays the real-time image,
wherein the controller receives a moment image, that is photographed by the camera according to a second manipulation of the button, from the input pen, and displays the moment image.

10. The display apparatus as claimed in claim 8 or 9, wherein the controller changes a display time of a content according to a manipulation of the button and controls to display the content on at least one of the first display and the second display.

11. The display apparatus as claimed in claim 8, 9 or 10 wherein, when a first manipulation of the button is performed, the controller displays a menu regarding an application that is executed in the display apparatus,
wherein, when a second manipulation of the button is performed, the controller controls to change an item of the displayed menu and display the item.

12. The display apparatus as claimed in any one of claims 8 to 11, wherein the button is at least one of a wheel button, a push button, and a switch button.

13. The display apparatus as claimed in claim 2, further comprising a connector that mounts the input pen therein,
wherein the communicator comprises: wherein the communicator comprises:
a wire communicator to communicate with the input pen in a wired manner when the input pen is mounted in the connector, and
a wireless communicator to communicate with the input pen wirelessly when the input pen is disconnected from the connector.

14. An input pen that is arranged to control an operation of a display apparatus comprising first and second displays connected to each other by means of a hinge, the input pen comprising:
a sensor;
a communicator to communicate with the display apparatus; and
a controller to transmit a result of sensing by the sensor to the multi display apparatus.

15. The input pen as claimed in claim 14, wherein the sensor comprises at least one of a camera, a gyro sensor, an acceleration sensor, a geomagnetic sensor, an IR sensor, and a pressure sensor.
